(19) Europäisches Patentamt
European Patent Office
Office européen des brevets

(11) **EP 4 714 526 A1**

(12) **EUROPEAN PATENT APPLICATION**
published in accordance with Art. 153(4) EPC

(43) Date of publication:
**25.03.2026 Bulletin 2026/13**

(21) Application number: **24807214.2**

(22) Date of filing: **15.05.2024**

(51) International Patent Classification (IPC):
**B01D 53/04** *(2006.01)*  **B01D 53/22** *(2006.01)*

(52) Cooperative Patent Classification (CPC):
**B01D 53/04; B01D 53/22**

(86) International application number:
**PCT/JP2024/017912**

(87) International publication number:
**WO 2024/237263 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023 JP 2023080445**

(71) Applicant: JCCL, Inc.
**Fukuoka-shi, Fukuoka 819-0388 (JP)**

(72) Inventors:
• **HONDA, Ryutaro**
  **Fukuoka-shi, Fukuoka 819-0388 (JP)**
• **HOSHINO, Yu**
  **Fukuoka-shi, Fukuoka 819-0395 (JP)**
• **WATANABE, Takeshi**
  **Fukuoka-shi, Fukuoka 819-0388 (JP)**
• **AKI, Shoma**
  **Fukuoka-shi, Fukuoka 819-0388 (JP)**

(74) Representative: **Haseltine Lake Kempner LLP**
**Bürkleinstrasse 10**
**80538 München (DE)**

(54) **GAS RECOVERY DEVICE AND GAS RECOVERY METHOD**

(57) There is provided a gas recovery device that can reduce costs while improving the efficiency of gas recovery.

The gas recovery device includes a carbon dioxide separation unit including a carbon dioxide separation material configured to separate carbon dioxide from a supply gas; a steam supply unit configured to supply steam to the carbon dioxide separation unit to reduce a partial pressure of the carbon dioxide in the carbon dioxide separation unit; a carbon dioxide recovery unit configured to recover the carbon dioxide separated in the carbon dioxide separation unit while removing the steam; and a circulation path configured to deliver the steam removed in the carbon dioxide recovery unit or water condensed from the steam to the steam supply unit.

Fig.1

## Description

Technical Field

The present disclosure relates to a gas recovery device and a gas recovery method for recovering carbon dioxide contained in exhaust gas or in the atmosphere.

Background Art

In recent years, the emission of carbon dioxide accompanying the combustion of fossil fuels or the like in power plants, ironworks, or the like has caused an increase in the concentration of carbon dioxide in the atmosphere, raising concerns about changes in the global environment. Accordingly, it has become a global urgent task to realize a carbon-neutral society by reducing the amount of carbon dioxide emitted or by recovering the emitted carbon dioxide. In order to realize a carbon-neutral society, the social implementation of a carbon circulation system in which carbon dioxide is recovered at low cost from exhaust gas after combustion, the atmosphere, or the like and reused as a resource is required.

In addition, in recent years, space development and deep-sea development have been advancing, and it is expected that, in the future, people will increasingly reside in closed spaces such as space stations and submarines. Since humans consume oxygen and emit carbon dioxide through respiration, the concentration of carbon dioxide in the space increases. In order to live sustainably in such a closed space, it is necessary to recover carbon dioxide and reuse it.

Conventionally, a chemical absorption method is known as a carbon dioxide separation technique. In the chemical absorption method, carbon dioxide is adsorbed from a mixed gas by a low-temperature amine absorption solution, and the adsorbed carbon dioxide is desorbed by heating at 120°C or higher. For example, Patent Literature 1 discloses an amine-containing concentration system capable of concentrating a useful amine that reacts with carbon dioxide and reusing it as an absorption solution, and reducing the amount of drainage containing an amine compound, and a carbon dioxide recovery system provided with the amine-containing concentration system.

In addition, a method for separating carbon dioxide using a solid adsorbent is also known. For example, Patent Literature 2 discloses a carbon dioxide recovery device using a carbon dioxide adsorbent provided with a proton-type zeolite adsorbing and supporting a secondary amine. In this case, since the adsorption of moisture and carbon dioxide contained in exhaust gas after combustion or the like competes with each other and the adsorption performance deteriorates, it is necessary to provide a mechanism for drying the gas in a preceding stage of the process or a mechanism for drying the adsorbent.

However, in the carbon dioxide recovery systems and recovery devices disclosed in these patent literatures, the cost increased due to the addition of high-temperature facilities for heating or drying, and furthermore the energy required also increased.

Citation List

Patent Literature

Patent Literature 1: JP 2022-147624 A
Patent Literature 2: JP 2021-171744 A

Summary of Invention

Technical Problem

The present disclosure has been made in view of the background described above, and provides a gas recovery device and a gas recovery method that can reduce costs while improving the efficiency of gas recovery.

Solution to Problem

According to one aspect of the present disclosure, there is provided "a gas recovery device including: a carbon dioxide separation unit including a carbon dioxide separator configured to separate carbon dioxide from a supply gas; a steam supply unit configured to supply steam to the carbon dioxide separation unit to reduce a partial pressure of the carbon dioxide in the carbon dioxide separation unit; a carbon dioxide recovery unit configured to recover the carbon dioxide separated in the carbon dioxide separation unit while removing the steam; and a circulation path configured to deliver the steam removed in the carbon dioxide recovery unit or water condensed from the steam to the steam supply unit".

According to one aspect of the present disclosure, there is provided "a gas recovery device including: a humidity adjustment unit configured to adjust humidity of a supply gas containing carbon dioxide; a carbon dioxide separation unit including a carbon dioxide separator configured to separate the carbon dioxide from the supply gas whose humidity is adjusted; a steam supply unit configured to supply steam to the carbon dioxide separation unit to reduce a partial pressure of the carbon dioxide in the carbon dioxide separation unit; a carbon dioxide recovery unit configured to recover the carbon dioxide separated in the carbon dioxide separation unit while removing the steam; and a circulation path configured to deliver the steam removed in the carbon dioxide recovery unit or water condensed from the steam to the steam supply unit or the humidity adjustment unit, or to deliver the steam removed in the humidity adjustment unit or water condensed from the steam to the steam supply unit".

According to one aspect of the present disclosure, there is provided "a gas recovery device including: a humidity adjustment unit configured to adjust humidity of a supply gas containing carbon dioxide; a carbon dioxide separation unit including a carbon dioxide separator configured to separate the carbon dioxide from the supply gas whose humidity is adjusted; a steam supply unit configured to supply steam to the carbon dioxide separation unit to reduce a partial pressure of the carbon dioxide in the carbon dioxide separation unit; a carbon dioxide recovery unit configured to recover the carbon dioxide separated in the carbon dioxide separation unit while removing the steam; a residual gas discharge unit configured to discharge residual gas in a state where the carbon dioxide is separated in the carbon dioxide separation unit while removing steam from the residual gas; and a circulation path configured to deliver the steam removed in the carbon dioxide recovery unit or the residual gas discharge unit, or water condensed from the steam to the humidity adjustment unit or the steam supply unit, or to deliver the steam removed in the humidity adjustment unit or water condensed from the steam to the steam supply unit".

According to one aspect of the present disclosure, there is provided "a gas recovery device including: a carbon dioxide separation unit including a carbon dioxide separator configured to separate carbon dioxide from a supply gas; a steam supply unit configured to supply steam to the carbon dioxide separation unit to reduce a partial pressure of the carbon dioxide in the carbon dioxide separation unit; a carbon dioxide recovery unit configured to recover the carbon dioxide separated in the carbon dioxide separation unit while removing the steam; and a circulation path configured to deliver the steam removed upstream or downstream of the carbon dioxide separation unit, or water condensed from the steam to an upstream side of the carbon dioxide separation unit, in which the steam supply unit adjusts a state of the steam so that a pressure of the steam is equal to or higher than a saturated water vapor pressure at a temperature of the carbon dioxide separator in at least a part of the inside of the carbon dioxide separation unit".

According to one aspect of the present disclosure, there is provided "a gas recovery method including: a supply step of supplying a supply gas containing carbon dioxide to a carbon dioxide separator; a separation step of supplying steam to the carbon dioxide separator to reduce a partial pressure of the carbon dioxide and separating the carbon dioxide from the supply gas; and a recovery step of recovering the carbon dioxide separated by the carbon dioxide separator while removing the steam, in which at least one of the steam removed in the recovery step or water condensed from the steam, or the steam removed from residual gas from which the carbon dioxide is separated in the separation step or water condensed from the steam, is reused in at least one of the supply step and the separation step".

According to one aspect of the present disclosure, there is provided "a gas recovery method including: a supply step of supplying a supply gas containing carbon dioxide to a carbon dioxide separator after adjusting humidity of the supply gas; a separation step of supplying steam to the carbon dioxide separator to reduce a partial pressure of the carbon dioxide and separating the carbon dioxide from the supply gas; and a recovery step of recovering the carbon dioxide separated by the carbon dioxide separator while removing the steam, in which in the supply step, the separated steam or water condensed from the steam is reused in the separation step".

Advantageous Effects of Invention

According to the present disclosure, it is possible to provide a gas recovery device and a gas recovery method that can reduce costs while improving the efficiency of gas recovery.

Note that the above effects are merely illustrative for convenience of explanation and are not limiting. In addition to or instead of the above effects, any effects described in the present disclosure, as well as effects apparent to those skilled in the art, can also be achieved.

Brief Description of Drawings

Fig. 1 is a diagram illustrating a schematic configuration of a gas recovery device 1 according to a first embodiment of the present disclosure.

Fig. 2 is a block diagram illustrating an example of a configuration of a processing device 8 according to the first embodiment of the present disclosure.

Fig. 3 is a diagram illustrating an operating state of the gas recovery device 1 according to the first embodiment of the present disclosure.

Fig. 4 is a diagram illustrating an operating state of the gas recovery device 1 according to the first embodiment of the present disclosure.

Fig. 5 is a diagram illustrating an operating state of the gas recovery device 1 according to the first embodiment of the present disclosure.

Fig. 6 is a diagram illustrating a schematic configuration of a gas recovery device 101 according to a second embodiment of the present disclosure.

Fig. 7 is a diagram illustrating a schematic configuration of a gas recovery device 201 according to a third embodiment of the present disclosure.

Fig. 8 is a diagram illustrating a modification of a water circulation path of the gas recovery device 201 according to the third embodiment of the present disclosure.

Fig. 9 is a diagram illustrating a modification of the water circulation path of the gas recovery device 201 according to the third embodiment of the present disclosure.

Fig. 10 is a diagram illustrating a schematic configuration of a gas recovery device 301 according to a fourth embodiment of the present disclosure.

Fig. 11 is a diagram illustrating a schematic configuration of a gas recovery device 401 according to a fifth embodiment of the present disclosure.

Fig. 12 is a diagram illustrating a schematic configuration of a gas recovery device 501 according to a sixth embodiment of the present disclosure.

Fig. 13 is a diagram illustrating an operating state of the gas recovery device 501 according to the sixth embodiment of the present disclosure.

Fig. 14A is a diagram illustrating a schematic configuration of a gas recovery device 601a according to a modification of the present disclosure.

Fig. 14B is a diagram illustrating a schematic configuration of a gas recovery device 601b according to a modification of the present disclosure.

Fig. 14C is a diagram illustrating a schematic configuration of a gas recovery device 601c according to a modification of the present disclosure.

Fig. 15A is a diagram illustrating a schematic configuration of a gas recovery device 701a according to a modification of the present disclosure.

Fig. 15B is a diagram illustrating a schematic configuration of a gas recovery device 701b according to a modification of the present disclosure.

Fig. 15C is a diagram illustrating a schematic configuration of a gas recovery device 701c according to a modification of the present disclosure.

Fig. 16 is a diagram illustrating a schematic configuration of a gas recovery device 1 according to a modification of the first embodiment of the present disclosure.

Description of Embodiments

Hereinafter, as an illustration of embodiments of the present invention, embodiments will be described with reference to the accompanying drawings, taking as an example an application of the present invention to a gas recovery device. Note that common components in the drawings are denoted by the same reference numerals.

In the present disclosure, the term "sorption" is used synonymously with "absorption" and "adsorption", and refers to chemically or physically attaching carbon dioxide, moisture, steam, and the like to the material itself. Therefore, the term "sorption" is mainly used; however, the term "absorption" or "adsorption" may be used for convenience of explanation, but this does not mean that the meaning of the reaction is different. Similarly, the term "release" is used synonymously with "desorption", "detachment", and "emission", and refers to separating carbon dioxide, moisture, steam, and the like from the material itself. Therefore, the term "release" is mainly used; however, the term "desorption", "detachment", or "emission" may be used for convenience of explanation, but this does not mean that the meaning of the reaction is different. In addition, the term "separation" refers to separating a part of components contained in a gas, and includes a case in which separation is performed through the sorption and the release, and a case in which only the part of the components permeates without undergoing the sorption.

<First Embodiment>

1. Configuration of Gas Recovery Device 1 According to the Present Disclosure

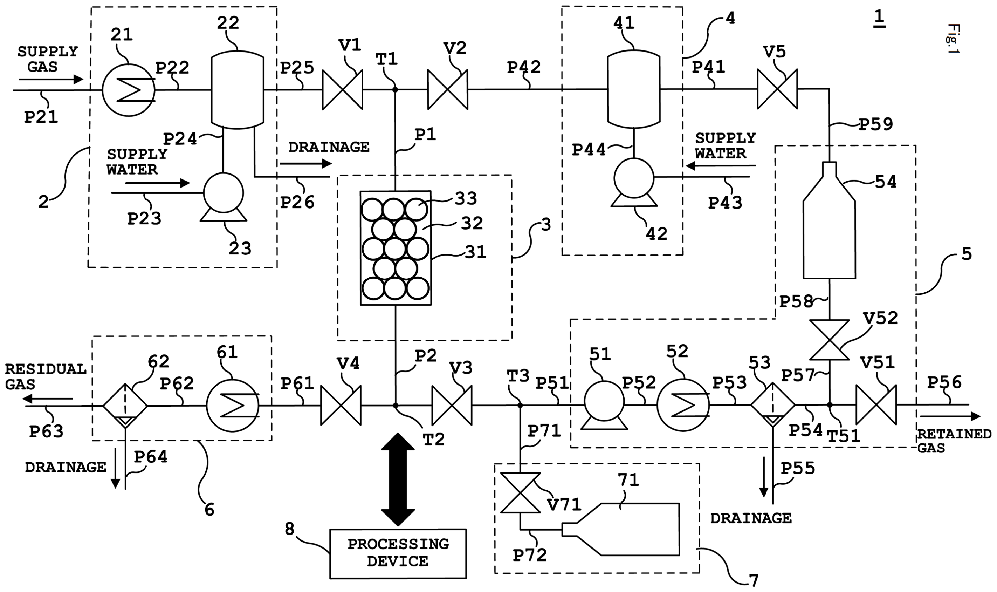

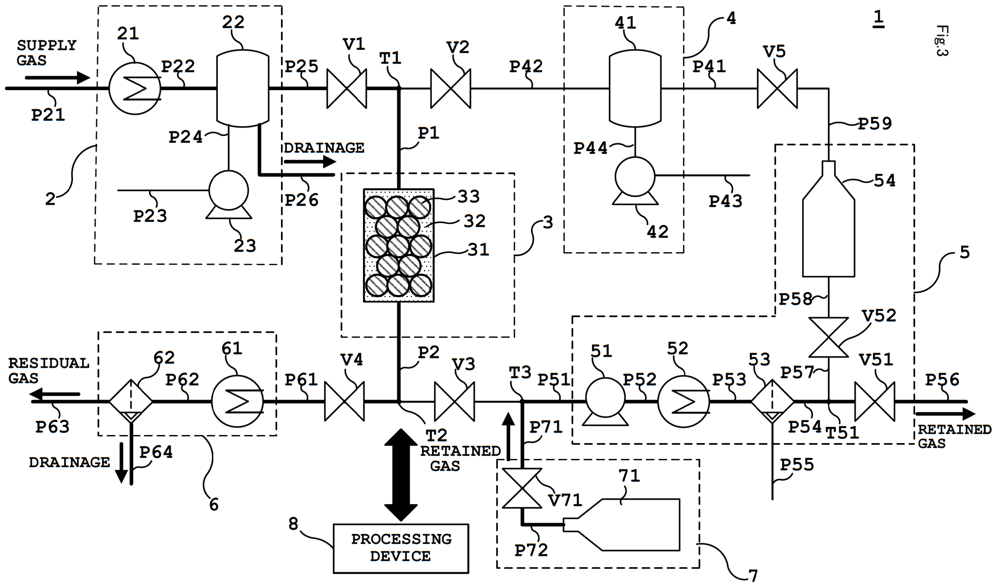

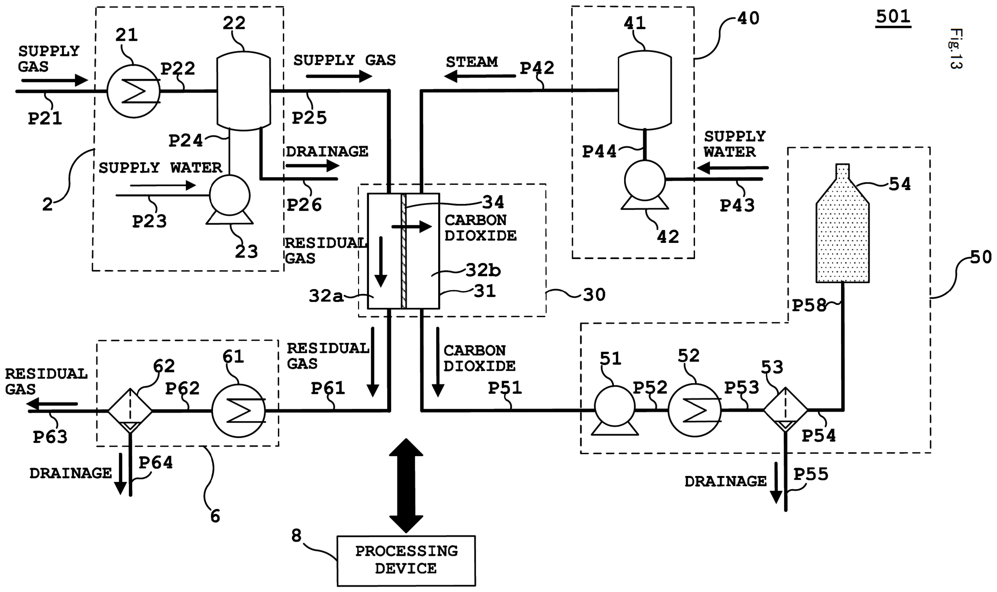

Fig. 1 is a diagram illustrating a schematic configuration of a gas recovery device 1 according to a first embodiment of the present disclosure. In the following description with reference to the drawings, the term "upstream" refers to a side where gas or the like is input (supplied), and the term "downstream" refers to a side where gas or the like is output (discharged). First, the overall configuration of the gas recovery device 1 will be described with reference to Fig. 1.
As illustrated in Fig. 1, the gas recovery device 1 is broadly composed of a humidity adjustment unit 2, a carbon dioxide separation unit 3, a steam supply unit 4, a carbon dioxide recovery unit 5, a residual gas discharge unit 6, a retained gas recovery unit 7, and a processing device 8. In addition, the gas recovery device 1 is provided with a plurality of pipes and valves, which will be described below, between the respective units. In the configuration of such a first embodiment, a supply gas containing carbon dioxide is supplied to the carbon dioxide separation unit 3 through the humidity adjustment unit 2, and the carbon dioxide is sorbed in the carbon dioxide separation unit 3. Then, the sorbed carbon dioxide is released by supplying steam to the carbon dioxide separation unit 3 to cause a decrease in partial pressure, such that the carbon dioxide is separated from the supply gas, and concentrated carbon dioxide is recovered in the carbon dioxide recovery unit 5. The recovered carbon dioxide can be appropriately used in the vicinity of the gas recovery device 1, in a different facility, or the like. The flow relating to recovery of carbon dioxide will be described in detail in the explanation of Fig. 3 and subsequent drawings.
As a more specific connection configuration, as illustrated in Fig. 1, one end (downstream side) of the humidity adjustment unit 2 is connected to one end (upstream side) of the carbon dioxide separation unit 3 via a valve V1. In addition, one end (downstream side) of the steam supply unit 4 is connected to one end (upstream side) of the carbon dioxide separation unit 3 via a valve V2. More specifically, the humidity adjustment unit 2 and the steam supply unit 4 are connected at a connection point T1 via the valve V1 and the valve V2, and are connected to the carbon dioxide separation unit 3 through a common pipe P1. Note that, in the example of Fig. 1, although the common pipe P1 is provided, the pipe from the humidity adjustment unit 2 and the pipe from the steam supply unit 4 are not necessarily required to be common, and each pipe may be provided independently.
In the example of Fig. 1, the steam supply unit 4 is connected to the upstream side of the carbon dioxide separation unit 3; however, in a modification, the steam supply unit 4 may be connected to the downstream side of the carbon dioxide separation unit 3 and may be configured to supply steam from the downstream side of the carbon dioxide separation unit 3. Alternatively, the steam supply unit 4 may be connected to both the upstream side and the downstream side of the carbon dioxide separation unit 3, and may be configured to supply steam from the upstream side and the downstream side of the carbon dioxide separation unit 3 in accordance with control of the processing device 8.
When the carbon dioxide separation unit 3 is filled with a carbon dioxide absorbing material (such as a carbon dioxide separation material 33 described below), the amount of carbon dioxide absorbed by the carbon dioxide absorbing material on the downstream side in the carbon dioxide separation unit 3 may be less than that absorbed by the carbon dioxide absorbing material on the upstream side. In this case, in a case where retained gas in the carbon dioxide separation unit 3 is removed, when the recovered carbon dioxide is recovered from the upstream side of the carbon dioxide separation unit 3, it is possible to prevent carbon dioxide in the middle of recovery from being absorbed on the downstream side of the carbon dioxide separation unit 3 and to efficiently remove the retained gas. On the other hand, when the absorbed carbon dioxide is desorbed and recovered, steam is circulated from the downstream side of the carbon dioxide separation unit 3, such that it is possible to suppress the desorbed carbon dioxide from being reabsorbed into the carbon dioxide absorbing material and to recover the carbon dioxide efficiently. Note that, when steam is introduced from the downstream side of the carbon dioxide separation unit 3, a pipe can be provided to guide gas flowing out from the upstream side to the gas recovery unit 5.
As illustrated in Fig. 1, the other end (downstream side) of the carbon dioxide separation unit 3 is connected to one end (upstream side) of the carbon dioxide recovery unit 5 and to the retained gas recovery unit 7 via a valve V3. In addition, the other end (downstream side) of the carbon dioxide separation unit 3 is also connected to one end (upstream side) of the residual gas discharge unit 6 via a valve V4. More specifically, the carbon dioxide recovery unit 5 and the residual gas discharge unit 6 are connected at a connection point T2 via the valve V3 and the valve V4, and are connected to the carbon dioxide separation unit 3 through a common pipe P2. Note that, in the example of Fig. 1, although the common pipe P2 is provided, the pipe to the valve V3 and the pipe to the valve V4 are not necessarily required to be common, and each pipe may be provided independently. In addition, the retained gas recovery unit 7 branches from a connection point (branch point) T3 of a pipe P51, which connects the carbon dioxide separation unit 3 and the carbon dioxide recovery unit 5 (a pipe extending from the valve V3 to the carbon dioxide recovery unit 5). In other words, the carbon dioxide recovery unit 5 and the retained gas recovery unit 7 are connected at the connection point T3 and are commonly connected to the valve V3.
As illustrated in Fig. 1, the other end (downstream side) of the carbon dioxide recovery unit 5 is connected to the other end (upstream side) of the steam supply unit 4 via a valve V5. As a result, the recovered carbon dioxide can be circulated in the carbon dioxide recovery unit 5, the steam supply unit 4, and the carbon dioxide separation unit 3. That is, the carbon dioxide recovery unit 5, the steam supply unit 4, and the carbon dioxide separation unit 3 are connected to form a carbon dioxide circulation path. Note that a configuration in which such a circulation path is not formed (a configuration illustrated in Fig. 13 described below as an example) is also possible.

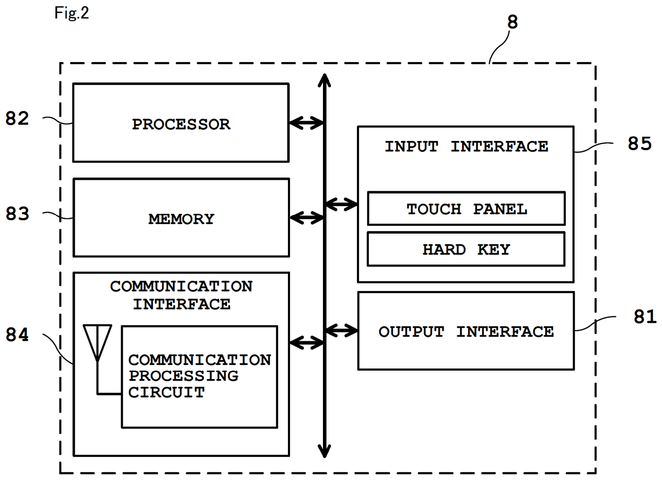

Next, a detailed configuration of each unit will be described with reference to Figs. 1 and 2. Fig. 2 is a block diagram illustrating an example of a configuration of a processing device 8 according to the first embodiment of the present disclosure.

(Humidity Adjustment Unit 2)

The humidity adjustment unit 2 is provided to adjust the relative humidity of the supply gas containing carbon dioxide. By adjusting the relative humidity as described above, the carbon dioxide sorption in the carbon dioxide separation unit 3 is promoted. As a method of adjusting relative humidity, there is a temperature adjustment process by heating or cooling, a humidity adjustment process by humidification or dehumidification, or a combination thereof. However, when the supply gas has a relative humidity that can promote sorption of carbon dioxide in the carbon dioxide separation unit 3, the supply gas may be delivered in the same state to the carbon dioxide separation unit 3. Here, the relative humidity refers to a value obtained by dividing a partial pressure of water vapor contained in the supply gas containing carbon dioxide at a predetermined temperature by a maximum partial pressure of water vapor (saturated water vapor pressure) that can be contained at the temperature.

As illustrated in Fig. 1, the humidity adjustment unit 2 includes a heat exchanger 21, a gas-liquid separator 22, and a pump 23. More specifically, a supply gas introduction pipe P21 is connected to one end (upstream side) of the heat exchanger 21, and the gas-liquid separator 22 is connected to the other end (downstream side) of the heat exchanger 21 through a pipe P22. The gas-liquid separator 22 functions, for example, as a humidification unit or a humidity adjustment unit. As a specific example, a bubbler or the like can be used, and a dew point of the gas is adjusted to the temperature of the gas by bringing water into contact with the gas. The gas-liquid separator 22 may include a gas-liquid separation device such as a mist trap. In addition, a supply water introduction pipe P23 is connected to one end (upstream side) of the pump 23, and the gas-liquid separator 22 is connected to the other end (downstream side) of the pump 23 through a pipe P24. Furthermore, the valve V1 is connected to the downstream side of the gas-liquid separator 22 through a pipe P25. Further, a pipe P26 for discharging drainage to the outside is connected to the gas-liquid separator 22. The pipe P26 may be provided with a pump for drainage and/or a valve for controlling drainage.

With the configuration of the humidity adjustment unit 2 as described above, the supply gas containing carbon dioxide can be supplied from the introduction pipe P21 to the heat exchanger 21 without undergoing a drying process. The supply gas is heated or cooled by the heat exchanger 21 according to the temperature of the supply gas, the temperature of the supply gas is adjusted to a predetermined temperature range, and the supply gas is supplied to the gas-liquid separator 22. Thus, for example, a temperature of the supply gas can be set to a predetermined dew point temperature, and humidity adjustment can be performed. Thus, the gas-liquid separator 22 also functions as a humidity adjustment device. Here, the predetermined temperature range is determined according to an operating temperature of the carbon dioxide separation unit 3 in the gas recovery device 1. For example, the temperature is 0 to 100°C. Therefore, when exhaust gas obtained by combusting methane gas or the like is supplied in a high-temperature state, the exhaust gas (supply gas) is cooled by the heat exchanger 21, and depending on a water content, a part of water vapor contained in the supply gas is condensed and separated as water. On the other hand, a relatively low-temperature supply gas such as the atmosphere may be heated by the heat exchanger 21 when necessary.

In addition, supply water is introduced into the gas-liquid separator 22 by driving of the pump 23, and an amount of water vapor in an internal space of the gas-liquid separator 22 is adjusted to be around a saturated vapor amount. In addition, a temperature of the internal space of the gas-liquid separator 22 is determined according to an operating temperature of the carbon dioxide separation unit 3 in the gas recovery device 1. Therefore, according to a temperature and a moisture content of the supply gas passing through the gas-liquid separator 22, moisture is added to the supply gas (humidification process) or moisture is removed from the supply gas (dehumidification process). For example, when moisture is added to the supply gas, the pump 23 is driven to supply the supply water to the gas-liquid separator 22. On the other hand, when moisture is removed from the supply gas, an amount of water vapor in the internal space of the gas-liquid separator 22 exceeds a saturated vapor amount, and moisture that cannot be contained as water vapor in the internal space of the gas-liquid separator 22 is discharged as drainage through the pipe P26. More specifically, when water vapor is condensed and separated as water by the heat exchanger 21, the water is separated from the gas as condensed water in the gas-liquid separator 22, and the condensed water is discharged as drainage. Note that a mist trap may be provided downstream of the gas-liquid separator 22 (for example, in the pipe P26).

With the configuration and function of the humidity adjustment unit 2 as described above, the temperature and moisture content of the supply gas passing through the gas-liquid separator 22 are adjusted, and the supply gas is brought to a state close to an operating temperature of the carbon dioxide separation unit 3 in the gas recovery device 1 and having a relative humidity of 80% or more, and then is delivered to the valve V1. Note that a heat exchanger may be provided downstream of the gas-liquid separator 22 (for example, in the pipe P25). In this way, the temperature and humidity can be further adjusted.

Note that, as described above, since the humidity adjustment unit 2 only needs to be able to set the relative humidity of the supply gas containing carbon dioxide within a desired range, a device related to temperature adjustment and a device related to humidity adjustment can be appropriately disposed. For example, the number of heat exchangers 21 is not limited to one, and may be plural according to temperature adjustment of the supply gas, and the number can be appropriately adjusted. In addition, when a temperature of the supply gas is approximately the same as an operating temperature of the carbon dioxide separation unit 3 in the gas recovery device 1, the heat exchanger 21 may not be provided. In particular, since a temperature decrease occurs due to latent heat of water in humidification after temperature adjustment, an additional gas-liquid separator may be disposed upstream of the heat exchanger 21, humidification of the supply gas may be performed, and temperature adjustment by the heat exchanger 21 may be performed. As a result, it can be expected that adjustment of relative humidity of the supply gas can be performed more accurately and easily.

Note that, as cooling methods in the heat exchanger 21, water, air, LNG or another refrigerant, a method using latent heat by phase change, or electronic cooling can be used. In addition, as heating methods, heater heating and heat by combustion of fuel gas, exhaust heat, a heat pump, or the like can be used. However, these are merely examples, and cooling and heating by other known methods can be performed.

Then, the relative humidity adjustment method is not particularly limited, and examples thereof include a bubbling method in which gas is passed through water for humidity adjustment, a steam blowing method in which water vapor is blown into air, a water spraying method in which water is sprayed and evaporated in air, and a vaporization method in which gas is passed through or between packing materials or hollow fibers. In addition, the relative humidity adjustment may be accurately performed by providing a mist trap or the like as necessary.

(Carbon Dioxide Separation Unit 3)

The carbon dioxide separation unit 3 is constituted by, for example, a substantially cylindrical housing 31 and a carbon dioxide separation material 33 filled in an internal space 32 of the housing 31, and is a modularized device. That is, in the carbon dioxide separation unit 3, the carbon dioxide separation material 33 is used as a carbon dioxide separator. In addition, a plurality of these components may be installed in parallel or in series. Then, the carbon dioxide separation unit 3 according to the present first embodiment can perform sorption and release of carbon dioxide in a high-humidity state. Here, the high humidity refers to, for example, a relative humidity of 80% or more.

The housing 31 is formed of general plastic, metal, ceramic, or the like, has a structure to which the common pipe P1 can be connected at one end, and has a structure to which the common pipe P2 can be connected at the other end. For example, a concave joint may be provided in the housing 31, and convex joints to be fitted into the concave joint may be connected to tips of the common pipe P1 and the common pipe P2. In particular, when a vacuum decompression process is performed in the gas recovery device 1, material selection and a structure that withstands the process are required.

The carbon dioxide separation material 33 separates carbon dioxide from the supply gas. The carbon dioxide separation material 33 is a material that can sorb carbon dioxide under predetermined sorption conditions and can release carbon dioxide under predetermined release conditions. Here, the predetermined sorption conditions refer to, for example, a relative humidity of 80% or more and a gas partial pressure of carbon dioxide of 0.04 kPa to 100 kPa. On the other hand, the predetermined release conditions may be set by reducing a gas partial pressure from the sorption conditions, or may be set by increasing only a temperature higher than the sorption conditions, and may further be set by both lowering the gas partial pressure and increasing the temperature higher than the sorption conditions.

More specifically, the carbon dioxide separation material 33 has a gas-reversible absorption capability in which, after sorbing carbon dioxide from a supply gas containing a predetermined amount of moisture, the carbon dioxide is released by a change in temperature or gas partial pressure. In particular, the carbon dioxide separation material 33 is characterized in that it performs sorption of carbon dioxide in a wet state. Further, the carbon dioxide separation material 33 has a moisture-reversible absorption capability in which moisture is also reversibly sorbed and released. In order to have such characteristics, for example, the carbon dioxide separation material 33 may use a pulverized bulk gel made of a predetermined polymer material, or may use a gel formed from a gel particle solution containing the polymer material. Alternatively, the carbon dioxide separation material 33 may be an ion exchange resin such as an anion exchange resin, may be a polymer containing an amino group or an ammonium group, may be a porous material, or may be activated carbon, porous silica, fumed silica, zeolite, a Metal-Organic Framework (MOF), or the like.

The predetermined polymer material refers to, for example, an aspect (A) containing a polymer having a polymer chain containing structural units derived from a monofunctional monomer and a crosslinked structure derived from a polyfunctional monomer, and containing an amine derived from an amine-containing treatment solution, and an aspect (B) containing a polymer having a polymer chain containing structural units derived from a monofunctional monomer having an amino group and a crosslinked structure derived from a polyfunctional monomer, and not containing a component derived from an amine-containing treatment solution. The monofunctional monomer in the aspect (A) and the polyfunctional monomer in the aspect (B) may have an amino group or may not have an amino group.

The predetermined polymer material refers to, for example, selectively absorbing carbon dioxide by containing an amino group in at least one of structural units of the polymer and an impregnated amine. In addition, by performing heating, a phase transition such as a decrease in pKa and an increase in hydrophobic interaction of hydrophobic groups occurs, and the absorbed acidic gas is emitted. That is, the predetermined polymer material has a gas-reversible absorption capability of selectively and reversibly absorbing carbon dioxide. In addition, the predetermined polymer material has low water retention and low swellability. Therefore, when the predetermined polymer material is used as a gas absorbent or a gas separation material, a volume filling ratio thereof can be sufficiently increased. Then, by using the predetermined polymer material, a gas flow path in the carbon dioxide separation unit can be sufficiently secured, and an amount of heat required in a heating step for gas emission can be suppressed to a low level.

In addition, even when liquid water is added to the absorbent material, gaps between the water-containing polymers are maintained, a flow path of water can be sufficiently secured, and the water can be easily discharged and gas can be introduced into voids by subsequent flow of the gas. From the above, the predetermined polymer material can be effectively used as a gas absorbent material for reversibly absorbing carbon dioxide, and the gas absorbent material can be effectively used as a gas separation material for separating an acidic gas from a mixed gas.

Hereinafter, an average molecular weight of the polymer contained in the predetermined polymer material, the amount of each group when the polymer has an amino group or a hydrophobic group, physical property values of the polymer, and a content of amine when the polymer material contains an amine will be described.

The ratio of monomers having an amino group in the total monomers can be, for example, 5 to 100 mol%, or 30 to 100 mol%, or 50 to 90 mol%. When a polymer has a hydrophobic group, the amount of the hydrophobic group can be, for example, 0 mol% to 95 mol%, 5 mol% to 70 mol%, or 10 mol% to 43 mol%. The degree of crosslinking of the polymer can be, for example, 0 mol% to 50 mol%, 5 mol% to 40 mol%, or 10 mol% to 30 mol%. When the polymer material contains an amine, the content thereof can be, for example, 1 to 30 mmol/g, or 2 to 20 mmol/g, or 3 to 10 mmol/g per dry weight of the polymer.

The degree of swelling of the polymer contained in the predetermined polymer material can be evaluated by, for example, a water content when impregnated in water for a long time.

The polymer contained in the predetermined polymer material can have a water content when swollen with an excessive amount of water of, for example, 4 g/g polymer or less, 3 g/g polymer or less, or 2 g/g polymer or less. Here, the "water content" of the polymer refers to a value determined by the following Equation (1), the value being obtained when M1 is defined as a weight of the polymer in a wet state after adding an excessive amount of water, leaving the polymer to stand overnight at room temperature, pulverizing the polymer with a hand blender, and then removing water by filtration using filter paper or a metal mesh, and M0 is defined as a weight of the polymer when dried by freeze-drying or natural drying.

$$\text{Water content} = (M1 - M0)/M0 \cdots (1)$$

The polymer material can have a reversible absorption amount of carbon dioxide per dry polymer weight of, for example, 15 mL/g or more, 30 mL/g or more, or 60 mL/g or more. As a result, for example, when applied to a gas recovery device for recovering carbon dioxide from exhaust gas, carbon dioxide contained in the exhaust gas can be efficiently absorbed and recovered.

In addition to the polymer material, the carbon dioxide separation material 33 may further contain, as other components, for example, moisture, a pKa adjuster, an absorption promoter, an emission promoter, a moisture absorbent, an antioxidant, a thermoplastic resin, or a filler.

The moisture can be contained in the gas absorbent material by intentionally adding, for example, water or water vapor. At the time of hydration, for example, carbon dioxide gas or bicarbonate ions can also be added.

The pKa adjuster can be added, for example, during polymerization for the purpose of adjusting a pKa of the polymer after polymerization to a desired value. As a result, it is possible to control a type of gas absorbed in the polymer, a type of gas or liquid selectively permeating the gas absorbent material, a permeation flux, and a selectivity of an absorption target gas with respect to other gases. As the pKa adjuster, for example, a substance capable of protonating or deprotonating an amino group of the polymer can be used, and, for example, an acid such as hydrochloric acid or a base such as sodium hydroxide can be used with an appropriately adjusted concentration according to a desired pKa. In addition, since a polymer density around amines in the polymer, an inter-amine distance, a polarity, and other local environments can be controlled by a crosslinking ratio of the polyfunctional monomer to control a pKa of the amine, the polyfunctional monomer may also be used as the pKa adjuster. In addition, since a polymer density around amines in the polymer, an inter-amine distance, a polarity, and other local environments can also be controlled by adding a hydrophobic monomer, an alcohol, or a hydrophilic polymer during polymerization to control a pKa of the amine, these may also be used as the pKa adjuster.

The absorption promoter is a compound having a function of promoting absorption of an acidic gas into the polymer of the present embodiment. The emission promoter is a compound having a function of promoting emission of an acidic gas from the polymer. In the present embodiment, an absorption and emission promoter having both functions of the absorption promoter and the emission promoter may be used. Each of these absorption promoters, emission promoters, and absorption and emission promoters may also serve as a stabilizer that stabilizes the gas absorbent material. In the gas absorbent material of the present embodiment, the total content of the absorption promoter, the emission promoter, and the absorption and emission promoter may be, for example, 0.05 mL or more, or 0.1 mL or more per 1 g of the solid content. In addition, in the gas absorbent material, a content of the absorption promoter may be, in terms of an amine concentration, for example, 0.1 to 12 N, 1 to 10 N, or 3 to 9 N.

As the absorption promoter, the emission promoter, and the absorption and emission promoter, a low molecular weight amine can be used. The molecular weight of the low molecular weight amine may be, for example, 61 to 10,000, or 75 to 1,000, or 90 to 500. Since the boiling point of the low molecular weight amine is practical for long-term use, the boiling point may be, for example, 80°C or higher, 120°C or higher, or 150°C or higher. In order to increase the boiling point, an amine-containing compound having a site that forms a salt with a counter ion, like an ionic liquid and being in a liquid state may be used.

The low molecular weight amine may include any of a primary amino group, a secondary amino group, a tertiary amino group, an ammonium group, an imidazolium group, a guanidinium group, a piperidinium group, and a 2,2,6,6-tetramethylpiperidinium group, and may include a plurality of amino groups, ammonium groups, imidazolium groups, or guanidinium groups, for example, one to three. In addition, the secondary amino group or the tertiary amino group may be a cyclic amino group. Furthermore, the low molecular weight amine may include functional groups other than an amino group, an ammonium group, an imidazolium group, and a guanidinium group, and may include, for example, a hydroxyl group. The low molecular weight amine may be an oligomer of ethyleneimine. The low molecular weight amine may include 0 to 2 hydroxyl groups. As the low molecular weight amine, an amine having an amino group and a hydroxyl group, or an amine having three amino groups can be exemplified, and, for example, an amine having a secondary amino group and a hydroxyl group can be exemplified. In a high concentration region, the amount of acidic gas emission can be particularly dramatically increased, and since it is suitable for repeated use, for example, an amine having a secondary amino group and a hydroxyl group and having a boiling point of 150°C or higher may be selected.

Examples of the low molecular weight amine include ETA (ethanolamine), DMAE (2-(dimethylamino)ethanol), IPAE (isopropylaminoethanol), DMAEA (2-(dimethylamino)ethylamine), TMEDA (tetramethylethylenediamine), TM-1,4-DAB (tetramethylenediaminobutane), TMHAD (N,N,N',N'-tetramethyl-1,6-hexanediamine), DEOA (diethanolamine), MDEOA (N-methyldiethanolamine), DAMDPA (diamino-N-methyl dipropylamine), 1-2HE-PRLD (1-2-hydroxyethylpyrrolidine), 1-2HE-PP (1-2-hydroxyethylpiperidine), Bis(2DMAE)ER (bis(2-dimethylaminoethyl) ether), e(PMDETA) (pentamethyldiethylenetriamine), AEAE (2-(2-aminoethylamino)ethanol), TAEA (tris(2-aminoethyl)amine), DETA (diethylenetriamine), tetraethylenepentamine, or TETA (triethylenetetramine). In particular, DMAE, IPAE, Bis(2DMAE)ER, 1-2HE-PRLD, 1-2HE-PP, TM-1,4-DAB, TMHAD, and PMDETA may be selected because the amount of acidic gas emission can be increased, and among them, IPAE, Bis(2DMAE)ER, 1-2HE-PP, TM-1,4-DAB, TMHAD, and PMDETA may be selected because they have relatively high boiling points and are less likely to evaporate, IPAE, TM-1,4-DAB, TMHAD, and PMDETA may be selected because the amount of acidic gas emission can be remarkably increased by increasing their concentration, and IPAE, TMHAD, and PMDETA may be selected because they are easily available.

As the moisture absorbent that can be used as an additive, for example, a moisture absorbent having a relative humidity of 80% or less at 25°C when prepared as a saturated aqueous solution can be used. Examples of such a moisture absorbent include ions such as a bromide ion, a chloride ion, an acetate ion, a carbonate ion, a bicarbonate ion, a lithium ion, a potassium ion, a calcium ion, a magnesium ion, and a sodium ion. In addition, examples of such a moisture absorbent include salts such as lithium bromide, lithium chloride, calcium chloride, potassium acetate, magnesium chloride, potassium carbonate, and sodium carbonate. When the moisture absorbent is added, the amount thereof can be, for example, 0.01 to 10% by mass with respect to the total amount of the gas absorbent material.

The antioxidant that can be used as an additive can suppress or prevent oxidation by being added. Examples of such an antioxidant include vitamin C (ascorbic acid), vitamin E (tocopherol), BHT (dibutylhydroxytoluene), BHA (butylated hydroxyanisole), sodium erythorbate, propyl gallate, sodium sulfite, sulfur dioxide, hydroquinone, and derivatives thereof. When the antioxidant is added, the amount thereof can be, for example, 0.01 to 10% by mass with respect to the total amount of the gas absorbent material.

The gas absorbent material may contain a thermoplastic resin. As a result, the thermoplastic resin, the polymer of the present embodiment, and other components added as necessary can be kneaded and molded into pellets or films. As the thermoplastic resin, a known thermoplastic resin can be used. Examples of the thermoplastic resin include various thermoplastic resins such as polyolefins including polyethylene, polypropylene, and ethylenevinyl acetate copolymers, modified polyolefins, polyamides, thermoplastic polyimides, liquid crystal polymers such as aromatic polyesters, polyphenylene oxide, polyphenylene sulfide, polycarbonate, polymethyl methacrylate, polyethers, polyether ether ketone, polyether imide, polyacetal, styrene-based resins, polyolefin-based resins, polyvinyl chloride-based resins, polyurethane-based resins, polyesters such as polylactic acid ethyl, polyamide-based resins, polybutadiene-based resins, trans-polyisoprene-based resins, fluororubber-based resins, and chlorinated polyethylene-based resins such as polyvinyl chloride and polyvinylidene chloride, as well as copolymers, blends, and polymer alloys mainly composed of these, and for example, a polyolefin-based resin such as polyethylene can be selected. When the gas absorbent material contains a thermoplastic resin, the content of the heat-activated resin can be, for example, 10 to 40% by mass with respect to the total amount of the gas absorbent material.

The gas absorbent material may contain a filler. As a result, voids can be formed in the gas absorbent material, diffusion of gas into the inside of the gas absorbent material can be promoted, and a reversible absorption rate and a reversible absorption amount of the gas can be improved. Furthermore, by using a filler having a gas adsorption capability, in addition to gas absorption by the absorbent material, gas adsorption by the adsorbent can also be exhibited. Since a gas adsorbent exhibits a large gas-reversible adsorption capability under low humidity and a gas absorbent material exhibits a large gas absorption performance under high humidity, by using the gas adsorbent as a filler, a material having a large gas-reversible adsorption capability under a wide range of humidity conditions can be realized. As the filler having a gas adsorption capability, materials having a large micropore surface area, such as various activated carbons and zeolites, may be used. In particular, an adsorbent having a large carbon dioxide gas adsorption capability may be selected and used. In addition, when the polymer material constituting the gas absorbent material contains water and is gelled, or when it is a pulverized product of a gelled polymer (polymer pulverized product), addition of a filler can reduce the bulk volume, increase the filling amount, and improve the gas-reversible absorption capability. As the filler, fine particles having a primary particle size of 1,000 nm or less as described below can be preferably used. Furthermore, when the gas absorbent material containing the polymer pulverized product and the filler is pulverized, the gas-reversible absorption capability can be further improved. The pulverization of the gas absorbent material containing the polymer pulverized product and the filler can be performed by a planetary ball mill apparatus using a bead mill or the like.

In order to promote the diffusion of the gas into the absorbent material, a powdery filler may be selected. In addition, primary particles having an average particle size of, for example, 1,000 nm or less may be employed. The primary particle size referred to herein can be measured by transmission electron microscopy observation. The fine particles having a primary particle size of 1,000 nm or less used in the present embodiment may be composed only of fine particles having a primary particle size of 1,000 nm or less. The particle size can be set to an average primary particle size of 0.1 nm to 1000 nm, or 0.3 nm to 500 nm, or 0.5 nm to 300 nm, or 1 nm to 200 nm, or 1.5 nm to 100 nm, or 2 nm to 50 nm, or 2.5 nm to 25 nm. As a result, a gas diffusion phase is more reliably formed in the molded body of the gas absorbent material, and the gas absorption rate and the gas emission rate tend to be further improved. The fine particles may be those in which primary particles are aggregated. The size of the aggregate is preferably 100 nm to 200 $\mu$m, more preferably 500 nm to 100 $\mu$m, and most preferably 2.5 $\mu$m to 50 $\mu$m. In addition, among the fillers, those having a water contact angle of, for example, 70° or more may be used. The water contact angle may be 80° or more, or 100° or more, or 110° or more, or 120° or more, or 130° or more, or 140° or more.

Hereinafter, fine particles having a primary particle size of 1,000 nm or less, which can be used as a filler, will be specifically described. The fine particles having a primary particle size of 1,000 nm or less may be composed of an inorganic material, may be composed of an organic material, or may be composed of a combination of an organic material and an inorganic material. In addition, the fine particles may be hydrophobic fine particles or hydrophilic fine particles, but are preferably hydrophobic fine particles. Since the fine particles are hydrophobic fine particles, the voids formed by the fine particles are prevented from being blocked by moisture contained in the gas absorbent material, and the voids effectively function as a gas diffusion phase.

Here, the "hydrophobic fine particles" mean fine particles having a primary particle size of 1,000 nm or less and a water contact angle of 70°C or more. The "water contact angle" of the fine particles refers to a contact angle with water measured on a surface of a fine particle deposited film formed of the fine particles. The water contact angle of the surface of the fine particle deposited film can be measured by static water contact angle measurement.

The water contact angle of the hydrophobic fine particles is preferably 80° or more, more preferably 100° or more, still more preferably 110° or more, even still more preferably 120° or more, particularly preferably 130° or more, and most preferably 140° or more.

The hydrophobic fine particles having a primary particle size of 1,000 nm or less may be fine particles that themselves have hydrophobicity, or may be those in which hydrophobicity is imparted to the surface of particles serving as a base (base particles). Examples of the fine particles in which hydrophobicity is imparted to the surface of base particles include coated fine particles in which a hydrophobic coating is formed on base surfaces, and surface-modified fine particles in which surface modification for imparting hydrophobicity is applied to base particles.

First, examples of the fine particles that themselves have hydrophobicity include carbon black. Examples of the carbon black include acetylene black, furnace black, channel black, thermal black, lamp black, and Ketjen black, and among them, acetylene black is preferable.

Examples of other hydrophobic fine particles include particles formed of CNovel (registered trademark) (porous carbon, manufactured by Toyo Tanso Co., Ltd.), titanium oxide, and mesoporous silica. In addition, as the fine particles that themselves have hydrophobicity, fine particles formed of a hydrophobic organic material can also be used. Examples of the hydrophobic organic material that can be used for forming the particles include fluororesins containing a structural unit represented by $-(CA^1A^2-CA^3A^4)-$ (where $A^1$ to $A^4$ represent a hydrogen atom, a fluorine atom, a chlorine atom, or a perfluoroalkyl group, and at least one of $A^1$ to $A^4$ is a fluorine atom). Specific examples of the fluororesins include polytetrafluoroethylene (PTFE), copolymers of tetrafluoroethylene with other monomers, polychlorotrifluoroethylene (PCTFE), copolymers of chlorotrifluoroethylene with other monomers, polyvinylidene fluoride (PVDF), polyvinyl fluoride (PVF), and polytetrafluoropropylene (PTFP). Examples of the copolymer of tetrafluoroethylene with other monomers include perfluoroalkoxy alkane (PFA: a copolymer of tetrafluoroethylene and perfluoroalkyl vinyl ether), a perfluoroethylene propene copolymer (FEP: a copolymer of tetrafluoroethylene and hexafluoropropylene), an ethylene-tetrafluoroethylene copolymer (ETFE), and a tetrafluoroethylene-perfluorodioxole copolymer (TFE/PDD). In addition, examples of the copolymer of chlorotrifluoroethylene with other monomers include an ethylene-chlorotrifluoroethylene copolymer (ECTFE). These hydrophobic organic materials may be used alone as a single type, or two or more types may be used in combination.

The base particles of the coated fine particles and the surface-modified fine particles may be inorganic particles or organic particles, but are preferably inorganic particles. In addition, when the fine particles that themselves have hydrophobicity are used as base particles, and a hydrophobic coating or a surface modification for imparting hydrophobicity is applied to the fine particles, not only the gas absorption rate and the gas emission rate but also the amount of gas absorption and emission can be improved.

As the inorganic particles, known inorganic particles can be used, and examples thereof include carbon black such as acetylene black, furnace black, channel black, thermal black, lamp black, and Ketjen black, particles composed of inorganic compounds such as oxides, hydroxides, nitrides, halides, carbonates, sulfates, acetates, and phosphates of metal elements or metalloid elements, and natural mineral particles. Examples of the inorganic compounds of metal elements or metalloid elements include lithium fluoride, calcium carbonate, calcium phosphate, calcium sulfate, calcium fluoride, barium sulfate, titanium dioxide (titania), zirconium dioxide (zirconia), aluminum oxide (alumina), aluminosilicates (aluminum silicate, kaolin, kaolinite), and silicon oxide (silica, silica gel), and examples of the natural minerals include talc and clay. Among them, particles composed of carbon black and silicon oxide are preferable.

As the organic particles, known organic particles can be used, and examples thereof include particles composed of styrene-based, acryl-based, melamine-based, benzoguanamine-based, and silicone-based polymers. In this case, a filler may also be used in combination, and, for example, activated carbon and zeolite can be preferably used as the filler.

As the hydrophobic coating formed on the base particles, in addition to the hydrophobic organic materials exemplified as hydrophobic materials usable for forming the fine particles, coatings of organopolysiloxane or organohydrogenpolysiloxane can be used. Examples of the organopolysiloxane include dialkylpolysiloxane and alkylphenylpolysiloxane, and examples of organohydrogenpolysiloxane include alkylhydrogenpolysiloxane. The alkyl group in dialkylpolysiloxane, alkylphenylpolysiloxane, and alkylhydrogenpolysiloxane may be linear, branched, or cyclic, but is preferably linear. The number of carbon atoms in the alkyl group is preferably 1 to 20, more preferably 1 to 10, and still more preferably 1 to 6. Here, the two alkyl groups bonded to the silicon atom may be the same as or different from each other. Specific examples of the organopolysiloxane include dimethylpolysiloxane and methylphenylpolysiloxane, and specific examples of the organohydrogenpolysiloxane include methylhydrogenpolysiloxane.

Examples of the surface modification method applied to the base particles include a method of introducing a hydrophobic group such as an alkyl group or a fluorinated alkyl group onto the surface of the base particles. The alkyl group or the fluorinated alkyl group introduced into the base particles may be linear, branched, or cyclic, but is preferably linear. The number of carbon atoms in the alkyl group or the fluorinated alkyl group is preferably 1 to 20, more preferably 1 to 15, and still more preferably 1 to 10. In addition, the fluorinated alkyl group may be a fluorinated alkyl group in which some of the hydrogen atoms of the alkyl group are substituted with fluorine atoms, or a perfluoroalkyl group in which all of the hydrogen atoms are substituted with fluorine atoms.

The surface modification for introducing these hydrophobic groups into the base particles can be performed using a silane compound such as a silane coupling agent or silazane. Examples of the silane coupling agent include a compound represented by the following General Formula (2).

$$R^1_n SiX_{(4-n)} \cdots \qquad (2)$$

In General Formula (2), X represents a hydrolyzable group that generates a silanol group by hydrolysis, and $R^1$ represents a group containing a hydrophobic group. n is an integer of 1 to 3.) The silane coupling agent represented by General Formula (2) introduces a hydrophobic group into the base particles by the reaction of the silanol group or silyl group generated by hydrolysis of X with functional groups on the surface of the base particles.

Examples of the "hydrolyzable group that generates a silanol group" represented by X in General Formula (2) include alkoxy groups such as a methoxy group and an ethoxy group, and halogen groups. Examples of the hydrophobic group in $R^1$ include an alkyl group, a fluorinated alkyl group, and dimethylsiloxane. The description and preferred range of the alkyl group and the fluorinated alkyl group can be referred to in the description and preferred range of the hydrophobic groups that can be introduced onto the surface of the base particles. The hydrophobic group may be directly bonded to Si, or may be bonded through a linking group.

n is an integer of 1 to 3 and preferably 1 or 2. When n is 2 or more, a plurality of $R^1$ may be the same as or different from each other. When n is 2 or less, a plurality of X may be the same as or different from each other.

Examples of the silane-based coupling agent represented by General Formula (2) include triethoxyalkylsilane, diethoxydialkylsilane, ethoxytrialkylsilane, trimethoxyalkylsilane, dimethoxydialkylsilane, methoxytrialkylsilane, and trichloroalkylsilane. In addition, specific examples of the silane-based coupling agent include triethoxycaprylylsilane (triethoxy-n-octylsilane) and octadecyltrichlorosilane.

The formation of the hydrophobic coating or the surface modification treatment on the base particles as described above can be performed according to a conventional method. Examples of commercially available products of the hydrophobic fine particles include Microdispers-200 (manufactured by Techno Chemical Corporation), AEROSIL RY200, AEROSIL RY300, and AEROSIL R805 (all manufactured by Evonik Industries AG), and Ketjen black (manufactured by Lion Specialty Chemicals Co., Ltd.). These hydrophobic fine particles may be used alone as a single type, or two or more types may be used in combination.

The fine particles having a primary particle size of 1,000 nm or less that can be used as the filler are not limited to hydrophobic fine particles, and may be fine particles other than hydrophobic fine particles, that is, fine particles having a water contact angle of less than 70°. In addition, the hydrophobic fine particles may be used in combination with fine particles having a water contact angle of less than 70°. The fine particles having a water contact angle of less than 70° may have a water contact angle of 50° or less, 30° or less, or 10° or less. The lower limit value of the water contact angle of the fine particles is 0°.

As examples of fine particles other than hydrophobic fine particles, base particles of coated fine particles and surface-modified fine particles can be conceived, examples thereof include particles composed of inorganic compounds of metal elements or metalloid elements, or organic particles, and particles of silicon oxide are preferable. In addition, these inorganic particles and organic particles may have a coating of an organic compound formed on their surfaces, or may have organic functional groups introduced thereon. Examples of commercially available products of fine particles other than the hydrophobic fine particles include AEROSIL 200 (manufactured by Evonik Industries AG).

The specific surface area of the fine particles is preferably 1 to 3,000 $m^2/g$, more preferably 2.5 to 2,750 $m^2/g$, and still more preferably 5 to 2,500 $m^2/g$. As a result, a gas diffusion phase is more reliably formed in the molded body of the gas absorbent material, and the gas absorption rate and the gas emission rate tend to be further improved.

The specific surface area of the fine particles can be measured by the BET method.

The blending ratio (polymer material:fine particles) in terms of the solid weight of the polymer material and the fine particles is preferably 95:5 to 5:95, more preferably 90:10 to 30:70, and still more preferably 80:20 to 50:50. In addition, the content of the polymer material in the gas absorbent material is preferably greater, in terms of solid content, than the content of the hydrophobic fine particles. In addition, when the polymer material contains water and is gelled, or when it is a pulverized product of a gelled polymer, addition of a filler to the gas absorbent material reduces the bulk, increases the filling amount, and improves the gas-reversible absorption capability. From the viewpoint of effectively obtaining such an effect, the volume ratio of the gelled polymer or its pulverized product to the fine particles (gelled polymer or its pulverized product:fine particles) is preferably 99.9:0.1 to 98:2, more preferably 99.75:0.25 to 98.5:1.5, and still more preferably 99.5:0.5 to 99:1. By setting the amount ratio of the polymer material to the fine particles within the above range, the gas absorption rate and the gas emission rate tend to be higher. However, the gas absorbent material of the present embodiment is not limited to one containing fine particles having a primary particle size of 1,000 nm or less. That is, the gas absorbent material of the present embodiment may not contain fine particles having a primary particle size of 1,000 nm or less.

In the gas absorbent material of the present embodiment, in addition to the fine particles exemplified above, known fillers can be used. Examples thereof include oxides such as activated carbon, zeolite, silica, fumed silica, hydrophobic silica, hydrophobic fumed silica, water-repellent silica, alumina, hydrophobic alumina, water-repellent alumina, boehmite, diatomaceous earth, titanium oxide, iron oxide, zinc oxide, magnesium oxide, and metal ferrite, Hydroxides such as aluminum hydroxide and magnesium hydroxide, carbonates such as calcium carbonate (light, heavy), magnesium carbonate, dolomite, and dawsonite, sulfates or sulfites such as calcium sulfate, barium sulfate, ammonium sulfate, and calcium sulfite, silicates such as talc, mica, clay, glass fiber, calcium silicate, montmorillonite, and bentonite, borates such as zinc borate, barium metaborate, aluminum borate, calcium borate, and sodium borate, carbon materials such as carbon black, hydrophobic carbon black, water-repellent carbon black, graphite, and carbon fiber, and others such as iron powder, copper powder, aluminum powder, zinc oxide, molybdenum sulfide, boron fiber, potassium titanate, lead zirconate titanate, fluororesin powder, and Teflon (registered trademark) powder. A hydrophobic substance can also be selectively used in order to suppress condensation or dew condensation of water vapor. In addition, it is also possible to selectively use those composed of carbon such as carbon black. These fillers may have a primary particle size of 1,000 nm or less or more than 1,000 nm. In addition, the gas absorbent material of the present embodiment may contain particles having a primary particle size of more than 1,000 nm, which are composed of the same materials as those exemplified as fine particles having a primary particle size of 1,000 nm or less. When the gas absorbent material contains a filler, the content of the filler can be, for example, 0.1 to 60% by mass with respect to the total amount of the gas absorbent material.

The gas absorbent material may further contain a dispersion medium in which the polymer material and the additive of the present embodiment are suspended. These other components that can be used in the gas absorbent material described above may be used alone as a single type, or two or more types may be used in combination.

The carbon dioxide separation material 33 is not limited to the predetermined polymer material described above. For example, a material such as a basic polymer, a basic polymer gel (fine particles), or an ion exchange resin can also be used. These materials also satisfy the points that sorption and release of carbon dioxide are performed reversibly, that sorption and release are performed reversibly depending on temperature and pressure, that sorption and release of moisture are also performed reversibly, and that carbon dioxide is sorbed in a wet state.

The amount of retained gas can be reduced by increasing the filling density of the carbon dioxide separation material 33 in the internal space 32 of the housing 31. When the amount of retained gas is reduced, the concentration of carbon dioxide at the time of recovery can be increased. In addition, when the retained gas recovery unit 7 is used, the size of the retained gas recovery unit 7 can be reduced. Furthermore, even in a case where an operation is performed to purge the retained gas from the carbon dioxide separation unit 3 by supplying a part of the recovered carbon dioxide to the carbon dioxide separation unit 3 (for example, together with steam supply to the carbon dioxide separation unit 3), the amount of carbon dioxide to be supplied can be reduced, and the loss of carbon dioxide can be minimized. On the other hand, when the filling density is too high, it causes an increase in pressure loss and further leads to the disappearance of the gas diffusion phase. Therefore, the filling density is preferably 10% to 95%, and more preferably 20% to 80% in terms of volume ratio.

(Steam Supply Unit 4)

The steam supply unit 4 generates and supplies steam upstream or downstream of the carbon dioxide separation unit 3 in order to reduce the partial pressure of carbon dioxide in the carbon dioxide separation unit 3 and to cause steam (moisture) to be sorbed or condensed in the carbon dioxide separation material 33. In particular, when the steam generated by the steam supply unit 4 reaches the carbon dioxide separation unit 3, the state of the steam is adjusted so that a pressure of the steam is equal to or higher than a saturated water vapor pressure at the temperature of the carbon dioxide separation material 33 in at least a part of the inside of the carbon dioxide separation unit 3. Here, the adjustment of the state refers to adjustment of temperature, adjustment of humidity, or adjustment of both of them. For example, the steam supply unit 4 may adjust the state so that the supplied steam becomes saturated steam in a partial region inside the carbon dioxide separation unit 3. On the other hand, the supplied steam itself may be saturated steam. When the pressure is equal to or higher than the saturated water vapor pressure, water vapor is condensed to become liquid water at the position, and at the same time, latent heat of vaporization of water is released. This heat can be utilized as reaction heat for causing carbon dioxide to be released from the absorbent material, and as a result, reduces the temperature decrease of the absorbent material during carbon dioxide release and accelerates the release rate of carbon dioxide. Furthermore, during carbon dioxide sorption, the temperature increases due to the supply of reaction heat accompanying the carbon dioxide sorption, but the condensed water changes into water vapor and takes away the heat corresponding to the latent heat of vaporization, thereby reducing the temperature increase.

As illustrated in Fig. 1, the steam supply unit 4 includes a steam generator 41 incorporating a heater, and a pump 42. More specifically, the valve V5 is connected to one end (upstream side) of the steam generator 41 through a pipe P41, and the valve V2 is connected to the other end (downstream side) through a pipe P42. In addition, a supply water introduction pipe P43 is connected to one end (upstream side) of the pump 42, and the steam generator 41 is connected to the other end (downstream side) through a pipe P44.

With the configuration of the steam supply unit 4 as described above, when the supply of the supply gas is stopped, the pump 42 is driven, supply water is supplied to the steam generator 41, and steam at a predetermined temperature is generated in the steam generator 41. Then, the generated steam is supplied to the carbon dioxide separation unit 3 through the pipe P42, the valve V2, and the common pipe P1. Here, the predetermined temperature is the same as, or determined according to, the operating temperature of the carbon dioxide separation unit 3 in the gas recovery device 1.

When steam is supplied to the carbon dioxide separation unit 3 by the steam supply unit 4, the carbon dioxide in the carbon dioxide separation unit 3 is diluted with the steam and its partial pressure decreases, such that the amount of pressure reduction by a pump described below can be reduced. As a result, the pressure reduction cost is reduced, and the overall cost of the gas recovery device 1 and the recovery cost of carbon dioxide are also reduced.

Note that the steam supply unit 4 may be incorporated in the humidity adjustment unit 2 described above. That is, the humidity adjustment unit 2 may include the steam supply unit 4, and the function of the steam supply unit 4 may be executed by the humidity adjustment unit 2. This is because when the carbon dioxide concentration of the supply gas is low, the carbon dioxide permeation amount is also small, and it may be possible to sufficiently lower the partial pressure of carbon dioxide only with the water vapor supplied through the membrane from the humidity supply unit.

(Carbon Dioxide Recovery Unit 5)

As illustrated in Fig. 1, the carbon dioxide recovery unit 5 includes a pump 51, a heat exchanger 52, a gas-liquid separator 53, a valve V51, a valve V52, and a storage tank 54. More specifically, the valve V3 is connected to one end (upstream side) of the pump 51 through the pipe P51, and the heat exchanger 52 is connected to the other end (downstream side) through the pipe P52. In addition, the gas-liquid separator 53 is connected to the downstream side of the heat exchanger 52 through a pipe P53. Furthermore, the valve V51 is connected to the downstream side of the gas-liquid separator 53 through a pipe P54. Further, a pipe P55 for discharging drainage to the outside is connected to the gas-liquid separator 53.

As illustrated in Fig. 1, a degassing pipe P56 for degassing a gas (retained gas) other than carbon dioxide is connected to the downstream side of the valve V51. In addition, at a branch point T51 of the pipe P54, a pipe P57 is connected, and one end of the valve V52 is connected to the downstream side of the pipe P57. Furthermore, the other end (downstream side) of the valve V52 is connected to the storage tank 54 through a pipe P58. The storage tank 54 is also connected to the valve V5 through a pipe P59.

With the configuration of the carbon dioxide recovery unit 5 as described above, the pressure in part of the gas recovery device 1 (for example, the carbon dioxide separation unit 3) is reduced by driving the pump 51, and by this pressure reduction, the introduced gas (carbon dioxide and water vapor) introduced to the carbon dioxide recovery unit 5 is heated or cooled by the heat exchanger 52 according to the temperature of the gases, adjusted to a predetermined temperature range, and then supplied to the gas-liquid separator 53. For example, when the introduced gas is cooled by the heat exchanger 52, the water vapor contained in the introduced gas is condensed and separated as water. Here, the predetermined temperature range is determined according to an operating temperature of the carbon dioxide separation unit 3 in the gas recovery device 1. For example, the predetermined temperature range is -78°C to 60°C.

In the gas-liquid separator 53, moisture is removed from the introduced gas, and the removed moisture is discharged as drainage through the pipe P55. More specifically, when water vapor is condensed and separated as water by the heat exchanger 52, the water is separated from the gas as condensed water in the gas-liquid separator 53, and the condensed water is discharged as drainage. As a result, the moisture content of the introduced gas passing through the gas-liquid separator 53 is adjusted to increase the ratio of carbon dioxide, and the introduced gas is supplied to the storage tank 54 through the pipe P54, the branch point T51, the pipe P57, and the valve V52. In addition, the carbon dioxide stored in the storage tank 54 is delivered to the steam supply unit 4 through the pipe P59, the valve V5, and the pipe P41 at a predetermined timing to be described below. That is, the carbon dioxide recovery unit 5, the steam supply unit 4, the carbon dioxide separation unit 3, and the pipes and valves connecting them constitute a carbon dioxide circulation path for circulating carbon dioxide.

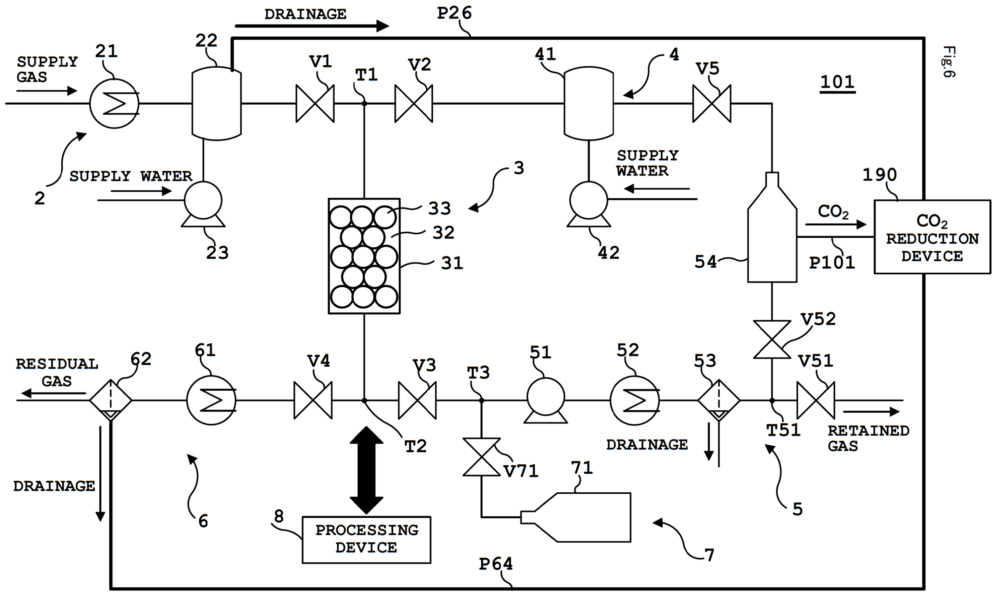

With the configuration and function of the carbon dioxide recovery unit 5 as described above, the temperature of the stored carbon dioxide can be adjusted, and unnecessary moisture can also be removed, such that high concentration carbon dioxide can be stored in the storage tank 54. Note that, when temperature adjustment is unnecessary, the heat exchanger 52 may not be provided. In addition, the arrangement relationship between the pump 51 and the heat exchanger 52 may be reversed, and the introduced gas with an adjusted temperature may be drawn by the pump 51. Furthermore, the number of pumps 51 and heat exchangers 52 is not limited to one, and may be plural according to the amount of introduced gas to be drawn and the temperature adjustment, and the number can be appropriately adjusted. In addition, the storage tank 54 is not essential, and may be directly connected to a carbon dioxide reduction device (such as a carbon dioxide reduction device 190 described below with reference to Fig. 6). In addition, it is also possible to store liquefied carbon dioxide gas or dry ice by performing pressurization, cooling, and the like as necessary.

Note that, as cooling methods in the heat exchanger 52, water, air, LNG, or another refrigerant can be used. These temperatures may be set, for example, to 20°C or lower. In the heat exchanger 52, the steam may be condensed and removed by utilizing a temperature decrease accompanying the gasification of the liquefied gas or the decompression of the high-pressure gas. In this case, as the high-pressure gas, natural gas, city gas, propane gas, or water vapor can be used. In addition, as heating methods, heater heating and heat by combustion of fuel gas can be used. However, these are merely examples, and cooling and heating by other known methods can be performed. In addition, instead of the storage tank 54, a pipe for directly supplying the concentrated and recovered carbon dioxide to another device may be provided.

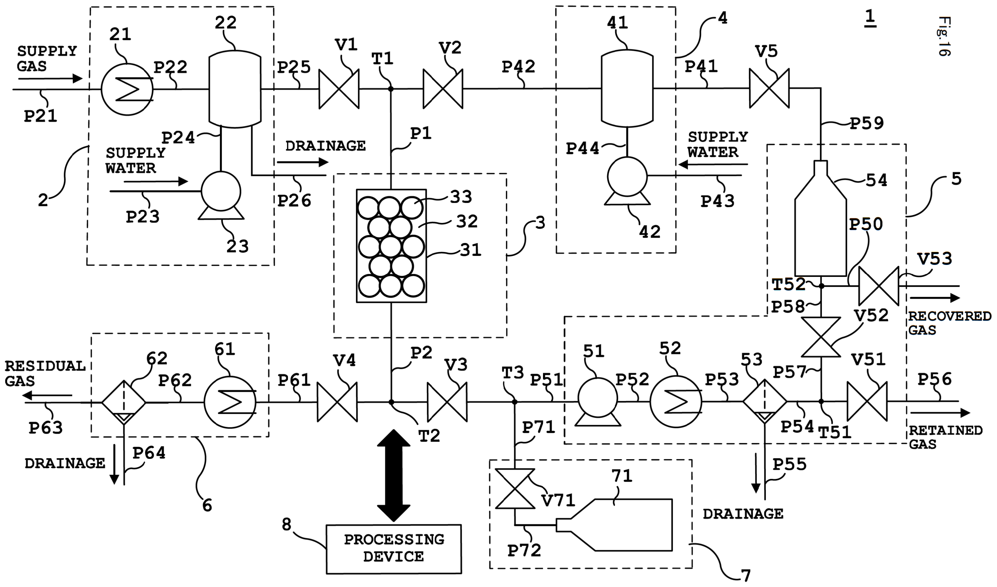

Fig. 16 illustrates a configuration according to a modification of the carbon dioxide recovery unit 5. A branch pipe P50 branching from a branch point T52 of the pipe P58 is provided between the valve V52 and the storage tank 54. A valve V53 is installed in the branch pipe P50. When the carbon dioxide concentration in the gas recovered from the carbon dioxide separation unit 3 is equal to or higher than a predetermined concentration, the recovered gas can be recovered via the valve V52 and the valve V53. On the other hand, when the carbon dioxide concentration in the gas recovered from the carbon dioxide separation unit 3 is less than a predetermined concentration, the gas can be discarded outside the device as retained gas via the valve V51. Alternatively, the retained gas may be supplied to the introduction pipe P21 as the supply gas to be circulated. In order to determine the carbon dioxide concentration, an analyzer that obtains the concentration of carbon dioxide, or a pipe that guides gas to the analyzer, may be provided between the carbon dioxide separation unit 3 and the branch point T51 (downstream of the carbon dioxide separation unit 3 and upstream of the branch point T51).

(Residual Gas Discharge Unit 6)

As illustrated in Fig. 1, the residual gas discharge unit 6 includes a heat exchanger 61 and a gas-liquid separator 62. More specifically, the valve V4 is connected to one end (upstream side) of the heat exchanger 61 through a pipe P61, and the gas-liquid separator 62 is connected to the other end (downstream side) through a pipe P62. In addition, an exhaust pipe P63 for exhausting residual gas to the outside is connected to the downstream side of the gas-liquid separator 62. Further, a pipe P64 for discharging drainage to the outside is connected to the gas-liquid separator 62.

With the configuration of the residual gas discharge unit 6 as described above, unnecessary residual gas from which carbon dioxide is separated from the supply gas in the carbon dioxide separation unit 3 is heated or cooled by the heat exchanger 61 according to the temperature of the residual gas, adjusted to a predetermined temperature range, and supplied to the gas-liquid separator 62. For example, when the introduced gas is cooled by the heat exchanger 61, the water vapor contained in the residual gas is condensed and separated as water. Here, the predetermined temperature range varies depending on the environment in which the gas recovery device 1 is provided. That is, the allowable temperature of the residual gas to be discharged differs depending on the environment, and the heat exchanger 61 is provided to cope with the allowable temperature. For example, when the residual gas should be reduced to 25°C or lower for discharge, the temperature range may be set to 20°C or lower, which is lower than 25°C.

In the gas-liquid separator 62, unnecessary moisture is removed from the residual gas, and the removed moisture is discharged as drainage through the pipe P64. More specifically, when water vapor is condensed and separated as water by the heat exchanger 61, the water is separated from the gas as condensed water in the gas-liquid separator 62, and the condensed water is discharged as drainage. As a result, the moisture content of the residual gas passing through the gas-liquid separator 62 is adjusted, and the residual gas is discharged to the outside of the gas recovery device 1. The adjustment of the moisture content is similar to the temperature adjustment described above, and differs depending on the environment in which the gas recovery device 1 is provided. That is, the allowable moisture content of the residual gas to be discharged differs depending on the environment, and the gas-liquid separator 62 is provided to cope with the allowable moisture content.

With the configuration and function of the residual gas discharge unit 6 as described above, the temperature and moisture content of the residual gas passing through the heat exchanger 61 and the gas-liquid separator 62 are adjusted, and the residual gas can be discharged to the outside of the gas recovery device 1. Note that the number of heat exchangers 61 is not limited to one, and may be plural according to temperature adjustment of the residual gas, and the number can be appropriately adjusted. In addition, when there are no restrictions on the temperature and moisture content of the residual gas that can be discharged, the residual gas may be discharged via the valve V4 without providing the heat exchanger 61 and the gas-liquid separator 62. Naturally, either the heat exchanger 61 or the gas-liquid separator 62 may be provided, such that only either the temperature adjustment or the moisture content adjustment may be performed, and the adjusted residual gas may be discharged to the outside of the gas recovery device 1.

Note that, as cooling methods in the heat exchanger 61, water, air, LNG or another refrigerant, a method using latent heat by phase change, or electronic cooling can be used. In addition, as heating methods, heater heating and heat by combustion of fuel gas, exhaust heat, a heat pump, or the like can be used. However, these are merely examples, and cooling and heating by other known methods can be performed.

In addition, a part or all of the residual gas may be returned to the supply gas side (that is, the introduction pipe P21). Further, when a plurality of gas recovery devices are provided, a part or all of the residual gas may be supplied to another gas recovery device. With such a configuration, the recovery rate of carbon dioxide can be increased, and recycling of the supply gas and a two-stage process can be realized.

(Retained Gas Recovery Unit 7)

As illustrated in Fig. 1, the retained gas recovery unit 7 includes a buffer tank 71 and a valve V71. More specifically, a pipe P71 is connected to one end (upstream side) of the valve V71, and the pipe P71 is connected to the pipe P51 at the connection point (branch point) T3. In addition, the other end (downstream side) of the valve V71 is connected to the buffer tank 71 through a pipe P72.

When the valve V71 and the valve V3 are opened, the retained gas retained in the carbon dioxide separation unit 3 flows in the retained gas recovery unit 7. Here, the retained gas is in a state containing carbon dioxide and unnecessary gases, and refers to gas having a low carbon dioxide concentration. Thus, the retained gas can be temporarily stored, and the retained gas is finally discharged to the outside through the carbon dioxide recovery unit 5 and the degassing pipe P56. With the buffer tank 71, pressure reduction during carbon dioxide recovery can be performed quickly, and furthermore, by minimizing the amount of carbon dioxide mixed with the retained gas, the carbon dioxide concentration at the time of recovery can be increased. Note that the connection position of the degassing pipe P56 is not limited to the position described above, and may be connected to any of the pipes P72, P71, P51, P52, P53, P1, and P42, and the retained gas may be discharged to the outside according to the connection configuration. In addition, a pump separate from the pump 51 may be installed to discharge the retained gas.

Note that the number of buffer tanks 71 is not limited to one, and may be plural. When a plurality of buffer tanks 71 are provided, valves for driving the respective buffer tanks 71 separately may be provided.

In addition, the retained gas recovery unit 7 is disposed at a position branching from the pipe P51, but may be disposed at a position branching from the pipe P42. That is, the retained gas recovery unit 7 is not limited to being disposed on the downstream side of the carbon dioxide separation unit 3, and may be disposed on the upstream side. Even in this case, the retained gas in the carbon dioxide separation unit 3 can be recovered using the relationship between the internal pressure of the buffer tank 71 and the internal pressure of the carbon dioxide separation unit 3. Furthermore, the retained gas recovery unit 7 may be installed on both the upstream side and the downstream side of the carbon dioxide separation unit 3.

(Processing Device 8)

Fig. 2 is a block diagram illustrating an example of a configuration of a processing device 8 according to the first embodiment of the present disclosure. The processing device 8 does not need to include all of the components illustrated in Fig. 2, and can have a configuration in which some components are omitted, or another component can be added.

Typically, examples of the processing device 8 include a terminal device capable of wireless communication represented by a PLC, an industrial personal computer, a factory computer, a sequencer, a laptop computer, or a desktop computer, but the processing device 8 is not limited to only the device. For example, as the terminal device, any device capable of executing the program according to the present disclosure, such as a smartphone, a feature phone, a portable information terminal, a PDA, a portable game console, or a stationary game console, can be suitably applied.

According to Fig. 2, the processing device 8 includes an output interface 81, a processor 82, a memory 83 including a RAM, a ROM, or a non-volatile memory (in some cases, an HDD), a communication interface 84 including a communication processing circuit and an antenna, and an input interface 85 including a touch sensor and a hard key. These components are electrically connected to each other via a control line and a data line.

The output interface 81 functions as an output unit that, in accordance with instructions from the processor 82, outputs, to devices such as a display or a printer, an image captured by a camera (not illustrated) or various displays output by executing the program according to the present disclosure. Note that such a display includes, for example, a liquid crystal display, an organic EL display, electronic paper, or the like.

The processor 82 includes a CPU (for example, a microcomputer), and functions as a control unit that controls other connected components on the basis of various programs stored in the memory 83. Specifically, the processor 82 reads a program for executing an application according to the present disclosure or a program for executing an OS from the memory 83 and executes the program. In the present disclosure, the processor 82 controls the operation of each pump and each valve (details of the control will be described with reference to Figs. 3 to 5). Note that the processor 82 may be configured by a single CPU, or may be configured by combining a plurality of CPUs or GPUs.

The memory 83 includes a ROM, a RAM, a non-volatile memory, an HDD, and the like, and functions as a storage unit. The ROM stores an instruction command for executing the application or the OS according to the present disclosure as a program. The RAM is used to write and read data while the program stored in the ROM is processed by the processor 82. The non-volatile memory is a memory in which writing and reading of data are executed by execution of the program, and the data written here is stored even after the execution of the program is completed. In the present disclosure, the memory 83 particularly stores a program for controlling the operation of each pump and each valve (details of the control will be described with reference to Figs. 3 to 5).

The communication interface 84 functions as a communication unit that transmits and receives information to and from each valve and each pump via the communication processing circuit and the antenna. The communication processing circuit performs processing for transmitting control information (control command) to each valve or each pump according to the progress of processing of programs, various types of information, and the like used in the gas recovery device 1.

The communication processing circuit is processed based on a broadband wireless communication system represented by the LTE method, but it can also be processed based on a method relating to narrowband wireless communication such as a wireless LAN represented by IEEE 802.11 or Bluetooth (registered trademark) or a method relating to non-contact wireless communication. In addition to wireless communication, wired communication can also be used.

The input interface 85 includes a touch panel, a hard key, and the like, and functions as an input unit that receives an instruction input related to execution of the program according to the present disclosure, an operation input for registering various information, and the like. The touch panel is disposed so as to cover the output interface 81, and transmits to the processor 82 information on position coordinates corresponding to image data output to the display from the output interface 81. As the touch panel system, a known system such as a resistive film system, a capacitive coupling system, or a surface acoustic wave system can be used. In the present disclosure, the touch panel detects a swipe operation and a tap operation on each icon and the like displayed on the output interface 81 by a pointer. Note that, in the present disclosure, the input interface 85 provided in the processing device 8 is used; however, it is also possible to use the input interface 85, such as a mouse, that is connected wirelessly or by wire to the main body including the processor 82 or the like.

2. Flow of Carbon Dioxide Recovery by Gas Recovery Device

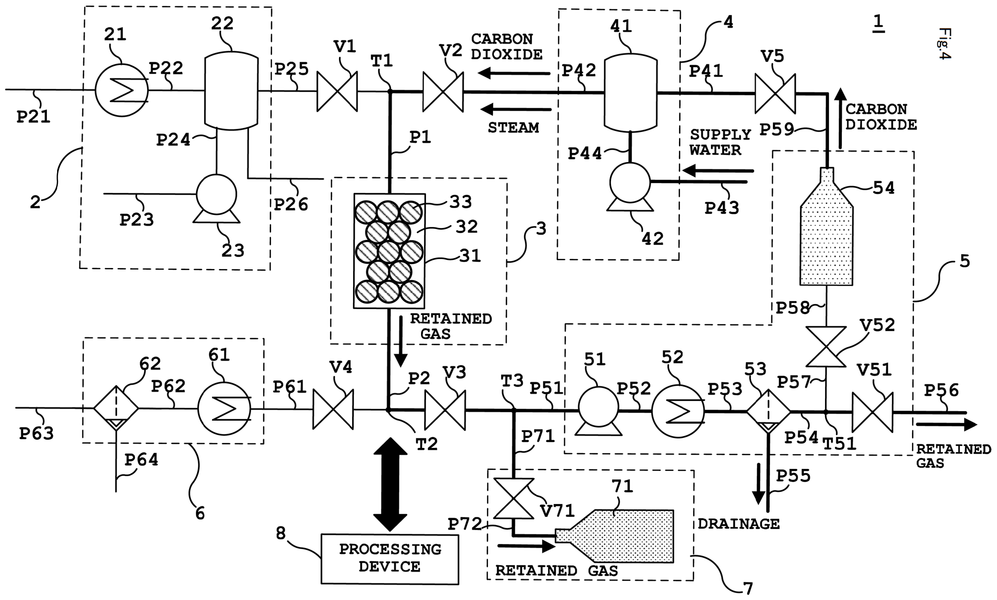

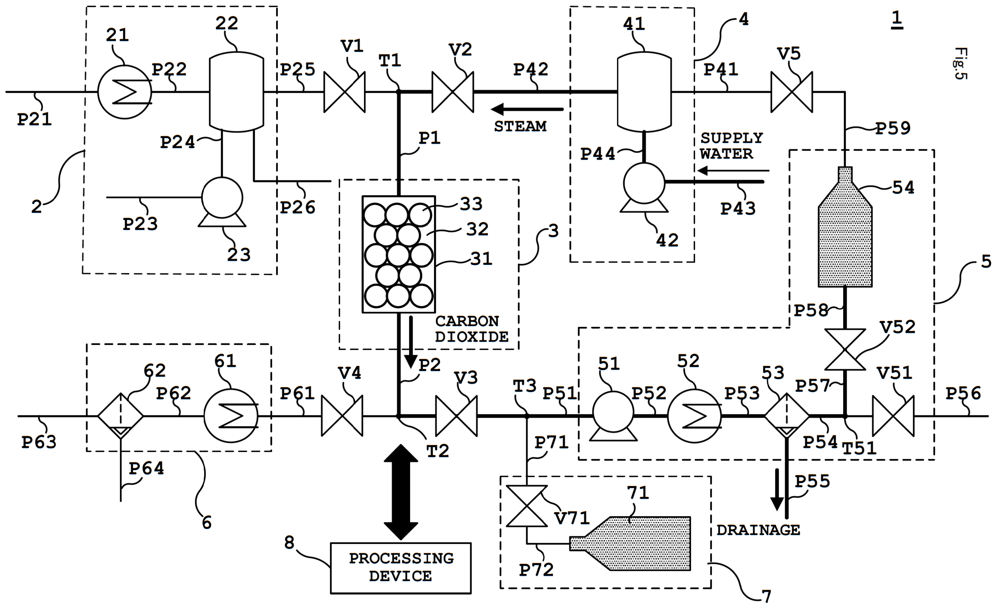

Figs. 3, 4, and 5 are diagrams illustrating a driving state of a single-column gas recovery device 1 according to the first embodiment of the present disclosure. Specifically, Fig. 3 is a diagram illustrating an initial stage of a carbon dioxide recovery flow, in which a process of adjusting a moisture content of a supply gas and introducing the supply gas into the carbon dioxide separation unit 3 is illustrated. Fig. 4 is a diagram illustrating an intermediate stage of the carbon dioxide recovery flow, in which a rinsing process for increasing a carbon dioxide concentration in the carbon dioxide separation unit 3 is illustrated. Fig. 5 is a diagram illustrating a final stage of the carbon dioxide recovery flow, in which a process of releasing carbon dioxide sorbed in the carbon dioxide separation unit 3 and storing the carbon dioxide in a storage tank is illustrated.

First, the processor 82 of the processing device 8 generates control signals for opening and closing valves, and transmits the control signals to each valve to perform opening and closing of each valve. Specifically, the processor 82 generates control signals for opening the valve V1 and the valve V4, and transmits the control signals. On the other hand, the processor 82 generates control signals for closing the valve V2, the valve V3, and the valve V5, and transmits the control signals. Thereafter, the valve V1 and the valve V4 are opened, and the valve V2, the valve V3, and the valve V5 are closed. As a result, as illustrated in Fig. 3, a gas flow path leading to the humidity adjustment unit 2, the carbon dioxide separation unit 3, and the residual gas discharge unit 6 is formed.

In this state, when the supply gas containing carbon dioxide and having a temperature of about 80°C is supplied from the introduction pipe P21, the supply gas is cooled to about 50°C in the heat exchanger 21. Here, it is assumed that the supply gas is a gas obtained by combusting methane gas, has a carbon dioxide concentration of about 7%, and has a moisture concentration of about 14%. Such a supply gas is equal to the saturated water vapor pressure at 50 °C and 1 atm.

The cooled supply gas is introduced into the gas-liquid separator 22 through the pipe P22. As described above, since the supply gas is equal to the saturated water vapor pressure at 50 °C and 1 atm, condensed moisture is removed in the gas-liquid separator 22, and the removed moisture is discharged as drainage through the pipe P26. As a result, a relative humidity adjustment step of performing a dehumidification step on the supply gas containing carbon dioxide to adjust a relative humidity of the supply gas is completed. Then, the supply gas from which moisture is removed, having a relative humidity of 80% or more (for example, 99%), is introduced into the carbon dioxide separation unit 3 through the valve V1 and the common pipe P1.

When the supply gas is introduced into the carbon dioxide separation unit 3, only carbon dioxide is sorbed on the carbon dioxide separation material 33 due to the characteristics of the carbon dioxide separation material 33 described above. On the other hand, the supply gas from which carbon dioxide is separated stays in the internal space 32 of the carbon dioxide separation unit 3. When the supply gas is further continuously introduced into the carbon dioxide separation unit 3, carbon dioxide is continuously sorbed by the carbon dioxide separation material 33, and the internal space 32 of the housing 31 is filled with the supply gas from which carbon dioxide is separated. Then, when the supply gas is further continuously introduced into the carbon dioxide separation unit 3, although carbon dioxide is continuously sorbed by the carbon dioxide separation material 33, the supply gas from which carbon dioxide is separated is led as residual gas to the residual gas discharge unit 6 through the common pipe P2, the valve V4, and the pipe P61. Here, among the supply gas from which carbon dioxide is separated, the gas retained in the internal space 32 of the carbon dioxide separation unit 3 is referred to as retained gas.

As a result, a sorption step of sorbing carbon dioxide by the carbon dioxide separation material 33 from the supply gas having the adjusted moisture content is completed. Here, when carbon dioxide is sorbed, sorption heat is generated, such that the temperature of the supply gas increases. Therefore, although it is conceivable that the carbon dioxide sorption performance of the carbon dioxide separation material 33 decreases, moisture in the carbon dioxide separator evaporates and causes evaporative cooling, whereby a temperature rise in the carbon dioxide separation unit 3 is suppressed, and the carbon dioxide sorption performance of the carbon dioxide separation material 33 is maintained. In addition, the sorption step does not need to wait until all of the absorbent reaches equilibrium with the carbon dioxide concentration of the supply gas, and the adsorption time can be determined arbitrarily. The sorption time is determined according to characteristics of the absorbent, a target recovery amount per unit time, a purity of the recovered carbon dioxide, or a recovery rate.

When the residual gas is introduced into the heat exchanger 61 of the residual gas discharge unit 6, the residual gas is cooled to about 24 °C in the heat exchanger 61 in order to enable discharge of the residual gas from the gas recovery device 1. Here, the cooling temperature is not limited to 24°C, and it is assumed as a residual gas discharge condition that the temperature of the residual gas is required to be at room temperature.

The residual gas cooled to 24°C in the heat exchanger 61 is introduced into the gas-liquid separator 62 through the pipe P62. Here, since the residual gas has a relative humidity of about 80% or more even in the state of the supply gas (a state containing carbon dioxide), the residual gas contains a large amount of moisture. Therefore, the cooled residual gas contains a large amount of water vapor, and moisture is removed from the residual gas in the gas-liquid separator 62. The removed moisture is discharged from the pipe P64 as drainage. On the other hand, the residual gas from which moisture is removed is discharged to the outside of the gas recovery device 1 through the exhaust pipe P63.

Note that the pressure in the path from the introduction of the supply gas to the separation by the absorption of carbon dioxide and the discharge of the exhaust gas as described above is about 1 atm. However, the pressure varies depending on the usage environment of the gas recovery device 1, and for example, may be 0.5 atm in a space exploration vehicle, while in other cases it may exceed 1 atm.

At the same timing as the control described above, the processor 82 of the processing device 8 generates control signals for opening and closing valves, and transmits the control signals to each valve to perform opening and closing of each valve. Specifically, the processor 82 generates control signals for opening the valve V51 and the valve V71, and transmits the control signals. On the other hand, the processor 82 generates a control signal for closing the valve V52, and transmits the control signal. Thereafter, the valve V51 and the valve V71 are opened, and the valve V52 is closed. As a result, a gas flow path leading to the retained gas recovery unit and the carbon dioxide recovery unit 5 is formed. Then, the processor 82 of the processing device 8 generates a control signal for driving the pump 51 and transmits the control signal.

Here, the buffer tank 71 is in a state of being filled with the retained gas retained in the carbon dioxide separation unit 3 due to a previous carbon dioxide recovery process (a process executed before the supply of the supply gas described above). Therefore, when a gas flow path leading to the retained gas recovery unit 7 and the carbon dioxide recovery unit 5 is formed and the pump 51 is driven, the retained gas filled in the buffer tank 71 is introduced into the heat exchanger 52 through the pipe P72, the valve V71, the pipe P71, the pipe P51, the pump 51, and the pipe P52, and is discharged to the outside of the gas recovery device 1 through the degassing pipe P56.

In addition, the processor 82 of the processing device 8 generates a control signal for temperature control in the heat exchanger 52 in order to adjust a cooling temperature of the retained gas, and transmits the control signal to the heat exchanger 52. Therefore, when the retained gas is introduced into the heat exchanger 52 of the carbon dioxide recovery unit 5, the residual gas is cooled to about 24°C in the heat exchanger 52 in order to enable discharge of the retained gas from the gas recovery device 1. Here, the cooling temperature is not limited to 24°C, and it is assumed as a retained gas discharge condition that the temperature of the retained gas is required to be at room temperature.

The retained gas cooled to 24°C in the heat exchanger 52 is introduced into the gas-liquid separator 53 through the pipe P53. Here, since the retained gas has a relative humidity of about 80% or more even in the state of the supply gas (a state containing carbon dioxide), the retained gas contains a large amount of moisture. Therefore, the cooled retained gas contains a large amount of water vapor, and moisture is removed from the retained gas in the gas-liquid separator 53. The removed moisture is discharged from the pipe P55 as drainage. On the other hand, the retained gas from which moisture is removed is discharged to the outside of the gas recovery device 1 through the pipe P54, the valve V51, and the degassing pipe P56. Here, in a path from the buffer tank 71 to the degassing pipe P56, the pressure is a value near 0 atm, which is significantly small compared with the pressure at the exhaust portion of the exhaust gas.

As described above, by discharging the retained gas, the inside of the buffer tank 71 becomes a vacuum state, and in a process described below, the retained gas can be temporarily stored.

Next, the processor 82 of the processing device 8 generates control signals for opening and closing valves, and transmits the control signals to each valve to perform opening and closing of each valve. Specifically, the processor 82 generates control signals for closing the valve V1 and the valve V4, and transmits the control signals. On the other hand, the processor 82 generates control signals for opening the valve V2, the valve V3, and the valve V5, and transmits the control signals. Thereafter, the valve V1 and the valve V4 are closed, and the valve V2, the valve V3, and the valve V5 are opened. Here, the valve V51 and the valve V71 are maintained in a continuously open state, and the valve V52 is maintained in a continuously closed state. As a result, as illustrated in Fig. 4, a gas flow path leading to the storage tank 54 of the carbon dioxide recovery unit 5, the steam supply unit 4, the carbon dioxide separation unit 3, and again to the carbon dioxide recovery unit 5 is formed. In addition, a gas flow path leading to the storage tank 54 of the carbon dioxide recovery unit 5, the steam supply unit 4, the carbon dioxide separation unit 3, and the retained gas recovery unit 7 is also formed.

In this state, in a situation of valve control, the processor 82 of the processing device 8 generates a control signal and transmits the control signal to the pump 42. As a result, the pump 42 is driven, and supply water is supplied to the steam generator 41 through the pipe P43, the pump 42, and the pipe P44. Then, steam is generated in the steam generator 41. Note that the pump 51 is continuously driven.

Since the buffer tank 71 is in a vacuum state, the retained gas retained in the carbon dioxide separation unit 3 is introduced into the buffer tank 71 through the common pipe P2, the valve V3, the pipe P51, the pipe P71, the valve V71, and the pipe P72. As a result, the retained gas can be quickly removed from the carbon dioxide separation unit 3, and the steam generated in the steam generator 41 and the carbon dioxide stored in the storage tank 54 are drawn into the carbon dioxide separation unit 3. Specifically, the steam is introduced into the carbon dioxide separation unit 3 through the pipe P42, the valve V2, and the common pipe P1, and the carbon dioxide is introduced into the carbon dioxide separation unit 3 through the pipe P59, the valve V5, the pipe P41, the steam generator 41, the pipe P42, the valve V2, and the common pipe P1. That is, the steam and the carbon dioxide are introduced into the carbon dioxide separation unit 3 via the same gas path from a midway point. As a result, the carbon dioxide can be humidified and supplied to the carbon dioxide separation unit 3, and drying of the absorbent can be prevented.

Thereafter, when the buffer tank 71 is filled with retained gas, the retained gas remaining in the carbon dioxide separation unit 3 is introduced into the heat exchanger 52 through the common pipe P2, the valve V3, the pipe P51, the pump 51, and the pipe P52 by driving of the pump 51. Here, since the buffer tank 71 first shifts from a vacuum state to a state filled with retained gas, a rapid pressure change of the pump 51 is alleviated. As a result, it is possible to suppress the load of the pump 51 and prevent failure. Then, the processor 82 of the processing device 8 generates a control signal closing the valve V71 and transmits the control signal. As a result, the buffer tank 71 is disconnected, and the removal speed of the retained gas can be improved.

In addition, since the processor 82 of the processing device 8 continuously controls temperature control in the heat exchanger 52 to be about 24°C, when the retained gas is introduced into the heat exchanger 52 of the carbon dioxide recovery unit 5, the residual gas is cooled to about 24°C in the heat exchanger 52 in order to enable discharge of the retained gas from the gas recovery device 1.

The retained gas cooled to 24°C in the heat exchanger 52 is introduced into the gas-liquid separator 53 through the pipe P53. Here, since the retained gas has a relative humidity of about 80% or more even in the state of the supply gas (a state containing carbon dioxide), the retained gas contains a large amount of moisture. Therefore, the cooled retained gas contains a large amount of water vapor, and moisture is removed from the retained gas in the gas-liquid separator 53. The removed moisture is discharged from the pipe P55 as drainage. On the other hand, the retained gas from which moisture is removed is discharged to the outside of the gas recovery device 1 through the pipe P54, the valve V51, and the degassing pipe P56.

On the other hand, in the carbon dioxide separation unit 3, the retained gas is discharged and the vapor increases. In addition, since a relative humidity of 80% or more is maintained, the carbon dioxide introduced into the carbon dioxide separation unit 3 is sorbed by the carbon dioxide separation material 33, and release of carbon dioxide due to a decrease in carbon dioxide partial pressure at this time is prevented. As a result, while maintaining the amount of carbon dioxide sorbed in the carbon dioxide separation unit 3, impurity removal (in other words, a rinsing process) in the carbon dioxide separation unit 3 is completed.

Note that, instead of pressure reduction and drawing carbon dioxide into the carbon dioxide separation unit 3 in the rinsing step (the above rinsing process), carbon dioxide may be supplied to the carbon dioxide separation unit 3 at about 1 atm after the sorption step. In this case, a pump can be installed in the pipe P41 or the pipe P42 as necessary. As a result, the retained gas can also be purged from the internal space 32 of the carbon dioxide separation unit 3 before the pressure reduction. Also in this case, the buffer tank 71 is useful because the pressure can be quickly reduced. However, in this case, since high purity carbon dioxide is stored in the buffer tank 71, the gas in the buffer tank 71 can also be recovered. Whether the rinsing step is performed after pressure reduction or before pressure reduction can be arbitrarily determined in consideration of characteristics of the absorbent, stable operation of the device, and the like.

In addition, since the purpose of the rinsing step is to remove the retained gas present in voids in the internal space of the carbon dioxide separation unit 3, an amount of carbon dioxide and steam sufficient to remove the retained gas can be passed. For example, an amount of carbon dioxide and steam of 0.1 to 10 times the column volume can be passed. In general, the more carbon dioxide and steam are passed, the less retained gas remains in the internal space 32, but since the loss of carbon dioxide increases, an appropriate amount is determined based on a target recovery amount and recovery purity. In addition, depending on the relationship between the carbon dioxide concentration of the supply gas and the carbon dioxide concentration of the gas used for rinsing, a part of the carbon dioxide may be sorbed by the absorbent, or a part of the carbon dioxide sorbed in the absorbent may be released.

Next, the processor 82 of the processing device 8 generates control signals for opening and closing valves, and transmits the control signals to each valve to perform opening and closing of each valve. Specifically, the processor 82 generates control signals for closing the valve V5 and the valve V51, and transmits the control signals. On the other hand, the processor 82 generates a control signal for opening the valve V52, and transmits the control signal. Thereafter, the valve V5 and the valve V51 are closed, and the valve V52 is opened. Here, regarding the other valves, their open/closed states are maintained. As a result, as illustrated in Fig. 5, a gas flow path leading to the steam supply unit 4, the carbon dioxide separation unit 3, and the carbon dioxide recovery unit 5 is formed.

In this state, since the pump 42 is continuously driven, supply water is supplied to the steam generator 41 through the pipe P43, the pump 42, and the pipe P44, and steam is continuously generated in the steam generator 41. In addition, since the pump 51 is continuously driven, the steam generated in the carbon dioxide separation unit 3 is continuously introduced. As a result, the partial pressure of carbon dioxide in the carbon dioxide separation unit 3 decreases, and carbon dioxide is released from the carbon dioxide separation material 33. Here, when carbon dioxide is released, the temperature of the carbon dioxide separation material 33 decreases due to reaction heat. Therefore, it is also conceivable that the carbon dioxide release performance of the carbon dioxide separation material 33 deteriorates. However, as the temperature decreases, the pressure of the steam becomes equal to or higher than the saturated water vapor pressure at the temperature of the carbon dioxide separation material 33 in at least a part of the inside of the carbon dioxide separation unit 3 (that is, in the vicinity of the carbon dioxide separation material 33), such that a part of the steam supplied from the steam supply unit 4 is sorbed or condensed in the carbon dioxide separation material 33. Therefore, when a part of the steam is condensed into water, latent heat of vaporization is supplied to the carbon dioxide separation material 33, and the temperature decrease described above is suppressed. That is, the reaction heat resulting from release of carbon dioxide and the latent heat of vaporization due to condensation of steam offset each other, such that the release performance of carbon dioxide of the carbon dioxide separation material 33 is maintained.

The released carbon dioxide and the steam are introduced into the heat exchanger 52 through the common pipe P2, the valve V3, the pipe P51, the pump 51, and the pipe P52 by pressure reduction by driving of the pump 51. As a result, by supplying steam to the carbon dioxide separation material 33 to reduce the partial pressure of carbon dioxide, and by sorbing or condensing the steam in the carbon dioxide separation material 33 to release carbon dioxide from the carbon dioxide separation material 33, a releasing step is completed.

At this time, the processor 82 of the processing device 8 generates a control signal for temperature control in the heat exchanger 52 in order to adjust a cooling temperature of the carbon dioxide, and transmits the control signal to the heat exchanger 52. For example, a pump for a refrigerant operates. As a result, when the carbon dioxide and the steam are introduced into the heat exchanger 52 of the carbon dioxide recovery unit 5, the carbon dioxide and the steam are cooled to a predetermined temperature by the heat exchanger 52 in order to remove the steam from the carbon dioxide.

The carbon dioxide and the steam cooled in the heat exchanger 52 are introduced into the gas-liquid separator 53 through the pipe P53. Here, a part of the moisture is removed in the gas-liquid separator 53. Therefore, the concentration of carbon dioxide in the gas passing through the gas-liquid separator 53 is increased. Then, the carbon dioxide that has passed through the gas-liquid separator 53 is introduced into the storage tank 54 through the pipe P54, the pipe P57, the valve V52, and the pipe P58. Therefore, high-concentration carbon dioxide (concentrated carbon dioxide) is stored in the storage tank 54. As a result, a recovery step of recovering the carbon dioxide released from the carbon dioxide separation material 33 while removing steam is completed. In the recovery step, the pressure of the carbon dioxide recovery path is a predetermined value equal to or lower than the saturated water vapor pressure at the operating temperature on the upstream side of the pump 51, and is an environmental pressure or a pressure equal to or higher than the environmental pressure on the downstream side of the pump 51.

The storage tank 54 can be filled with a higher concentration of carbon dioxide by repeating the relative humidity adjustment step, the sorption step, the releasing step, and the recovery step described above. That is, a high concentration of carbon dioxide is recovered downstream from the valve V53.

Note that, in the first embodiment, the gas recovery device 1 has been described on the premise that it is configured with the humidity adjustment unit 2, the carbon dioxide separation unit 3, the steam supply unit 4, the carbon dioxide recovery unit 5, the residual gas discharge unit 6, the retained gas recovery unit 7, and the processing device 8; however, as a device for recovering carbon dioxide, it may be configured with the carbon dioxide separation unit 3, the steam supply unit 4, the carbon dioxide recovery unit 5, and the processing device 8, and the humidity adjustment unit 2, the residual gas discharge unit 6, and the retained gas recovery unit 7 may be auxiliary functional units that can be additionally provided as needed.

<Second Embodiment>

3. Configuration of Gas Recovery Device 101 According to the Present Disclosure

In a second embodiment, an application example in which a carbon dioxide reduction device can be efficiently driven using the gas recovery device according to the first embodiment is described. Specifically, a configuration for utilizing recovered carbon dioxide and drainage generated in a treatment step for recovering the carbon dioxide is described. Here, Fig. 6 is a diagram illustrating a schematic configuration of a gas recovery device 101 according to the second embodiment of the present disclosure. Note that the same configurations and members as those in the first embodiment are denoted by the same reference numerals or the reference numerals are omitted, and the descriptions thereof are also omitted.

As illustrated in Fig. 6, one end of a supply pipe for carbon dioxide (carbon dioxide supply pipe) P101 is connected to the storage tank 54. In addition, a carbon dioxide reduction device 190 is connected to the other end of the supply pipe P101. As a result, the carbon dioxide stored in the storage tank 54 can be supplied to the carbon dioxide reduction device 190.

As illustrated in Fig. 6, the other end of a pipe (removed water supply pipe) P26 connected to the gas-liquid separator 22 of the humidity adjustment unit 2 is connected to the carbon dioxide reduction device 190. Similarly, the other end of a pipe (removed water supply pipe) P64 connected to the gas-liquid separator 62 of a residual gas discharge unit 6 is connected to the carbon dioxide reduction device 190. As a result, part of the drainage generated in the gas recovery device 1 can be supplied to the carbon dioxide reduction device 190.

Hereinafter, a description will be given assuming that the carbon dioxide reduction device 190 is a methane production device as a specific example. In methane production, methane is produced by reaction of methanation using carbon dioxide and water vapor supplied from the storage tank 54. More specifically, methane is produced by the following Reaction Formula (3).

$$CO_2 + 2H_2 \rightarrow CH_4 + O_2 \cdots \qquad (3)$$

Here, hydrogen is obtained by electrolysis of water as shown in Reaction Formula (4).

$$H_2O \rightarrow H_2 + 0.5O_2 \cdots \qquad (4)$$

That is, two molecules of water are required to produce one molecule of methane.

As described above, carbon dioxide and hydrogen before reaction utilize carbon dioxide and water vapor supplied from the storage tank 54. However, exhaust gas generated by burning methane (the supply gas supplied to the gas recovery device 101) is obtained by the following Reaction Formula (5).

$$CH_4 + 2O_2 \rightarrow CO_2 + 2H_2O \cdots \qquad (5)$$

As can be seen from Reaction Formula (5), only two molecules of water are produced even when one molecule of methane is burned. Therefore, when using recovered carbon dioxide with exhaust gas after combustion as supply gas, unless water contained in the supply gas is effectively utilized as much as possible, a large amount of water should be supplied from outside.

Therefore, in order to easily utilize, as the insufficient water, water removed from the residual gas or the supply gas (that is, water derived from exhaust gas after combustion), in the second embodiment, the pipe P26 connected to the gas-liquid separator 22 of the humidity adjustment unit 2 is connected to the carbon dioxide reduction device 190, and the pipe P64 connected to the gas-liquid separator 62 of the residual gas discharge unit 6 is connected to the carbon dioxide reduction device 190. As a result, methane production can be efficiently performed by utilizing drainage generated in the treatment step of carbon dioxide recovery. That is, the drainage obtained in the carbon dioxide recovery can be used for methanation to contribute to carbon neutralization of the gas.

Note that, in the second embodiment, the water condensed in the humidity adjustment unit 2 and the residual gas discharge unit 6 is supplied to the carbon dioxide reduction device 190, but the water may be supplied from either one of the humidity adjustment unit 2 and the residual gas discharge unit 6. In addition, instead of the humidity adjustment unit 2 and the residual gas discharge unit 6, a removed water supply pipe may be provided so as to supply condensed water in the gas-liquid separator 53 (that is, the carbon dioxide recovery unit 5) to the carbon dioxide reduction device 190. Naturally, in order to supply all of the water generated in the gas recovery device 101 to the carbon dioxide reduction device 190, the removed water supply pipe may be connected from the humidity adjustment unit 2, the residual gas discharge unit 6, and the carbon dioxide recovery unit 5 to the carbon dioxide reduction device 190.

In addition, the supply destination of the water is not limited to the carbon dioxide reduction device 190, and may be, for example, a water electrolysis device.

<Third Embodiment>

4. Configuration of Gas Recovery Device 201 According to the Present Disclosure

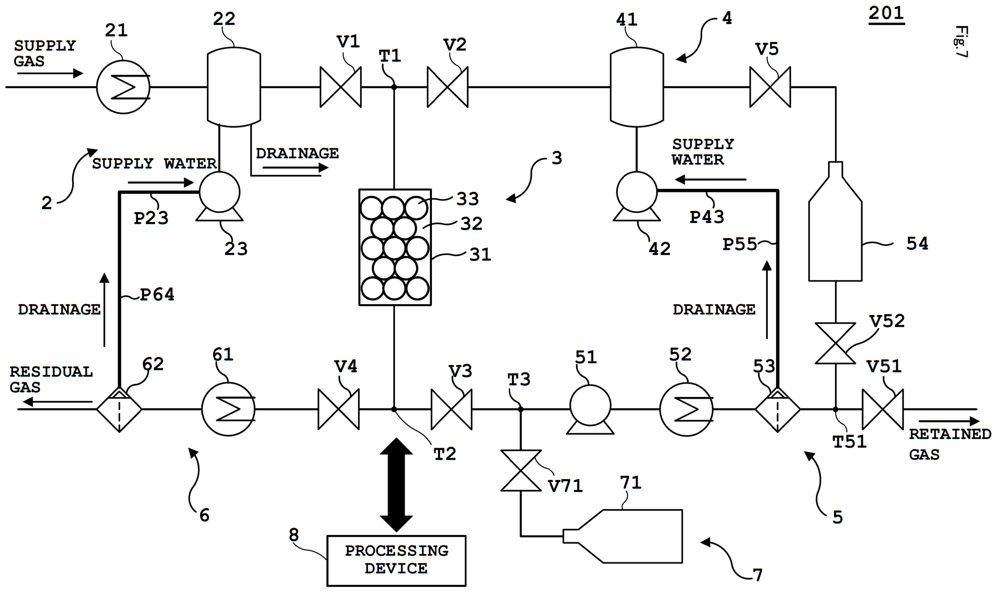

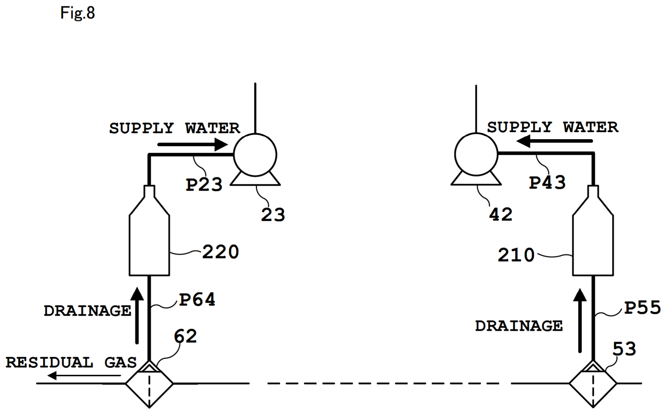

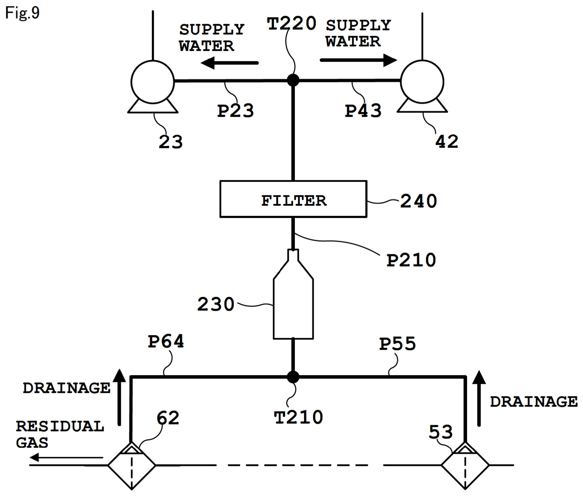

In the gas recovery device according to the first embodiment, drainage generated in the gas recovery device is discharged to the outside as it is. In a third embodiment, the drainage can be effectively used in the gas recovery device. Such a third embodiment will be described in detail with reference to Figs. 7 to 9. Here, Fig. 7 is a diagram illustrating a schematic configuration of a gas recovery device 201 according to the third embodiment of the present disclosure. In addition, Figs. 8 and 9 are diagrams illustrating a modification of the water circulation path of the gas recovery device 201 according to the third embodiment of the present disclosure. Note that the same configurations and members as those in the first embodiment are denoted by the same reference numerals or the reference numerals are omitted, and the descriptions thereof are also omitted.

First, as illustrated in Fig. 7, the other end of the pipe P64 connected to the gas-liquid separator 62 of the residual gas discharge unit 6 is connected to the introduction pipe P23 connected to the pump 23 of the humidity adjustment unit 2. As a result, the moisture removed in the gas-liquid separator 62 can be reused as supply water for the humidity adjustment unit 2, instead of being discharged to the outside as drainage. That is, a water circulation path (a second circulation path in the present disclosure) circulating through the humidity adjustment unit 2, the carbon dioxide separation unit 3, and the residual gas discharge unit 6 is formed by the pipe P64 and the introduction pipe P23, making it possible to effectively utilize the water.

Here, since the moisture removed by the gas-liquid separator 62 is removed from the residual gas, the moisture contains impurities derived from the supply gas. In addition, since the supply water used in the humidity adjustment unit 2 is used for the supply gas containing impurities, the supply water may contain impurities. That is, since purified water is not required to be used in the humidity adjustment unit 2, there is no problem in using drainage from the gas-liquid separator 62. However, of course, a cleaning step can also be added as necessary.

In addition, as illustrated in Fig. 7, the other end of the pipe P55 connected to the gas-liquid separator 53 of the carbon dioxide recovery unit 5 is connected to an introduction pipe P43 connected to the pump 42 of the steam supply unit 4. As a result, the moisture removed in the gas-liquid separator 53 can be reused as supply water for the steam supply unit 4, instead of being discharged to the outside as drainage. That is, a water circulation path (a first circulation path in the present disclosure) circulating through the steam supply unit 4, the carbon dioxide separation unit 3, and the carbon dioxide recovery unit 5 is formed by the pipe P55 and the introduction pipe P43. The first circulation path delivers the steam removed in the carbon dioxide recovery unit 5 or water condensed from the steam to the steam supply unit 4. This makes it possible to effectively utilize water.

Here, the moisture removed in the gas-liquid separator 53 hardly comes into contact with the gas derived from the supply gas, and therefore contains no impurities and is relatively high-purity water. In addition, since the supply water used in the steam supply unit 4 is used for recovery of carbon dioxide, it is preferable that the supply water contain no impurities. That is, although it is preferable to use purified water in the steam supply unit 4, the moisture removed in the gas-liquid separator 53 is purified water, and therefore can be easily reused. However, of course, by adding a cleaning step as necessary, further impurities can also be removed.

In the case illustrated in Fig. 7, drainage is not simply reused, but the drainage to be reused is determined according to the required purity of water, and the pipes are configured so that the drainage can be supplied. As a result, water reuse in the gas recovery device 201 can be performed very efficiently.

Next, as illustrated in Fig. 8, a water storage tank 210 may be provided between the pipe P55 and the introduction pipe P43 constituting the first circulation path. Accordingly, even when water is not supplied from the pump 42 to the steam generator 41, drainage in the gas-liquid separator 53 can be stored, and effective utilization of the drainage is enabled. Similarly, a water storage tank 220 may be provided between the pipe P64 and the introduction pipe P23 constituting the second circulation path. Accordingly, even when water is not supplied from the pump 23 to the gas-liquid separator 22, drainage in the gas-liquid separator 62 can be stored, and effective utilization of water is enabled. In particular, the amount of drainage generated in the gas-liquid separator 53 and the gas-liquid separator 62 may be calculated in advance, and dimensions of the water storage tank 210 and the water storage tank 220 may be determined.

In addition, as illustrated in Fig. 9, the pipe P55 and the pipe P64 may be connected to one end (upstream side) of a common pipe P210 at a connection point T210. Furthermore, a water storage tank 230 and a filter 240 functioning as a cleaning unit configured to remove substances other than water are provided in the common pipe P210. Furthermore, the other end (downstream side) of the common pipe P210 branches into the introduction pipe P23 and the introduction pipe P43 at a branch point T220. In other words, the common pipe P210 as a common circulation path that connects the pipe P55 constituting the first circulation path and the pipe P64 constituting the second circulation path is provided, and the water storage tank 230 and the filter 240 are disposed on the common circulation path. The second circulation path delivers the steam removed in the residual gas discharge unit 6 or water condensed from the steam to the humidity adjustment unit 2 or the steam supply unit 4.

In such a configuration, water stored in the water storage tank 230 contains impurities because it includes moisture removed in the gas-liquid separator 62. However, since the impurities are removed by the filter 240 provided on the downstream side of the water storage tank 230, water can also be supplied to the steam supply unit 4 where use of purified water is suitable. In this case, the drainage can be shared, and even when the amount of drainage in either one is small, it becomes possible to stably supply water to the humidity adjustment unit 2 and the steam supply unit 4.

Note that, in the third embodiment, the filter 240 is used to purify water, but as long as purification of water (removal of substances other than water) is possible, another member or device may be used. For example, a configuration that enables purification of water may be adopted by performing precipitation treatment, filtration treatment using sand, adsorption treatment using activated carbon or the like, cleaning using chemicals, treatment using an acid or a base, reduction, sterilization using UV or the like, or ion exchange operation.

In addition, the configuration of the third embodiment may also be adopted in the second embodiment. In addition, in the present third embodiment, although reuse of water is described, based on the same concept, heat recovered in the heat exchanger 21, the heat exchanger 52, and the heat exchanger 61 may be utilized as a heat source in another heat exchanger or as a heat source of the steam generator 41.

In addition, the moisture removed in the gas-liquid separator 53 or the gas-liquid separator 62 can also be used for other devices or applications that require water. Examples thereof include a water electrolysis device for methane production, a water reduction reaction process, a reduction device using a photocatalyst, utilization for photosynthesis of plants, and utilization for drinking water.

Naturally, any one of the water circulation paths described above may be provided alone. In this case, a common pipe P210 constituting a common circulation path is unnecessary.

Further, the water circulation path is not limited to the contents described above. For example, a circulation path in which water condensed from steam in the steam supply unit 4 is delivered to the steam supply unit 4 may be provided. Alternatively, a circulation path configured to deliver the steam removed in the humidity adjustment unit 2 or water condensed from the steam to the steam supply unit 4 may be provided. The medium circulating through the circulation path is not limited to water and may be steam. That is, it is sufficient that a circulation path, in which steam removed upstream or downstream of the carbon dioxide separation unit 3, or water condensed from the steam, is delivered to the upstream of the carbon dioxide separation unit 3, is formed. In other words, the steam or condensed water generated in each unit may be appropriately supplied to another unit requiring the steam or water. Note that, in a case where steam is circulated instead of water, a membrane that preferentially allows steam to pass as compared with carbon dioxide or another gas may be provided in the circulation path instead of the filter 240.

<Fourth Embodiment>

5. Configuration of Gas Recovery Device 301 According to the Present Disclosure

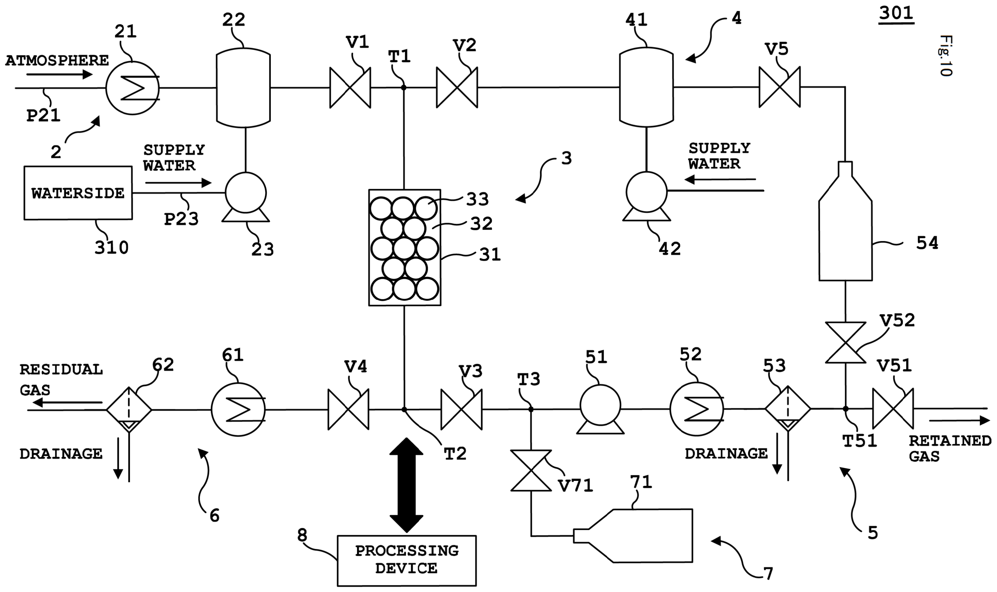

In a fourth embodiment, an application example in which the gas recovery device according to the first embodiment is applied to efficiently recover carbon dioxide from the atmosphere (air) is described. Specifically, in the fourth embodiment, a form, in which the atmosphere, which does not contain much moisture as in exhaust gas, is supplied, and a large amount of water is used for supplying supply water to the humidity adjustment unit 2, is described. Here, Fig. 10 is a diagram illustrating a schematic configuration of a gas recovery device 301 according to the fourth embodiment of the present disclosure. Note that the same configurations and members as those in the first embodiment are denoted by the same reference numerals or the reference numerals are omitted, and the descriptions thereof are also omitted.

As illustrated in Fig. 10, in the gas recovery device 301, the atmosphere is used as supply gas, and the atmosphere is supplied to the heat exchanger 21 through the introduction pipe P21. In addition, the supply water is supplied to the gas-liquid separator 22 of the humidity adjustment unit 2 by driving the pump 23, and a waterside 310 is used as a water source of the supply water. That is, the waterside 310 is connected to one end (inlet) of the introduction pipe P23 connected to the pump 23. Here, the waterside is a place where water exists in large quantities, such as the sea, a lake, a river, a pond, and a marsh, and may also be a water source in which rainwater or the like is stored. In addition, tap water or industrial water may also be used as supply water, and in this case, water storage facilities for tap water or industrial water (for example, dams, tanks, and the like) are also included in the waterside.

Here, although the amount of moisture in the atmosphere is also affected by weather conditions and the like, the atmosphere does not always contain a large amount of moisture, and therefore, in order to recover carbon dioxide from the atmosphere, humidification of the atmosphere is significantly important. Since the concentration of carbon dioxide in the atmosphere is about 0.04%, in order to obtain 1 L (liter) of carbon dioxide, it is necessary to process about 2,500 L or more of air. For this reason, when an attempt is made to obtain supply water from ordinary tap water, the heating cost for latent heat of evaporation and the cost of using water become enormous, and it is not practical. Accordingly, in the fourth embodiment, in the case where the supply gas is the atmosphere, in consideration of the advantage that the supply gas can be obtained from any place on the earth, the gas recovery device 301 itself is installed near a waterside such as the sea so that supply water can be easily obtained.

In addition, in the fourth embodiment, it can also be said that the following advantages are obtained. Normally, since latent heat of evaporation is required when water is turned into water vapor, in order to perform humidification, it is necessary to supply not only water but also heat. Therefore, when heat is not supplied, the humidification efficiency decreases due to a drop in water temperature. However, since an enormous amount of water exists in the waterside such as the sea, it is only necessary to change the water used for humidification, and it is not necessary to supply heat. Therefore, the gas recovery device 301 of the fourth embodiment exhibits an important effect in that not only water can be easily supplied but also heat for humidification becomes unnecessary.

Note that the connection to the waterside via a water supply path is not limited to the humidity adjustment unit 2, and the steam supply unit 4 may also be connected to the waterside via the water supply path.

Naturally, the configuration in the fourth embodiment may be adopted in the second embodiment or the third embodiment, or in a combined form of the second embodiment and the third embodiment.

<Fifth Embodiment>

6. Configuration of Gas Recovery Device 401 According to the Present Disclosure

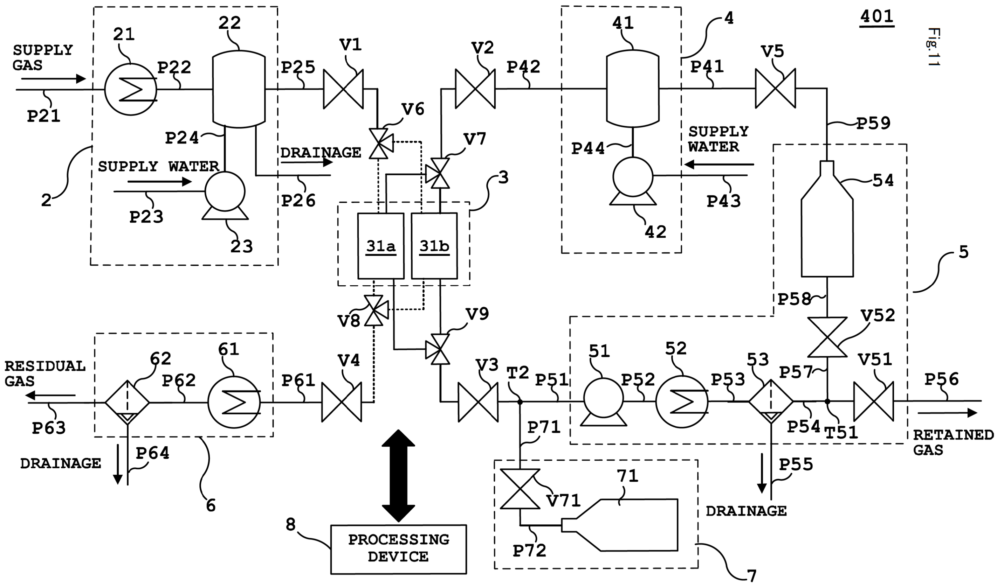

In the embodiment described above, since it is a single-column gas recovery device, sorption and release of carbon dioxide in the carbon dioxide separation unit 3 are alternately performed. However, the carbon dioxide separation unit 3 may be divided into a plurality of units so as to form a multi-column gas recovery device in which sorption and release of carbon dioxide are continuously performed. Hereinafter, as an example of a multi-column type, a two-column gas recovery device 401 will be described as a fifth embodiment. Here, Fig. 11 is a diagram illustrating a schematic configuration of a gas recovery device 401 according to the fifth embodiment of the present disclosure. Note that the same configurations and members as those in the first embodiment are denoted by the same reference numerals or the reference numerals are omitted, and the descriptions thereof are also omitted.

As illustrated in Fig. 11, the carbon dioxide separation unit 3 of the gas recovery device 401 includes two housings 31a and 31b. In addition, the housing 31a and the housing 31b are filled with a carbon dioxide separation material 33 (see Fig. 1 and the like). Therefore, in the carbon dioxide separation unit 3, sorption and release of carbon dioxide on the housing 31a side and sorption and release of carbon dioxide on the housing 31b side can be independently and separately performed.

In addition, as illustrated in Fig. 11, an input end of a three-way valve V6 is connected to the downstream side of the valve V1, and the housing 31a or the housing 31b is connected to the two output ends of the three-way valve V6. Similarly, an input end of a three-way valve V7 is connected to the downstream side of the valve V2, and the housing 31a or the housing 31b is connected to the two output ends of the three-way valve V7.

Further, as illustrated in Fig. 11, an output end of a three-way valve V8 is connected to the upstream side of the valve V4, and the housing 31a or the housing 31b is connected to the two input ends of the three-way valve V8. Similarly, an output end of a three-way valve V9 is connected to the upstream side of the valve V3, and the housing 31a or the housing 31b is connected to two input ends of the three-way valve V9.

The processor 82 of the processing device 8 controls the three-way valves V6 to V9 so that sorption and release of carbon dioxide are continuously performed in the carbon dioxide separation unit 3. For example, the processor 82 of the processing device 8 controls the valves so that, among the two output ends of the three-way valve V6, only the one connected to the housing 31a is opened, and among the two input ends of the three-way valve V8, only the one connected to the housing 31a is opened. At the same time, the processor 82 of the processing device 8 controls the valves so that, among the two output ends of the three-way valve V7, only the one connected to the housing 31b is opened, and among the two input ends of the three-way valve V9, only the one connected to the housing 31b is opened. As a result, a passage route for the supply gas and the residual gas is formed via the valve V1, the three-way valve V6, the housing 31a, the three-way valve V8, and the valve V4, and a sorption step of carbon dioxide is executed. In addition, at the same time as the sorption step, a passage route for steam and carbon dioxide is formed via the valve V2, the three-way valve V7, the housing 31b, the three-way valve V9, and the valve V3, and a releasing step of carbon dioxide is also executed.

Then, at a predetermined timing when sorption of carbon dioxide on the housing 31a side and release of carbon dioxide on the housing 31b side are completed, the processor 82 of the processing device 8 again performs control of the three-way valves V6 to V9. Specifically, the processor 82 of the processing device 8 controls the operation so that release of carbon dioxide on the housing 31a side and sorption of carbon dioxide on the housing 31b side are performed. That is, the processor 82 of the processing device 8 controls the valves so that, among the two output ends of the three-way valve V6, only the one connected to the housing 31b is opened, and among the two input ends of the three-way valve V8, only the one connected to the housing 31b is opened. At the same time, the processor 82 of the processing device 8 controls the valves so that, among the two output ends of the three-way valve V7, only the one connected to the housing 31a is opened, and among the two input ends of the three-way valve V9, only the one connected to the housing 31a is opened. As a result, a passage route for the supply gas and the residual gas is formed via the valve V1, the three-way valve V6, the housing 31b, the three-way valve V8, and the valve V4, and a sorption step of carbon dioxide is executed. In addition, at the same time as the sorption step, a passage route for steam and carbon dioxide is formed via the valve V2, the three-way valve V7, the housing 31a, the three-way valve V9, and the valve V3, and a releasing step of carbon dioxide is also executed.

As described above, in the gas recovery device 401 of the fifth embodiment, sorption and release of carbon dioxide can be continuously performed, and recovery of carbon dioxide is thereby continuously performed. Therefore, in the gas recovery device 401 of the fifth embodiment, the recovery efficiency of carbon dioxide is improved. Note that also in a gas recovery device with three or more columns, the opening and closing timings of the three-way valves are controlled so that sorption and release of carbon dioxide are continuously performed in one of the housings of the carbon dioxide separation unit 3.

<Sixth Embodiment>

7. Configuration of Gas Recovery Device 501 According to the Present Disclosure

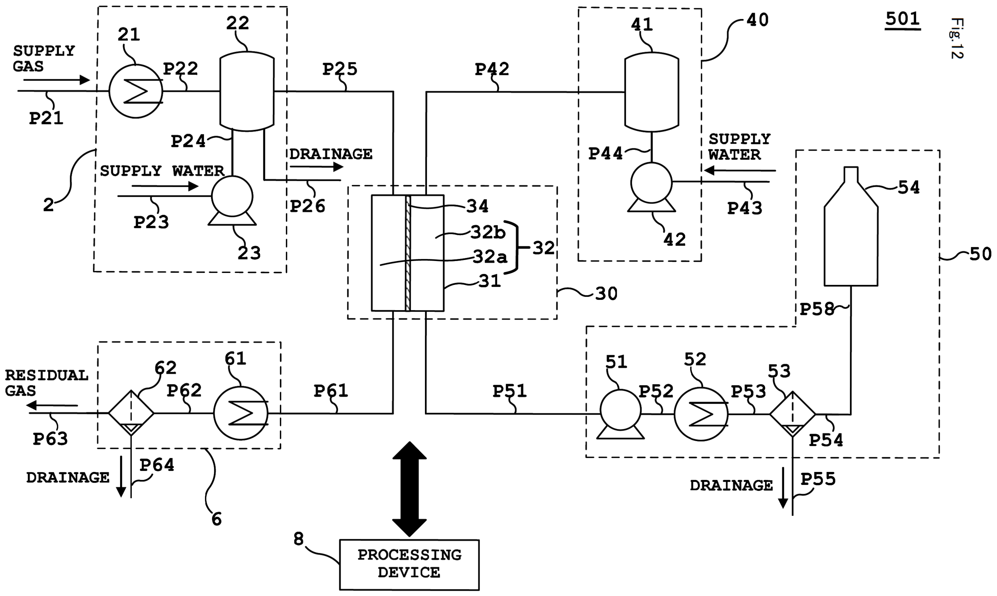

In the first to fifth embodiments described above, the carbon dioxide separation material 33 composed of a solid sorbent is used as the carbon dioxide separator in the carbon dioxide separation unit 3, but a structure in which a carbon dioxide separation membrane that selectively permeates carbon dioxide is used in addition to the solid sorbent may be adopted. Hereinafter, a gas recovery device 501 using the carbon dioxide separation membrane will be described as a sixth embodiment. Here, Fig. 12 is a diagram illustrating a schematic configuration of a gas recovery device 501 according to the sixth embodiment of the present disclosure. Note that the gas recovery device 501 of the sixth embodiment has a structure in which a carbon dioxide separation membrane is employed in the gas recovery device 1 of the first embodiment, and therefore, the same reference numerals are given to the same components and members as those of the first embodiment, or the numerals are omitted, and the descriptions thereof are also omitted. In addition, the structure employing the carbon dioxide separation membrane is not limited to the case of the first embodiment, but can of course also be applied to the second to fifth embodiments and to combinations of the respective embodiments.

As illustrated in Fig. 12, the gas recovery device 501 is broadly composed of a humidity adjustment unit 2, a carbon dioxide separation unit 30, a steam supply unit 40, a carbon dioxide recovery unit 50, a residual gas discharge unit 6, and a processing device 8. That is, as compared with the first embodiment, the retained gas recovery unit 7 is not provided. In addition, in the gas recovery device 1 of the first embodiment, valves were provided between the respective units, whereas in the gas recovery device 501, no valves are provided. That is, in the gas recovery device 501, the operation such as alternately repeating the sorption step and the releasing step as in the gas recovery device 1 is not performed, and the operation of separating and recovering carbon dioxide from the supply gas is performed continuously. In particular, in the gas recovery device 501, supply gas containing carbon dioxide is supplied to the carbon dioxide separation unit 30 via the humidity adjustment unit 2, and carbon dioxide selectively permeates the membrane. On the other hand, steam is supplied to the carbon dioxide separation unit 30, and the partial pressure of the permeated carbon dioxide decreases. Then, by utilizing the partial pressure difference resulting from the above partial pressure reduction, carbon dioxide is further separated from the supply gas, and the carbon dioxide is concentrated and recovered in the carbon dioxide recovery unit 50.

As a more specific connection configuration, as illustrated in Fig. 12, one end (downstream side) of the humidity adjustment unit 2 is connected to one end (upstream side) of the carbon dioxide separation unit 30 through the pipe P25. In addition, one end (downstream side) of the steam supply unit 40 is connected to one end (upstream side) of the carbon dioxide separation unit 30 through the pipe P42. More specifically, the pipe P25 is connected to a first internal space 32a of the carbon dioxide separation unit 30, which will be described below, and the pipe P42 is connected to a second internal space 32b of the carbon dioxide separation unit 30, which will be described below. That is, compared with the first embodiment, the humidity adjustment unit 2 and the steam supply unit 40 are independently connected to different positions of the carbon dioxide separation unit 30 through separate pipes.

As illustrated in Fig. 12, the other end (downstream side) of the carbon dioxide separation unit 30 is connected to one end (upstream side) of the carbon dioxide recovery unit 50 through the pipe P51, and is also connected to one end (upstream side) of the residual gas discharge unit 6 through the pipe P61. More specifically, the pipe P61 is connected to the first internal space 32a of the carbon dioxide separation unit 30, which will be described below, and the pipe P51 is connected to the second internal space 32b of the carbon dioxide separation unit 30, which will be described below. That is, compared with the first embodiment, the carbon dioxide separation unit 30 is independently connected to the carbon dioxide recovery unit 50 and the residual gas discharge unit 6 through separate pipes.

(Carbon Dioxide Separation Unit 30)

The carbon dioxide separation unit 30 is constituted by, for example, a substantially cylindrical housing 31 and a carbon dioxide separation membrane 34 disposed in the internal space 32 of the housing 31, and is a modularized device. That is, in the carbon dioxide separation unit 30, the carbon dioxide separation membrane 34 is used as a carbon dioxide separator. Then, the internal space 32 of the housing 31 is divided by the carbon dioxide separation membrane 34 into two internal spaces (the first internal space 32a and the second internal space 32b). Alternatively, in the internal space 32 of the housing 31, the carbon dioxide separation membranes 34 as flat membranes may be laminated so that the space through which the supply gas flows and the space through which the reduced-pressure steam flows are alternately arranged. Here, the carbon dioxide separation membrane 34 is fixed to the inner wall of the housing 31 by a retaining member such as an O-ring, but the fixing method is not limited thereto, and a fixing method using an adhesive or another mechanical fixing method may also be used.

The carbon dioxide separation membrane 34 includes a membrane that selectively permeates carbon dioxide on the surface of a porous body, and has, for example, a structure in which gelling polymer particles, which will be described below, are applied. That is, in the carbon dioxide separation membrane 34, the pores on the two opposing surfaces of the porous body are blocked by the gelling polymer particles. In other words, the carbon dioxide separation membrane 34 has a three-layer structure in which gelling polymer particles, a porous body, and gelling polymer particles are sequentially laminated. Hereinafter, the porous body and gelling polymer particles constituting the carbon dioxide separation membrane 34 will be described.

The porous body constituting the carbon dioxide separation membrane 34 is a solid having a large number of micropores therein, at least some of which open to the surface of the carbon dioxide separation membrane 34. Among the pores of the porous body, the pores that open to the surface of the carbon dioxide separation membrane 34 are referred to as "surface micropores", and the inner diameter of the openings of the surface micropores on the surface of the carbon dioxide separation membrane 34 is referred to as the "opening diameter". It is desirable that the surface micropores on one surface form continuous pores as much as possible with the internal pores and the surface micropores on the other surface, such that carbon dioxide can freely permeate.

The material of the porous body is not particularly limited, but is preferably a resin. Specific examples thereof include polyethersulfone (PES), polyvinylidene fluoride (PVDF), polytetrafluoroethylene (PTFE), cellulose mixed ester or nitrocellulose (NC), polyolefin, polyethylene, polypropylene, polymethylpentene, polyketone, polyimide, polystyrene, polymethyl methacrylate, polydimethylsiloxane, polyester, and nylon. These materials have excellent mechanical strength and heat resistance, and can preferably be used as the porous body.

The porous body preferably has hydrophilic groups such as OH groups or COOH groups on its surface. As a result, the contact between the gelling polymer particles, which will be described below, and the porous body is improved, and a membrane containing the gelling polymer particles can be uniformly formed on the surface of the porous body. These hydrophilic groups only need to be present on at least the surface of the porous body that carries the gelling polymer particles (the region where the gelling polymer particles block the surface micropores of the porous body), and the hydrophilic groups may be present over the entire surface of the porous body or only on the surface that carries the gelling polymer particles. In addition, these hydrophilic groups may be introduced into the porous body by using a resin having hydrophilic groups as the material, or may be introduced by performing a hydrophilization treatment on the porous body. Examples of the hydrophilization treatment include plasma treatment, ozone treatment, treatment with a strong acid, treatment with a strong base, and treatment with an oxidizing agent.

An intermediate layer may be provided on the surface of the porous body. As a result, the gelling polymer particles can be stably fixed on the porous body. As the material of the intermediate layer, polydimethylsiloxane, porous silica fine particles, fumed silica, and zeolite fine particles can preferably be used. These materials have the function of fixing the gelling polymer particles to the surface of the porous body, and these materials also have relatively excellent permeability to carbon dioxide; accordingly, they can exhibit the function of fixing the particles without impairing the permeability or selective permeability of the carbon dioxide separation membrane 34. In addition, the surface area of the single-phase membrane can also be increased by providing irregularities on the intermediate layer and applying gelling polymer particles thereon.

The opening diameter of the surface micropores of the porous body is preferably less than 2 $\mu$m, more preferably less than 0.5 $\mu$m, still more preferably less than 0.22 $\mu$m, and even more preferably less than 0.15 $\mu$m. In addition, the opening diameter of the surface micropores of the porous support is preferably 0.01 $\mu$m or more. The maximum pore diameter of the porous support is preferably less than 3 $\mu$m. The "opening diameter of the surface micropores" may be a pore diameter measured as the maximum particle size that can pass through the entire supporting membrane, and the "maximum pore diameter" may be a maximum value of the pore diameter measured by a scanning electron microscope. It is desirable that the number of micropores on the surface of the porous body and the area occupied by the pores per surface area of the membrane are large. In addition, it is desirable that the micropores in the porous body are continuous as much as possible, and it is desirable that the maximum volume is large. As a result, the permeation flux of carbon dioxide can be improved.

The outer shape of the porous body is preferably plate-shaped or cylindrical, and is preferably provided with a first surface and a second surface that are substantially parallel to each other. More preferably, the surface micropores on the first surface are blocked with the gelling polymer particles, and the surface micropores on the second surface are not blocked with the gelling polymer particles. The dimensions of the porous body can be appropriately selected depending on the application, and may be selected, for example, according to the amount of supply gas to be processed.

The carbon dioxide separation membrane 34 includes gelling polymer particles having at least one of a basic functional group and an acidic functional group, and has a thickness of less than 5 $\mu$m. With such a configuration, the carbon dioxide separation membrane 34 can selectively permeate carbon dioxide with a large permeation flux. Here, in the sixth embodiment, the carbon dioxide separation membrane 34 is assumed to be a three-layer membrane including gelling polymer particles having at least one of a basic functional group or an acidic functional group, but is not limited thereto. For example, a multilayer membrane of three or more layers formed by repeating the steps of applying and drying a suspension containing gelling polymer particles, and then again applying and drying a suspension containing gelling polymer particles, may be used.

The carbon dioxide separation membrane 34 may include only one kind or two or more kinds of gelling polymer particles. When the carbon dioxide separation membrane 34 includes two or more types of gelling polymer particles, one type is preferably gelling polymer particles having a basic functional group, and another type is preferably gelling polymer particles having an acidic functional group.

The gelling polymer particles have at least one of a basic functional group and an acidic functional group.

Representative gelling polymer particles are polymer compound particles having an amino group, an ammonium group, or an imidazolium group and having gelling properties, but it is desirable that they have an amino group in particular.

Polymer compound particles having an amino group are particles composed of a polymer compound having an amino group, and are preferably composed only of a polymer compound having an amino group, but may also contain materials used in preparing the particles, such as components for particle size adjustment such as a surfactant, a polymer of a (meth)acrylamide derivative, a crosslinking agent, or an unreacted monomer.

The polymer compound having an amino group is not particularly limited, and examples thereof include a (meth) acrylamide-based polymer and a derivative thereof, polyethyleneimine and a derivative thereof, polyvinylamine and a derivative thereof, polyvinyl alcohol and a derivative thereof, and polyallylamine and a derivative thereof. It may be polystyrene into which an amino group is introduced, or may be a polysaccharide such as cellulose or dextrin into which an amino group is introduced. Examples of specific constituent monomers include N,N-dimethylaminopropyl methacrylamide, N,N-diethylaminopropyl methacrylamide, N,N-dimethylaminoethyl methacrylamide, N,N-diethylaminoethyl methacrylamide, N,N-dimethylaminopropyl methacrylate, N,N-diethylaminopropyl methacrylate, N,N-dimethylaminoethyl methacrylate, N,N-diethylaminoethyl methacrylate, N,N-dimethylaminopropyl acrylamide, N,N-diethylaminopropyl acrylamide, N,N-dimethylaminoethyl acrylamide, N,N-diethylaminoethyl acrylamide, 3-aminopropyl methacrylamide hydrochloride, 3-aminopropyl acrylamide hydrochloride, N,N-dimethylaminopropyl acrylate, N,N-diethylaminopropyl acrylate, N,N-dimethylaminoethyl acrylate, N,N-diethylaminoethyl acrylate, 3-aminopropyl methacrylate hydrochloride, 3-aminopropyl acrylate hydrochloride, N-(2,2,6,6-tetramethylpiperidin-4-yl) methacrylamide, N-(2,2,6,6-tetramethylpiperidin-4-yl) acrylamide, methacrylic acid 2,2,6,6-tetramethyl-4-piperidyl, and acrylic acid 2,2,6,6-tetramethyl-4-piperidyl, and it is preferably an acrylamide-based polymer.

The amino group of the polymer compound having an amino group may be a primary amino group, a secondary amino group, or a tertiary amino group, but it is preferably designed so that the acid dissociation constant of the conjugate acid is predetermined. In particular, in order to dissolve carbon dioxide, it is preferably that the acid dissociation constant of the amino group is equal to or greater than that of carbonic acid. Among them, a secondary amino group or a tertiary amino group is preferable, and a tertiary amino group is more preferable. A dialkylamino group such as a dimethylamino group is more preferable. In addition, the amino group of the polymer compound may be bonded to the main chain or may be bonded to the side chain, but is preferably bonded to the side chain.

In addition, the polymer compound having an amino group preferably has a hydrophobic group. Examples of the hydrophobic group to be introduced into the polymer compound include hydrocarbon groups represented by $C_XH_{2X}$ or $C_XH_{ZX+1}$, and a methyl group, an ethyl group, a propyl group, an isopropyl group, a butyl group, an isobutyl group, a tert-butyl group, a pentyl group, a cyclopentyl group, an isopentyl group, a hexyl group, a cyclohexyl group, and the like are preferable. Among them, an isobutyl group and a tert-butyl group are more preferable. Alternatively, a hydrophobic group may also be one in which a hydroxyl group is bound to the hydrocarbon group, such as a hydroxyethyl group, a hydroxypropyl group, or a hydroxybutyl group. The polymer compound having an amino group preferably has a polymer density in the particles in the dispersed state after swelling the polymer compound particles in water of 0.3 to 80%, and more preferably of 1 to 60%.

The polymer compound particles having an amino group can be prepared using a solution containing a monomer component (hereinafter, referred to as a "particle preparation solution"). In the present specification, the "monomer component" refers to all monomers used for the synthesis of the polymer of the polymer compound particles having an amino group. The method for producing the polymer compound particles is not particularly limited, and known methods such as a precipitation polymerization method, a pseudo-precipitation polymerization method, an emulsion polymerization method, a dispersion polymerization method, a suspension polymerization method, and a seed polymerization method can be used.

The monomer components used for preparing the particles include at least a monomer having an amino group, and preferably include both a monomer having an amino group and a monomer without an amino group. That is, the polymer compound having an amino group may be a homopolymer or copolymer of a monomer having an amino group, or may be a copolymer of a monomer having an amino group and a monomer without an amino group. As a result, by controlling the ratio of these monomers, the density of amino groups in the polymer compound particles is adjusted to an appropriate range. The monomer having an amino group and, if necessary, the monomer without an amino group are preferably substituted (meth)acrylamide monomers, and more preferably substituted acrylamide monomers.

The description of the amino group of the monomer having an amino group and its preferred range can refer to the description of the amino group of the polymer compound having an amino group and its preferred range. The number of amino groups of the monomer is not particularly limited, and may be one or two or more. When the monomer has two or more amino groups, the amino groups may be the same as or different from each other. The monomer having an amino group is not particularly limited, and examples thereof include N-(aminoalkyl)acrylamide and N-(aminoalkyl)methacrylamide, and it is preferably N-(aminoalkyl)acrylamide.

The monomer components preferably include a monomer having a hydrophobic group together with a monomer having an amino group. The description of the hydrophobic group of the monomer having a hydrophobic group and its preferred range can refer to the description of the hydrophobic group applicable to the polymer compound having an amino group and its preferred range. The hydrophobic group is preferably present in the side chain. The monomer having a hydrophobic group may further have an amino group or may not have an amino group.

Examples of the monomer having a hydrophobic group include, but are not particularly limited to, N-alkylacrylamide, N-alkylmethacrylamide, N-alkylacrylate, N-alkylmethacrylate, N,N-dialkylacrylamide, N-(hydroxyalkyl)methacrylamide, N,N-dialkylacrylate, N-(hydroxyalkyl)methacrylate, N,N-dialkylmethacrylamide, N-(hydroxyalkyl)acrylamide, N,N-dialkylmethacrylate, and N-(hydroxyalkyl)acrylate, and it is preferably N-alkylacrylamide. Examples of a preferred combination of a monomer having an amino group and a monomer having a hydrophobic group include the combination of N-(aminoalkyl)(meth)acrylamide and N-alkyl(meth)acrylamide, and a combination of N-(aminoalkyl)methacrylamide and N-alkylacrylamide is preferable. Particles composed of a copolymer of N-(aminoalkyl)(meth)acrylamide and N-alkyl(meth)acrylamide have hydrophobic alkyl groups and hydrogen-bonding amides uniformly distributed in a well-balanced manner within the molecules.

The proportion of the monomer having an amino group in the monomer components is preferably 1 to 95 mol%, more preferably 5 to 95 mol%, and still more preferably 30 to 60 mol%, with respect to the total number of moles of the monomer components. In addition, when the monomer components include a monomer having a hydrophobic group, the molar ratio of the monomer having an amino group to the monomer having a hydrophobic group is preferably 95:5 to 5:95, and more preferably 2:1 to 1:2. Note that a monomer having both an amino group and a hydrophobic group is classified as a monomer having an amino group.

The particle preparation solution may contain only the monomer components, or may contain other components. Examples of the other components include a surfactant, a crosslinking agent, a polymerization initiator, and a pKa adjuster. The particle diameter of the obtained polymer compound particles is controlled by adjusting the type and concentration of the surfactant added to the particle preparation solution. In addition, by using a crosslinking agent, a crosslinked structure is formed in the polymer compound within the particles, and the swellability of the particles is controlled so as not to excessively swell. In addition, when a relatively large amount of a crosslinking agent is used or when the monomer concentration during polymerization is set relatively high, a crosslinked structure is formed also between the particles. As a result, a relatively large continuous void structure can be formed between the composite particles connected by the crosslinked structure. In addition, the pKa adjuster is for adjusting the pKa of the obtained polymer compound particles to a desired value, and as a result, the type of gas or liquid that selectively permeates through the carbon dioxide separation membrane 34, the permeation flux, and the selectivity relative to other mixed components are controlled. As the surfactant, a cationic surfactant such as cetyltrimethylammonium bromide can be used. The crosslinking agent only needs to be capable of forming a crosslinked structure between the monomers to be used, and N,N'-alkylenebisacrylamide can preferably be used. The number of carbon atoms in the alkylene group of N,N'-alkylenebisacrylamide is not particularly limited, and is preferably 1 to 12, more preferably 1 to 4, and still more preferably 1 to 2. Instead of the alkylene group, the crosslinking agent may be a crosslinking agent in which oligoethyleneimine or oligoethylene glycol functions as a crosslinking chain.

As the pKa adjuster, a substance capable of protonating or deprotonating an amino group of the monomer can be used, and an acid such as hydrochloric acid or a base such as sodium hydroxide can be used with an appropriately adjusted concentration according to a desired pKa. In addition, since the PKa of the polymer compound particles can also be controlled by the degree of crosslinking by the crosslinking agent, the crosslinking agent may also be used concurrently as a PKa adjuster.

The solvent of the particle preparation solution is not particularly limited, and examples thereof include polar solvents such as water, methanol, ethanol, isopropanol, acetonitrile, N,N-dimethylformamide, and dimethyl sulfoxide, and the solvent may be a mixed solvent obtained by combining two or more of these polar solvents. Among them, it is preferable to use water or a mixed solvent obtained by mixing water and another polar solvent. The polymer compound particles having an amino group may be gel particles swollen with a liquid, or may be dried particles (solid particles). In the gel particles, since carbon dioxide is more efficiently dissolved in the liquid contained in the gel particles, the amino groups inside the gel particles are also able to efficiently contribute to the absorption of carbon dioxide.

The gelling polymer particles used in the sixth embodiment may be gelling polymer particles having an acidic functional group in addition to gelling polymer particles having a basic functional group such as an amino group, or may be gelling polymer particles having both a basic functional group and an acidic functional group. Examples of the acidic functional group include a carboxyl group and a sulfate group, and a carboxyl group is preferable. Examples of the polymer compound having a carboxyl group include polymer compounds containing acrylic acid or methacrylic acid as constituent monomers. The gelling polymer particles having an acidic functional group are preferably composed only of a polymer compound having an acidic functional group, but may also contain other components.

The gelling polymer compound particles (gelling polymer particles) used in the sixth embodiment preferably have a particle diameter of 5nm to 10μm in the dry state, and more preferably 5nm to 500nm. The hydrodynamic particle diameter of the polymer compound particles, after being swollen in water, is preferably in a range of 10nm to several tens of μm, as measured by dynamic light scattering in water, more preferably 10nm to 50μm, still more preferably 20nm to 2μm, and most preferably 90nm to 1μm. The "particle diameter after being swollen in water" of the polymer compound particles refers to the particle diameter measured after immersing the dried polymer compound particles in water at 30°C for 24hours, and refers to the average particle diameter measured by a dynamic light scattering method.

The liquid contained in the gel particles is not particularly limited, and examples thereof include polar solvents such as water, methanol, ethanol, isopropanol, acetonitrile, N,N-dimethylformamide, and dimethyl sulfoxide, and the solvent may be a mixed solvent obtained by combining two or more of these polar solvents. Among them, it is preferable to use water or a mixed solvent obtained by mixing water and another polar solvent. That is, the gel particles are preferably hydrogel particles. The content of water in the gel particles is preferably 0.05 mL or more, and more preferably 0.5 mL or more per 1 g of the solid content. In addition, the content of water in the gel particles is preferably 20 mL or less, and more preferably 10 mL or less.

The carbon dioxide separation membrane 34 containing gelling polymer particles having at least one of a basic functional group and an acidic functional group may further include polymer compounds or additives in regions either inside or outside the gelling polymer particles within the membrane. The polymer compound other than the gelling polymer is not particularly limited, but is preferably a polymer compound that responds to stimuli such as temperature changes. Examples of responses to stimuli include changes in the acid dissociation constant of functional groups, changes in the three-dimensional structure, changes in the degree of swelling, changes in hydrophilicity, changes in water content, changes in water absorption, changes in the solubility of bicarbonate ions, and changes in the solubility of hydrogen sulfide ions. Alternatively, it is preferable to have an amine in which the conjugate acid has a designed acid dissociation constant. In particular, in order to dissolve carbon dioxide, it is preferably that the acid dissociation constant of the amino group is equal to or greater than that of carbonic acid. Among them, a secondary amino group or a tertiary amino group is preferable, and a tertiary amino group is more preferable. A dialkylamino group such as a dimethylamino group is more preferable. In addition, the amino group of the polymer compound may be bonded to the main chain or may be bonded to the side chain, but is preferably bonded to the side chain. Examples of the additives include a membrane stabilizer, an absorption promoter, an emission promoter, a moisture absorber, and an antioxidant.

Examples of the membrane stabilizer include a polymer compound, a polymerizable molecule (polymerizable compound), a crosslinking agent such as a titanium crosslinking agent, a primary amine, a secondary amine, and a tertiary amine. Among them, as the polymer compound, a polymer having a primary amino group such as polyvinylamine, a polymer having a secondary amino group, a polymer having a tertiary amino group, a compound having a quaternary ammonium group, a polymer having a plurality of types of a primary amino group, a secondary amino group, a tertiary amino group, and a quaternary ammonium group, polyvinyl alcohol, polyethylene, a polyvinyl alcohol/polyethylene copolymer, or the like can be preferably used.

In addition, when a polymerizable molecule is used as the membrane stabilizer, the polymer formed by the polymerization of this molecule in the membrane also functions as a membrane stabilizer. As a result, even after the addition of water following membrane formation or after gas absorption and emission, it becomes easier to maintain a uniform membrane without excessive swelling. Examples of the polymerizable molecule include a monomer having a polymerizable group, and for example, a (meth)acrylic monomer can be exemplified. Among them, (meth)acrylamide or a (meth)acrylamide derivative can be preferably used. Examples thereof include alkylacrylamide, substituted or unsubstituted aminoalkyl (meth)acrylamide, and an acrylic amide derivatives having two polymerizable groups, and among them, substituted aminoalkyl acrylamide and an acrylamide derivative having two polymerizable groups can be preferably used. The substituted aminoalkyl acrylamide and the acrylamide derivative having two polymerizable groups are preferably used in combination, and the molar ratio thereof is preferably 60 to 99:40 to 1, more preferably 80 to 99:20 to 1, and still more preferably 90 to 99:10 to 1. Specific examples of the monomer having a polymerizable group include N-isopropylacrylamide (NIPAM), tert-butylacrylamide (TBAM), N,N-dimethylaminopropyl methacrylamide (DMAPM), N,N'-methylenebisacrylamide (BIS), and acrylamide. These polymerizable compounds may be used alone as a single type, or two or more types may be used in combination. In the case of using two or more types in combination, for example, a combination of N,N-dimethylaminopropyl methacrylamide (DMAPM) and N,N'-methylenebisacrylamide (BIS) can be mentioned as a preferred example. The content of the membrane stabilizer in the carbon dioxide separation membrane 34 is preferably 1 to 89% by mass with respect to the total amount of the membrane.

The absorption promoter is a compound having a function of promoting absorption of an acidic gas into the carbon dioxide separation membrane 34. The emission promoter is a compound having a function of promoting emission of an acidic gas from the gelling polymer particles. In the sixth embodiment, an absorption and emission promoter having both functions of the absorption promoter and the emission promoter may be used. Each of these absorption promoters, emission promoters, and absorption and emission promoters may have a function as a membrane stabilizer. In the carbon dioxide separation membrane 34, the total content of the absorption promoter, the emission promoter, and the absorption and emission promoter is preferably 0.05 mL or more and more preferably 0.1 mL or more per 1 g of the solid content. In addition, the content of water in the gel particles is preferably 20 mL or less, and more preferably 10 mL or less. The content of the absorption promoter in the carbon dioxide separation membrane 34 is preferably 0.1 to 12 N, more preferably 1 to 10 N, and still more preferably 3 to 9 N in terms of amine concentration.

As the absorption promoter, the emission promoter, and the absorption and emission promoter, a low molecular weight amine can be preferably used. The molecular weight of the low molecular weight amine is preferably 61 to 10,000, more preferably 75 to 1,000, and still more preferably 90 to 500. The boiling point of the low molecular weight amine is preferably 80°C or higher, more preferably 120°C or higher, and still more preferably 150°C or higher because it can be used for a long period of time and is practical. In order to increase the boiling point, an amine-containing compound having a site that forms a salt with a counter ion, like an ionic liquid and being in a liquid state may be used.

The low molecular weight amine may include any of a primary amino group, a secondary amino group, a tertiary amino group, an ammonium group, and an imidazolium group, and may include a plurality of amino groups, ammonium groups, or imidazolium groups, and the low molecular weight amine preferably includes one to three of these groups. In addition, the secondary amino group or the tertiary amino group may be a cyclic amino group. Furthermore, the low molecular weight amine may include functional groups other than an amino group, an ammonium group, and an imidazolium group, and may include, for example, a hydroxyl group. It is preferable that the low molecular weight amine includes 0 to 2 hydroxyl groups. As a preferred low molecular weight amine, an amine having an amino group and a hydroxyl group, or an amine having three amino groups can be exemplified, and as a more preferred low molecular weight amine, an amine having a secondary amino group and a hydroxyl group can be exemplified. In a high concentration region, the amount of acidic gas emission can be particularly dramatically increased, and from the viewpoint of suitability for repeated use, an amine having a secondary amino group and a hydroxyl group and having a boiling point of 150°C or higher is particularly preferable.

Examples of the low molecular weight amine include ETA (ethanolamine), DMAE (2-(dimethylamino)ethanol), IPAE (isopropylaminoethanol), DMAEA (2-(dimethylamino)ethylamine), TMEDA (tetramethylethylenediamine), TM-1,4-DAB (tetramethylenediaminobutane), TMHAD (N,N,N',N'-tetramethyl-1,6-hexanediamine), DEOA (diethanolamine), MDEOA (N-methyldiethanolamine), DAMDPA (diamino-N-methyl dipropylamine), 1-2HE-PRLD (1-2-hydroxyethylpyrrolidine), 1-2HE-PP (1-2-hydroxyethylpiperidine), Bis(2DMAE)ER (bis(2-dimethylaminoethyl) ether), e(PMDETA) (pentamethyldiethylenetriamine), AEAE (2-(2-aminoethylamino)ethanol), TAEA (tris(2-aminoethyl)amine), DETA (diethylenetriamine), or TETA (triethylenetetramine). Among them, in particular, DMAE, IPAE, Bis(2DMAE)ER, 1-2HE-PRLD, 1-2HE-PP, TM-1,4-DAB, TMHAD, and PMDETA are preferably used because the amount of acidic gas emission can be increased. Among them, IPAE, Bis(2DMAE)ER, 1-2HE-PP, TM-1,4-DAB, TMHAD, and PMDETA are more preferably used because they have relatively high boiling points and are less likely to evaporate. Still more preferably, IPAE, TM-1,4-DAB, TMHAD, and PMDETA are used because the amount of acidic gas emission can be remarkably increased by increasing their concentration. Particularly preferably, IPAE, TMHAD, and PMDETA are used because they are easily available.

As the moisture absorbent that can be used as an additive, it is preferable to use a moisture absorbent having a relative humidity of 90% or less at 25°C when prepared as a saturated aqueous solution. Examples of such a moisture absorbent include ions such as a bromide ion, a chloride ion, an acetate ion, a carbonate ion, a bicarbonate ion, a lithium ion, a potassium ion, a calcium ion, a magnesium ion, and a sodium ion. In addition, examples of such a moisture absorbent include salts such as lithium bromide, lithium chloride, calcium chloride, potassium acetate, magnesium chloride, potassium carbonate, and sodium carbonate. When the moisture absorbent is added, the amount thereof is preferably 0.01 to 10% by mass with respect to the total amount of the membrane.

The antioxidant that can be used as an additive can suppress or prevent oxidation by being added. Examples of such an antioxidant include vitamin C (ascorbic acid), vitamin E (tocopherol), BHT (dibutylhydroxytoluene), BHA (butylated hydroxyanisole), sodium erythorbate, propyl gallate, sodium sulfite, sulfur dioxide, hydroquinone, and derivatives thereof. When the antioxidant is added, the amount thereof is preferably 0.01 to 10% by mass with respect to the total amount of the membrane. The additives described above may be used alone as a single type, or two or more types may be used in combination.

The carbon dioxide separation membrane 34 preferably has a surface area of 1 $cm^2$ or more. The carbon dioxide separation membrane 34 preferably has a nitrogen permeation flux of 100 GPU or less at 40°C, and more preferably 10 GPU or less. In addition, the carbon dioxide separation membrane 34 preferably has a carbon dioxide permeation flux of 10 GPU or more at 40°C, and more preferably 100 GPU or more. When the nitrogen permeation flux and the carbon dioxide permeation flux are within the above ranges, carbon dioxide can be selectively permeated relative to nitrogen, and therefore, carbon dioxide can be selectively separated and efficiently recovered from a supply gas or other mixed gas containing nitrogen and carbon dioxide.

The "permeation flux" in the sixth embodiment is a value obtained by the following Equation (6).

$$Q = L/A \times \Delta P \quad \cdots \quad (6)$$

In Equation (6), Q represents a permeation flux, L represents a permeation flow rate per unit time, A represents a membrane area, and ΔP represents a partial pressure difference across both sides of a single-layer membrane. The permeation flow rate L can be measured as the amount of gas that permeates the membrane per unit time by gas chromatography or the like, and the unit of the permeation flux Q is GPU (1 GPU = 1.0 × $10^{-6}$ cm³ (STP)/(s·cm²·cmHg)). The partial pressure difference ΔP can be determined as the difference between the gas partial pressure on the gas supply surface side and the gas partial pressure on the permeation surface side, which are measured by a pressure gauge, gas chromatography, or the like. In addition, in the sixth embodiment, the "selectivity" is defined as a ratio value $Q_S/Q_O$, in which the permeation flux $Q_S$ of the selectively permeating gas is a numerator and the permeation flux $Q_O$ of another gas is a denominator.

(Steam Supply Unit 40)

The steam supply unit 40 generates and supplies steam upstream of the carbon dioxide separation unit 30 in order to reduce the partial pressure of carbon dioxide in the carbon dioxide separation unit 30 and to generate a partial pressure difference between the first internal space 32a and the second internal space 32b. Furthermore, by supplying steam to the carbon dioxide separation membrane 34 in the steam supply unit 40, a humidifying effect is also obtained, such that performance deterioration due to drying does not occur throughout the entire carbon dioxide separation membrane 34. Therefore, the steam is supplied with its temperature, humidity, pressure, and the like adjusted so as to effectively reduce the partial pressure of carbon dioxide in the second internal space 32b and humidify the carbon dioxide separation membrane 34.

As illustrated in Fig. 12, the steam supply unit 40 includes a steam generator 41 incorporating a heater, and a pump 42. More specifically, the carbon dioxide separation unit 30 is connected to one end (downstream side) of the steam generator 41 through the pipe P42. More specifically, the steam generator 41 is connected to the second internal space 32b of the carbon dioxide separation unit 30 through the pipe P42. In addition, a supply water introduction pipe P43 is connected to one end (upstream side) of the pump 42, and the steam generator 41 is connected to the other end (downstream side) through a pipe P44. That is, the steam supply unit 40 does not employ a configuration in which carbon dioxide in the storage tank 54 is supplied to the carbon dioxide separation unit 30 via the steam generator 41 as compared with the steam supply unit 4 of the first embodiment.

With the configuration of the steam supply unit 40 as described above, the pump 42 is continuously driven, supply water is supplied to the steam generator 41, and steam at a predetermined temperature is generated in the steam generator 41. Then, the generated steam is supplied to the carbon dioxide separation unit 30 through the pipe P42. Here, the predetermined temperature is the same as, or determined according to, the operating temperature of the carbon dioxide separation unit 30 in the gas recovery device 501.

(Carbon Dioxide Recovery Unit 50)

As illustrated in Fig. 12, the carbon dioxide recovery unit 50 includes a pump 51, a heat exchanger 52, a gas-liquid separator 53, and a storage tank 54. More specifically, the carbon dioxide separation unit 30 is connected to one end (upstream side) of the pump 51 through the pipe P51, and the heat exchanger 52 is connected to the other end (downstream side) through the pipe P52. In particular, the pump 51 is connected to the second internal space 32b of the carbon dioxide separation unit 30 through the pipe P51. In addition, the gas-liquid separator 53 is connected to the downstream side of the heat exchanger 52 through a pipe P53. Furthermore, the storage tank 54 is connected to the downstream side of the gas-liquid separator 53 through the pipe P54 and the pipe P58. Further, a pipe P55 for discharging drainage to the outside is connected to the gas-liquid separator 53.

With the configuration of the carbon dioxide recovery unit 50 as described above, the pressure in the gas recovery device 1 is reduced by driving the pump 51, and by this pressure reduction, the introduced gas (carbon dioxide and water vapor) introduced to the carbon dioxide recovery unit 5 is heated or cooled by the heat exchanger 52 according to the temperature of the gases, adjusted to a predetermined temperature range, and then supplied to the gas-liquid separator 53. For example, when the introduced gas is cooled by the heat exchanger 52, the water vapor contained in the introduced gas is condensed and separated as water. Here, the predetermined temperature range is determined according to an operating temperature of the carbon dioxide separation unit 30 in the gas recovery device 501. For example, the predetermined temperature range is -78°C to 60°C.

In the gas-liquid separator 53, moisture is removed from the introduced gas, and the removed moisture is discharged as drainage through the pipe P55. More specifically, when water vapor is condensed and separated as water by the heat exchanger 52, the water is separated from the gas as condensed water in the gas-liquid separator 53, and the condensed water is discharged as drainage. As a result, the moisture content of the introduced gas passing through the gas-liquid separator 53 is adjusted to increase the ratio of carbon dioxide, and the introduced gas is supplied to the storage tank 54 through the pipe P54 and the pipe P58.

With the configuration and function of the carbon dioxide recovery unit 50 as described above, the temperature of the stored carbon dioxide can be adjusted, and unnecessary moisture can also be removed, such that high concentration carbon dioxide can be stored in the storage tank 54. Note that, when temperature adjustment is unnecessary, the heat exchanger 52 may not be provided. In addition, the arrangement relationship between the pump 51 and the heat exchanger 52 may be reversed, and the introduced gas with an adjusted temperature may be drawn by the pump 51. Furthermore, the number of pumps 51 and heat exchangers 52 is not limited to one, and may be plural according to the amount of introduced gas to be drawn and the temperature adjustment, and the number can be appropriately adjusted. In addition, the storage tank 54 is not essential, and may be directly connected to the carbon dioxide reduction device 190 (see Fig. 6). In addition, it is also possible to store liquefied carbon dioxide gas or dry ice by performing pressurization, cooling, and the like as necessary.

(Flow of Carbon Dioxide Recovery)

Next, a flow of carbon dioxide recovery in the gas recovery device 501 will be described with reference to Figs. 12 and 13. Here, Fig. 13 is a diagram illustrating an operating state of the gas recovery device 501 according to the sixth embodiment of the present disclosure.

First, when the supply gas containing carbon dioxide and having a temperature of about 80°C is supplied from the introduction pipe P21, the supply gas is cooled to about 50°C in the heat exchanger 21. Here, it is assumed that the supply gas is a gas obtained by combusting methane gas, has a carbon dioxide concentration of about 7%, and has a moisture concentration of about 14%. Such a supply gas is equal to the saturated water vapor pressure at 50 °C and 1 atm.

The cooled supply gas is introduced into the gas-liquid separator 22 through the pipe P22. As described above, since the supply gas is equal to the saturated water vapor pressure at 50 °C and 1 atm, moisture is removed in the gas-liquid separator 22, and the removed moisture is discharged as drainage through the pipe P26. As a result, a relative humidity adjustment step of performing a dehumidification step on the supply gas containing carbon dioxide to adjust a relative humidity of the supply gas is completed. Then, the supply gas from which moisture is removed, having a relative humidity of 80% or more (for example, 90%), is introduced into the carbon dioxide separation unit 30 through the pipe P25. In particular, in the present sixth embodiment, since the pipe P25 is connected to the first internal space 32a, the supply gas is supplied to the first internal space 32a.

On the other hand, since the pump 42 is continuously driven, supply water is supplied to the steam generator 41 through the pipe P43, the pump 42, and the pipe P44, and steam is continuously generated in the steam generator 41. Since the pump 51 is also continuously driven, the steam generated in the steam generator 41 is drawn into the second internal space 32b of the carbon dioxide separation unit 30. That is, the steam is continuously supplied to the second internal space 32b of the carbon dioxide separation unit 30.

In the carbon dioxide separation unit 30, a supply gas containing carbon dioxide is present on the first internal space 32a side, and steam is present on the second internal space 32b side. The supply gas in the first internal space 32a selectively permeates only carbon dioxide into the first internal space 32a through the carbon dioxide separation membrane 34 (the direction of the arrows in the carbon dioxide separation unit 30 in Fig. 13). At this time, since carbon dioxide selectively permeates, the carbon dioxide concentration on the second internal space 32b side increases; however, the partial pressure difference can be maintained by reducing the partial pressure with the steam supplied from the steam supply unit 40.

Thereafter, the carbon dioxide that has flowed into the second internal space 32b is introduced, together with steam, into the heat exchanger 52 through the pipe P51, the pump 51, and the pipe P52 by pressure reduction caused by the operation of the pump 51. At this time, the processor 82 of the processing device 8 generates a control signal for temperature control in the heat exchanger 52 in order to adjust a cooling temperature of the carbon dioxide, and transmits the control signal to the heat exchanger 52. As a result, when the carbon dioxide and the steam are introduced into the heat exchanger 52 of the carbon dioxide recovery unit 50, the carbon dioxide and the steam are cooled to a predetermined temperature by the heat exchanger 52 in order to remove the water vapor from the carbon dioxide.

The carbon dioxide and the steam cooled to a predetermined temperature in the heat exchanger 52 are introduced into the gas-liquid separator 53 through the pipe P53. Here, a part of the moisture is removed in the gas-liquid separator 53. Therefore, the concentration of carbon dioxide in the gas passing through the gas-liquid separator 53 is increased. Then, the carbon dioxide that has passed through the gas-liquid separator 53 is introduced into the storage tank 54 through the pipe P54 and the pipe P58. Therefore, high-concentration carbon dioxide (concentrated carbon dioxide) is stored in the storage tank 54. As a result, while removing steam, carbon dioxide released from the carbon dioxide separation unit 30 can be recovered.

On the other hand, the residual gas that cannot permeate through the carbon dioxide separation membrane 34 is led out to the heat exchanger 61 of the residual gas discharge unit 6 via the pipe P61. When the residual gas is introduced into the heat exchanger 61 of the residual gas discharge unit 6, the residual gas is cooled to about 24 °C in the heat exchanger 61 in order to enable discharge of the residual gas from the gas recovery device 501. Here, the cooling temperature is not limited to 24°C, and it is assumed as a residual gas discharge condition that the temperature of the residual gas is required to be at room temperature.

The residual gas cooled to 24°C in the heat exchanger 61 is introduced into the gas-liquid separator 62 through the pipe P62. Here, since the residual gas has a relative humidity of about 80% or more even in the state of the supply gas (a state containing carbon dioxide), the residual gas contains a large amount of moisture. Therefore, the cooled residual gas contains a large amount of water vapor, and moisture is removed from the residual gas in the gas-liquid separator 62. The removed moisture is discharged from the pipe P64 as drainage. On the other hand, the residual gas from which moisture is removed is discharged to the outside of the gas recovery device 1 through the exhaust pipe P63.

The storage tank 54 can be filled with a higher concentration of carbon dioxide by continuously performing the relative humidity adjustment step, the separation step, and the recovery step described above. That is, a high concentration of carbon dioxide is recovered.

Note that, in the sixth embodiment, the carbon dioxide separation unit 30 including the substantially cylindrical housing 31 has been described, but the present disclosure is not limited thereto. For example, as another form using the carbon dioxide separation membrane 34, a module in which flat membranes are laminated, a hollow fiber module, or a spiral module may be used.

7. Summary of Embodiments of the Present Disclosure

The gas recovery devices 1, 101, 201, 301, 401, and 501 according to an embodiment of the present disclosure include: carbon dioxide separation units 3 and 30 each including a carbon dioxide separator configured to separate carbon dioxide from a supply gas; steam supply units 4 and 40 configured to supply steam to the carbon dioxide separation units 3 and 30 to reduce a partial pressure of the carbon dioxide in the carbon dioxide separation units 3 and 30; carbon dioxide recovery units 5 and 50 configured to recover the carbon dioxide separated in the carbon dioxide separation units 3 and 30 while removing the steam; and a circulation path configured to deliver the steam removed in the carbon dioxide recovery units 5 and 50 or water condensed from the steam to the steam supply units 4 and 40.

In addition, the gas recovery devices 1, 101, 201, 301, 401, and 501 according to another embodiment of the present disclosure include: a humidity adjustment unit 2 configured to adjust humidity of a supply gas containing carbon dioxide; carbon dioxide separation units 3 and 30 each including a carbon dioxide separator configured to separate the carbon dioxide from the supply gas whose humidity is adjusted; steam supply units 4 and 40 configured to supply steam to the carbon dioxide separation units 3 and 30 to reduce a partial pressure of the carbon dioxide in the carbon dioxide separation units 3 and 30; carbon dioxide recovery units 5 and 50 configured to recover the carbon dioxide separated in the carbon dioxide separation units 3 and 30 while removing the steam; and a circulation path configured to deliver the steam removed in the carbon dioxide recovery units 5 and 50 or water condensed from the steam to the steam supply units or the humidity adjustment unit 2, or to deliver the steam removed in the humidity adjustment unit 2 or water condensed from the steam to the steam supply units 4 and 40.

In addition, the gas recovery devices 1, 101, 201, 301, 401, and 501 according to another embodiment of the present disclosure include: a humidity adjustment unit 2 configured to adjust humidity of a supply gas containing carbon dioxide; carbon dioxide separation units 3 and 30 each including a carbon dioxide separator configured to separate the carbon dioxide from the supply gas whose humidity is adjusted; steam supply units 4 and 40 configured to supply steam to the carbon dioxide separation units 3 and 30 to reduce a partial pressure of the carbon dioxide in the carbon dioxide separation units 3 and 30; carbon dioxide recovery units 5 and 50 configured to recover the carbon dioxide separated in the carbon dioxide separation units 3 and 30 while removing the steam; a residual gas discharge unit 6 configured to discharge residual gas in a state where the carbon dioxide is separated in the carbon dioxide separation units 3 and 30 while removing steam from the residual gas; and a circulation path configured to deliver the steam removed in the carbon dioxide recovery units 5 and 50 or the residual gas discharge unit 6, or water condensed from the steam to the humidity adjustment unit 2 or the steam supply units 4 and 40, or to deliver the steam removed in the humidity adjustment unit 2 or water condensed from the steam to the steam supply units 4 and 40.

In addition, the gas recovery devices 1, 101, 201, 301, 401, and 501 according to another embodiment of the present disclosure include: carbon dioxide separation units 3 and 30 each including a carbon dioxide separator configured to separate carbon dioxide from a supply gas; steam supply units 4 and 40 configured to supply steam to the carbon dioxide separation units 3 and 30 to reduce a partial pressure of the carbon dioxide in the carbon dioxide separation units 3 and 30; carbon dioxide recovery units 5 and 50 configured to recover the carbon dioxide separated in the carbon dioxide separation units 3 and 30 while removing the steam; and a circulation path configured to deliver the steam removed upstream or downstream of the carbon dioxide separation units 3 and 30, or water condensed from the steam to an upstream side of the carbon dioxide separation units 3 and 30, in which the steam supply units 4 and 40 adjust a state of the steam so that a pressure of the steam is equal to or higher than a saturated water vapor pressure at a temperature of the carbon dioxide separator in at least a part of the inside of the carbon dioxide separation units 3 and 30.

With the configurations of the gas recovery devices 1, 101, 201, 301, 401, and 501 according to each embodiment of the present disclosure, carbon dioxide can be efficiently recovered from a supply gas without providing a drying process for the supply gas or for the carbon dioxide separator. In addition, facilities for a drying process are also unnecessary, and the recovery cost of carbon dioxide can also be reduced. Furthermore, reuse of water is enabled, and a recovery cost of carbon dioxide can be further reduced.

In the gas recovery devices 1, 101, 201, 301, 401, and 501, the humidity adjustment unit 2 may include the steam supply units 4 and 40. Accordingly, since a device configuration can be simplified and a number of components can be reduced, cost reduction of the gas recovery device itself is achieved.

In the gas recovery devices 1, 101, 201, 301, 401, and 501, the circulation path may include a membrane that preferentially allows steam to pass over carbon dioxide. Accordingly, circulation of carbon dioxide, which is a gas other than water and unnecessary for reuse, is eliminated, and efficient circulation and reuse of steam can be achieved.

In the gas recovery devices 1, 101, 201, 301, 401, and 501, water storage tanks 210, 220, and 230 configured to store water may be provided in the circulation path. With such a configuration, even when water is not required early at a water supply destination, drainage can be stored, and efficiency of water reuse can be improved.

In the gas recovery devices 1, 101, 201, 301, 401, and 501, the circulation path may have a mechanism configured to remove substances other than steam or water. Accordingly, reuse of water containing impurities is enabled, and furthermore, simplification of the circulation path for water reuse can be achieved.

In the gas recovery devices 1, 101, 201, 301, 401, and 501, a supply pipe P101, which is a carbon dioxide supply pipe for supplying carbon dioxide from the carbon dioxide recovery units 5 and 50 to a methane production device that produces methane using carbon dioxide as an example of the carbon dioxide reduction device 190, may further be provided. With such a configuration, supply of carbon dioxide becomes possible, and reduction and improvement in efficiency of methane production cost can be achieved.

In the gas recovery devices 1, 101, 201, 301, 401, and 501, a removed water supply pipe for supplying steam or condensed water in the humidity adjustment unit 2 to the water electrolysis device or the carbon dioxide reduction device 190 may further be provided. In addition, the residual gas discharge unit 6 may further be provided with a removed water supply pipe for supplying steam or condensed water to the water electrolysis device or the carbon dioxide reduction device 190. A removed water supply pipe for supplying steam or condensed water in the carbon dioxide recovery units 5 and 50 to the water electrolysis device or the carbon dioxide reduction device 190 may further be provided. With such a configuration, it is possible to supply not only carbon dioxide but also a hydrogen source required for methane production, thereby reducing the cost of methane production and improving efficiency.

In the gas recovery devices 1, 101, 201, 301, 401, and 501, the supply gas is atmospheric gas, and the humidity adjustment unit 2 may include the introduction pipe P23 serving as a water supply line leading to the waterside 310 such as a water source in which the sea, a lake, a river, a pond, a marsh, stored rainwater is reserved. With such a configuration, even when the supply gas is atmospheric gas with little moisture, recovery of carbon dioxide can be achieved efficiently and at low cost.

In the gas recovery devices 1, 101, 201, 301, 401, and 501, the water supply path leading to the waterside 310 may be connected to the humidity adjustment unit 2 or the steam supply units 4 and 40. In such a case, even when a large amount of steam is supplied, it is possible to sufficiently cope with the case, and recovery of carbon dioxide can be achieved efficiently and at low cost.

In the gas recovery devices 1, 101, 201, 301, 401, and 501, the supply gas may be atmospheric gas. In such a case, the supply gas can be easily collected and supplied into the gas recovery device. In addition, it is also possible to make the cost relating to collection of the supply gas remarkably low.

In the gas recovery devices 1, 101, 201, 301, 401, and 501, the carbon dioxide separator may be a carbon dioxide separation material that sorbs carbon dioxide and releases the carbon dioxide under predetermined conditions. In this case, the steam supply units 4 and 40 may adjust a state of steam so that the pressure of the steam is equal to or higher than the saturated water vapor pressure at the temperature of the carbon dioxide separator in at least a part of the inside of the carbon dioxide separation units 3 and 30. As a result, reaction heat at the time of releasing carbon dioxide is offset by latent heat due to condensation of the steam, such that release characteristics of the carbon dioxide separator can be maintained.

In the gas recovery devices 1, 101, 201, 301, 401, and 501, the steam supply units 4 and 40 may supply steam to the carbon dioxide separation units 3 and 30 when supply of the supply gas with adjusted relative humidity is stopped. In addition, in this case, the carbon dioxide recovery units 5 and 50 may supply a part of the recovered carbon dioxide to the carbon dioxide separation units 3 and 30 before steam is supplied from the steam supply units 4 and 40 to the carbon dioxide separation units 3 and 30. Furthermore, in these cases, one end of the carbon dioxide recovery units 5 and 50 may be connected to the steam supply units 4 and 40 via the valve V5. With such a configuration, the amount of carbon dioxide sorbed in the carbon dioxide separation units 3 and 30 can be increased, thereby enabling recovery of high-concentration carbon dioxide. In addition, integration of the pipes leads to reduction of facility cost and recovery cost of carbon dioxide.

In the gas recovery devices 1, 101, 201, 301, 401, and 501, one end of the humidity adjustment unit 2 and one end of each of the steam supply units 4 and 40 may be connected via the valve V1 and the valve V2, and may also be connected to the carbon dioxide separation units 3 and 30 through the common pipe P1. With such a configuration, the pipe configuration can be simplified, leading to cost reduction.

In the gas recovery devices 1, 101, 201, 301, 401, and 501, a retained gas recovery unit 7, which is branched from the pipe P51 serving as a connection pipe between the carbon dioxide separation units 3 and 30 and the carbon dioxide recovery units 5 and 50 and is connected thereto, for recovering retained gas retained in the carbon dioxide separation units 3 and 30, may further be provided. In addition, a retained gas recovery unit 7 may be provided by branching from the pipe P42 that is a connection pipe between the carbon dioxide separation units 3 and 30 and the steam supply units 4 and 40. With such a configuration, the carbon dioxide concentration in the carbon dioxide separation unit 3 can be increased, thereby enabling recovery of high-concentration carbon dioxide.

In Fig. 1, the retained gas recovery unit 7 branches from between the carbon dioxide separation unit 3 and the carbon dioxide recovery unit 5. In the configuration of Fig. 1, carbon dioxide for purging retained gas is supplied from the pipe 42, passes through the carbon dioxide separation unit 3, and pushes the retained gas into the retained gas recovery unit 7 (forward purging). As a modification, carbon dioxide for purging retained gas may be circulated to the carbon dioxide separation unit 3 from the carbon dioxide recovery unit 5 (for example, the connection point T3), such that the retained gas is pushed out to the common pipe P1 side (back purging). In this case, the retained gas recovery unit 7 is connected by branching from the connection pipe (pipe P25) with the carbon dioxide separation unit 3.

In the gas recovery devices 1, 101, 201, 301, 401, and 501, the carbon dioxide separator may be a carbon dioxide separation membrane 34 that selectively permeates carbon dioxide in the supply gas. Even in this case, the concentration of the recovered carbon dioxide can be increased, and the recovery efficiency of carbon dioxide can be improved.

In the gas recovery devices 1, 101, 201, 301, 401, and 501, the carbon dioxide recovery units 5 and 50 condense and remove the steam using a refrigerant at 20°C or lower. In addition, the carbon dioxide recovery units 5 and 50 may condense and remove the steam by utilizing a temperature decrease accompanying the gasification of the liquefied gas or the decompression of the high-pressure gas. In this case, the liquefied gas or the high-pressure gas may be natural gas, city gas, propane gas, or water vapor. With such a configuration, the steam can be efficiently condensed and removed, and the concentration of carbon dioxide to be recovered can be further improved.

A gas recovery method according to an embodiment of the present disclosure includes: a supply step of supplying a supply gas containing carbon dioxide to a carbon dioxide separator; a separation step of supplying steam to the carbon dioxide separator to reduce a partial pressure of the carbon dioxide and separating the carbon dioxide from the supply gas; and a recovery step of recovering the carbon dioxide separated by the carbon dioxide separator while removing the steam, in which at least one of the steam removed in the recovery step or water condensed from the steam, or the steam removed from residual gas from which the carbon dioxide is separated in the separation step or water condensed from the steam, is reused in at least one of the supply step and the separation step. By such a step, carbon dioxide can be efficiently recovered from the supply gas without providing a drying process for the supply gas. In addition, facilities for a drying process are also unnecessary, and the recovery cost of carbon dioxide can also be reduced. Furthermore, reuse of water is enabled, and a recovery cost of carbon dioxide can be further reduced.

In the gas recovery method, in the supply step, humidity of the supply gas is adjusted and the supply gas is supplied to the carbon dioxide separator, and steam removed in the supply step or water condensed from the steam may be reused in the separation step. Accordingly, reuse of a larger amount of water is enabled, and a recovery cost of carbon dioxide can be further reduced.

Another gas recovery method according to an embodiment of the present disclosure includes: a supply step of supplying a supply gas containing carbon dioxide to a carbon dioxide separator after adjusting humidity of the supply gas; a separation step of supplying steam to the carbon dioxide separator to reduce a partial pressure of the carbon dioxide and separating the carbon dioxide from the supply gas; and a recovery step of recovering the carbon dioxide separated by the carbon dioxide separator while removing the steam, in which in the supply step, the separated steam or water condensed from the steam is reused in the separation step. By such a step, carbon dioxide can be efficiently recovered from the supply gas without providing a drying process for the supply gas. In addition, facilities for a drying process are also unnecessary, and the recovery cost of carbon dioxide can also be reduced. Furthermore, reuse of water is enabled, and a recovery cost of carbon dioxide can be further reduced.

8. Modification

In the first to fifth embodiments, it has been assumed that one carbon dioxide separation unit 3 is provided; however, an auxiliary device 610 that assists recovery of carbon dioxide may be provided as a carbon dioxide separation device or a carbon dioxide concentration device. Here, the auxiliary device 610 is provided with the carbon dioxide separation unit 3, the carbon dioxide separation unit 30, or another known carbon dioxide separation mechanism as described above, and includes an additional configuration for separating or concentrating carbon dioxide using them. As a result, improvement in the concentration of carbon dioxide in the gas recovery device and additional recovery of carbon dioxide become possible.

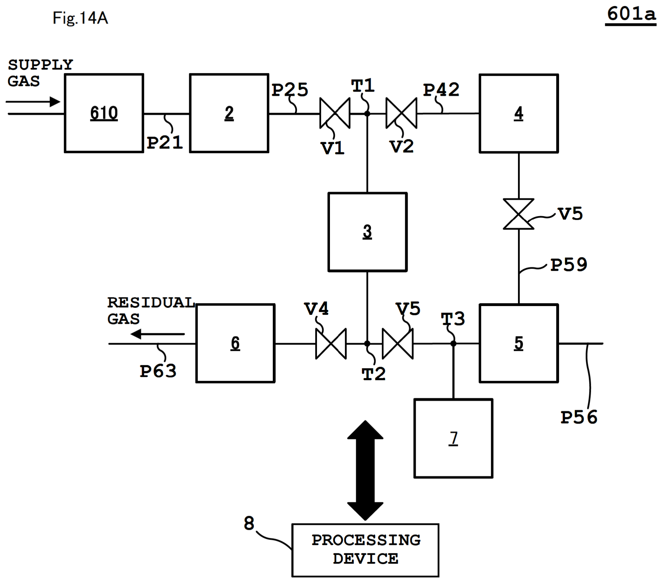

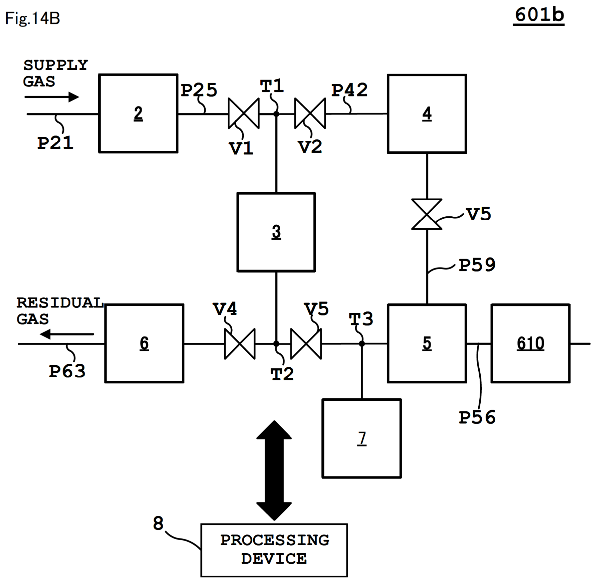

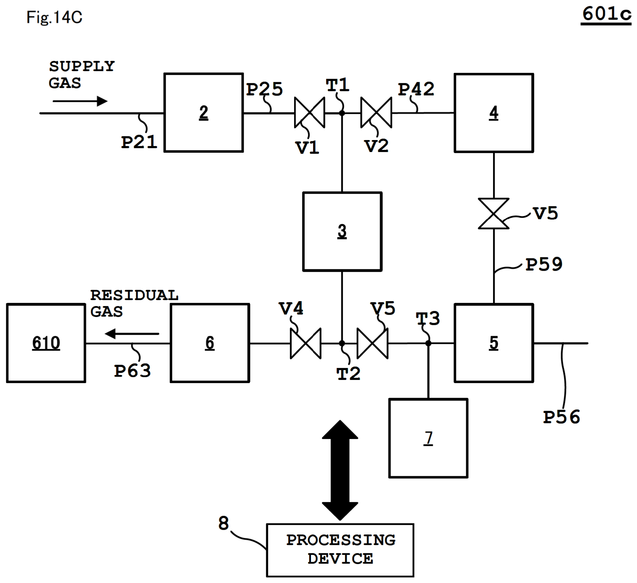

For example, as illustrated in Figs. 14A to 14C, the auxiliary device 610 may be provided upstream or downstream of the carbon dioxide separation unit 3. Here, Fig. 14A is a diagram illustrating a schematic configuration of a gas recovery device 601a according to a modification of the present disclosure, Fig. 14B is a diagram illustrating a schematic configuration of a gas recovery device 601b according to a modification of the present disclosure, and Fig. 14C is a diagram illustrating a schematic configuration of a gas recovery device 601c according to a modification of the present disclosure.

As a more specific example of an installation position of the auxiliary device 610, as illustrated in Fig. 14A, the auxiliary device 610 is connected upstream of the humidity adjustment unit 2 through the pipe P21. In this case, the supply gas is delivered to the humidity adjustment unit 2 via the auxiliary device 610. Therefore, unnecessary gas (such as nitrogen) in the supply gas can be removed in advance, and the supply gas can be delivered to the humidity adjustment unit 2 in a state where the carbon dioxide concentration is increased. In the gas recovery device 601a, since carbon dioxide is recovered from the supply gas containing high-concentration carbon dioxide, the concentration of the finally recovered carbon dioxide is further increased.

As another more specific example of an installation position of the auxiliary device 610, as illustrated in Fig. 14B, the auxiliary device 610 is connected downstream of the carbon dioxide recovery unit 5 through the pipe P56. In this case, the retained gas is discharged to the outside via the auxiliary device 610. Therefore, in the gas recovery device 601b, carbon dioxide in the retained gas can be additionally recovered, allowing the retained gas to be discharged to the outside with a further reduced carbon dioxide concentration. Note that the carbon dioxide additionally recovered in the auxiliary device 610 may be delivered to the storage tank 54 of the carbon dioxide recovery unit 5, may be delivered to another tank, or may be stored in a tank in the auxiliary device 610.

As another more specific example of an installation position of the auxiliary device 610, as illustrated in Fig. 14C, the auxiliary device 610 is connected downstream of the residual gas discharge unit 6 through the pipe P63. In this case, the residual gas is discharged to the outside via the auxiliary device 610. Therefore, in the gas recovery device 601c, carbon dioxide in the residual gas can be additionally recovered, allowing the residual gas to be discharged to the outside with a further reduced carbon dioxide concentration. Note that the carbon dioxide additionally recovered in the auxiliary device 610 may be delivered to the storage tank 54 of the carbon dioxide recovery unit 5, may be delivered to another tank, or may be stored in a tank in the auxiliary device 610.

In addition, in the sixth embodiment, it has been assumed that one carbon dioxide separation unit 30 is provided; however, an auxiliary device 710 that assists recovery of carbon dioxide may be provided as a carbon dioxide separation device or a carbon dioxide concentration device. Here, the auxiliary device 710 is provided with the carbon dioxide separation unit 3, the carbon dioxide separation unit 30, or another known carbon dioxide separation mechanism as described above, and includes an additional configuration for separating or concentrating carbon dioxide using them. As a result, improvement in the concentration of carbon dioxide in the gas recovery device and additional recovery of carbon dioxide become possible.

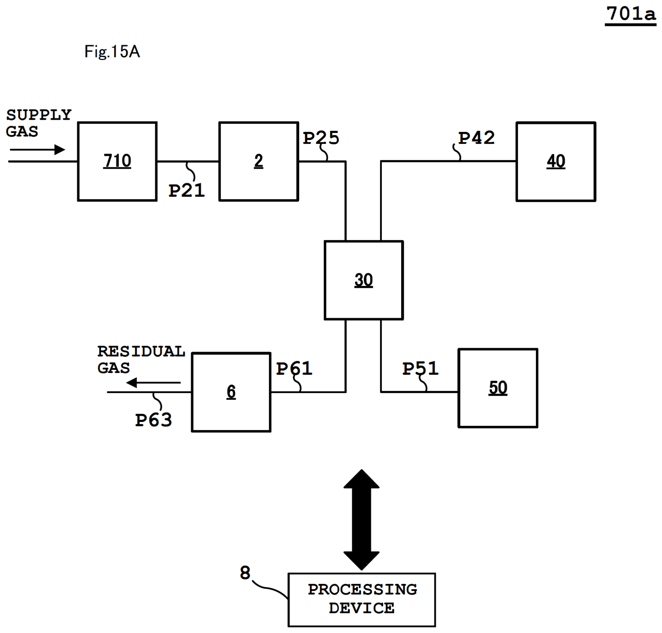

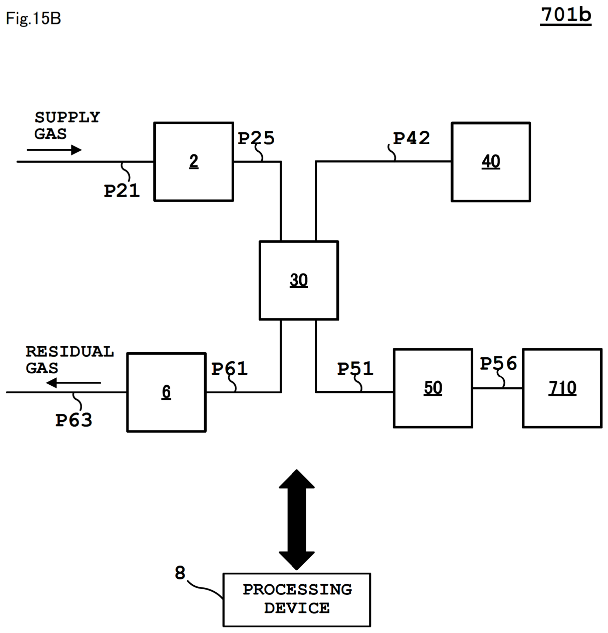

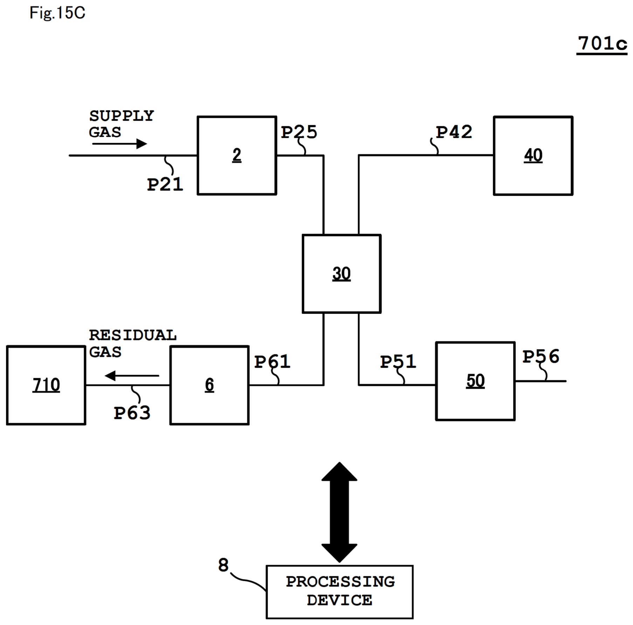

For example, as illustrated in Figs. 15A to 15C, the auxiliary device 710 may be provided upstream or downstream of the carbon dioxide separation unit 30. Here, Fig. 15A is a diagram illustrating a schematic configuration of a gas recovery device 701a according to a modification of the present disclosure, Fig. 15B is a diagram illustrating a schematic configuration of a gas recovery device 701b according to a modification of the present disclosure, and Fig. 15C is a diagram illustrating a schematic configuration of a gas recovery device 701c according to a modification of the present disclosure.

As a more specific example of an installation position of the auxiliary device 710, as illustrated in Fig. 15A, the auxiliary device 710 is connected upstream of the humidity adjustment unit 2 through the pipe P21. In this case, the supply gas is delivered to the humidity adjustment unit 2 via the auxiliary device 710. Therefore, unnecessary gas (such as nitrogen) in the supply gas can be removed in advance, and the supply gas can be delivered to the humidity adjustment unit 2 in a state where the carbon dioxide concentration is increased. In the gas recovery device 701a, since carbon dioxide is recovered from the supply gas containing high-concentration carbon dioxide, the concentration of the finally recovered carbon dioxide is further increased.

As another more specific example of an installation position of the auxiliary device 710, as illustrated in Fig. 15B, the auxiliary device 710 is connected downstream of the carbon dioxide recovery unit 50 through the pipe P56. In this case, the retained gas is discharged to the outside via the auxiliary device 710. Therefore, in the gas recovery device 701b, carbon dioxide in the retained gas can be additionally recovered, allowing the retained gas to be discharged to the outside with a further reduced carbon dioxide concentration. Note that the carbon dioxide additionally recovered in the auxiliary device 710 may be delivered to the storage tank 54 of the carbon dioxide recovery unit 50, may be delivered to another tank, or may be stored in a tank in the auxiliary device 710.

As another more specific example of an installation position of the auxiliary device 710, as illustrated in Fig. 15C, the auxiliary device 710 is connected downstream of the residual gas discharge unit 6 through the pipe P63. In this case, the residual gas is discharged to the outside via the auxiliary device 710. Therefore, in the gas recovery device 701c, carbon dioxide in the residual gas can be additionally recovered, allowing the residual gas to be discharged to the outside with a further reduced carbon dioxide concentration. Note that the carbon dioxide additionally recovered in the auxiliary device 710 may be delivered to the storage tank 54 of the carbon dioxide recovery unit 50, may be delivered to another tank, or may be stored in a tank in the auxiliary device 710.

In the first embodiment described above, the supply gas and sweep steam are supplied to the carbon dioxide separation unit 3 via the common pipe P1; however, the configuration is not limited thereto. For example, the steam supply unit 4, the carbon dioxide recovery unit 5, and the retained gas recovery unit 7 may be replaced and disposed. That is, the supply gas and the sweep steam may be supplied to the carbon dioxide separation unit 3 from opposite directions. In other words, the connection relationship among the humidity adjustment unit 2, the carbon dioxide separation unit 3, the steam supply unit 4, the carbon dioxide recovery unit 5, the residual gas discharge unit 6, and the retained gas recovery unit 7 is not limited to the embodiments described above and can be modified as appropriate.

In each of the embodiments described above, the adjustment in the humidity adjustment unit 2 has been described on the premise of adjustment of relative humidity; however, the present disclosure is not limited thereto. Instead of adjustment of relative humidity, absolute humidity, which is independent of temperature (that is, not affected by temperature), may be adjusted by the humidity adjustment unit 2.

The processes and procedures described in the present specification can be implemented not only by those explicitly described in the present disclosure, but also by software, hardware, or a combination thereof. Specifically, the processes and procedures described in the present specification are implemented by implementing logic corresponding to the processes on media such as integrated circuits, volatile memories, non-volatile memories, magnetic disks, and optical storages. In addition, the processes and procedures described in the present specification can be implemented as computer programs and can be executed by various computers including terminal devices and server devices.

Even when the processes and procedures described herein are described in the present specification as being executed by a single device, software, component, or module, such processes or procedures can be executed by a plurality of devices, a plurality of software programs, a plurality of components, and/or a plurality of modules. In addition, even when it is described in the present specification that various types of information described herein are stored in a single memory or storage unit, such information may be stored in a distributed manner in a plurality of memories provided in a single device or in a plurality of memories distributed across a plurality of devices. Furthermore, the software and hardware elements described in the present specification can be realized by integrating them into fewer components or by decomposing them into more components.

Reference Signs List

| | |
|---|---|
| 1, 101, 201, 301, 401, 501, 601a, 601b, 601c, 701a, 701b, 701c | Gas recovery device |
| 2 | Humidity adjustment unit |
| 3, 30 | Carbon dioxide separation unit |
| 4, 40 | Steam supply unit |
| 5, 50 | Carbon dioxide recovery unit |
| 6 | Residual gas discharge unit |
| 7 | Retained gas recovery unit |

**Claims**

1. A gas recovery device comprising:

a carbon dioxide separation unit including a carbon dioxide separator configured to separate carbon dioxide from a supply gas;
a steam supply unit configured to supply steam to the carbon dioxide separation unit to reduce a partial pressure of the carbon dioxide in the carbon dioxide separation unit;
a carbon dioxide recovery unit configured to recover the carbon dioxide separated in the carbon dioxide separation unit while removing the steam; and
a circulation path configured to deliver the steam removed in the carbon dioxide recovery unit or water condensed from the steam to the steam supply unit.

2. A gas recovery device comprising:

a humidity adjustment unit configured to adjust humidity of a supply gas containing carbon dioxide with respect to the supply gas;
a carbon dioxide separation unit including a carbon dioxide separator configured to separate the carbon dioxide from the supply gas whose humidity is adjusted;

a steam supply unit configured to supply steam to the carbon dioxide separation unit to reduce a partial pressure of the carbon dioxide in the carbon dioxide separation unit;

a carbon dioxide recovery unit configured to recover the carbon dioxide separated in the carbon dioxide separation unit while removing the steam; and

a circulation path configured to deliver the steam removed in the carbon dioxide recovery unit or water condensed from the steam to the steam supply unit or the humidity adjustment unit, or to deliver the steam removed in the humidity adjustment unit or water condensed from the steam to the steam supply unit.

3. A gas recovery device comprising:

a humidity adjustment unit configured to adjust humidity of a supply gas containing carbon dioxide with respect to the supply gas;

a carbon dioxide separation unit including a carbon dioxide separator configured to separate the carbon dioxide from the supply gas whose humidity is adjusted;

a steam supply unit configured to supply steam to the carbon dioxide separation unit to reduce a partial pressure of the carbon dioxide in the carbon dioxide separation unit;

a carbon dioxide recovery unit configured to recover the carbon dioxide separated in the carbon dioxide separation unit while removing the steam;

a residual gas discharge unit configured to discharge residual gas in a state where the carbon dioxide is separated in the carbon dioxide separation unit while removing steam from the residual gas; and

a circulation path configured to deliver the steam removed in the carbon dioxide recovery unit or the residual gas discharge unit, or water condensed from the steam to the humidity adjustment unit or the steam supply unit, or to deliver the steam removed in the humidity adjustment unit or water condensed from the steam to the steam supply unit.

4. A gas recovery device comprising:

a carbon dioxide separation unit including a carbon dioxide separator configured to separate carbon dioxide from a supply gas;

a steam supply unit configured to supply steam to the carbon dioxide separation unit to reduce a partial pressure of the carbon dioxide in the carbon dioxide separation unit;

a carbon dioxide recovery unit configured to recover the carbon dioxide separated in the carbon dioxide separation unit while removing the steam; and

a circulation path configured to deliver the steam removed upstream or downstream of the carbon dioxide separation unit, or water condensed from the steam to an upstream side of the carbon dioxide separation unit, wherein the steam supply unit adjusts a state of the steam so that a pressure of the steam is equal to or higher than a saturated water vapor pressure at a temperature of the carbon dioxide separator in at least a part of the inside of the carbon dioxide separation unit.

5. The gas recovery device according to claim 2 or 3, wherein
the humidity adjustment unit includes the steam supply unit.

6. The gas recovery device according to any one of claims 1 to 4, wherein
the circulation path includes a membrane configured to preferentially allow the steam to pass over the carbon dioxide.

7. The gas recovery device according to any one of claims 1 to 4, wherein
the circulation path includes a water storage tank configured to store the water.

8. The gas recovery device according to any one of claims 1 to 4, wherein
the circulation path includes a mechanism configured to remove substances other than steam or water.

9. The gas recovery device according to any one of claims 1 to 4, further comprising
a carbon dioxide supply pipe for supplying the recovered carbon dioxide to a carbon dioxide reduction device.

10. The gas recovery device according to claim 2, further comprising
a removed water supply pipe for supplying steam or condensed water in the humidity adjustment unit to a water electrolysis device or a carbon dioxide reduction device.

11. The gas recovery device according to claim 3, further comprising
a removed water supply pipe for supplying steam or condensed water in the residual gas discharge unit to a water electrolysis device or a carbon dioxide reduction device.

12. The gas recovery device according to any one of claims 1 to 4, further comprising
a removed water supply pipe for supplying steam or condensed water in the carbon dioxide recovery unit to a water electrolysis device or a carbon dioxide reduction device.

13. The gas recovery device according to claim 2 or 3, wherein
a water supply path leading to a waterside is connected to the humidity adjustment unit.

14. The gas recovery device according to any one of claims 1 to 4, wherein
a water supply path leading to a waterside is connected to the steam supply unit.

15. The gas recovery device according to any one of claims 1 to 4, wherein
the supply gas is atmospheric gas.

16. The gas recovery device according to any one of claims 1 to 4, wherein
the carbon dioxide separator sorbs the carbon dioxide and releases the carbon dioxide under predetermined conditions.

17. The gas recovery device according to any one of claims 1 to 4, wherein
the steam supply unit supplies the steam to the carbon dioxide separation unit after supply of the supply gas is stopped.

18. The gas recovery device according to any one of claims 1 to 4, wherein
the carbon dioxide recovery unit supplies carbon dioxide to the carbon dioxide separation unit before the steam is supplied from the steam supply unit to the carbon dioxide separation unit or together with steam supply.

19. The gas recovery device according to any one of claims 1 to 4, wherein
one end of the carbon dioxide recovery unit is connected to the steam supply unit via a valve.

20. The gas recovery device according to claim 2 or 3, wherein
one end of the humidity adjustment unit and one end of the steam supply unit are connected via a valve and are connected to the carbon dioxide separation unit through a common pipe.

21. The gas recovery device according to any one of claims 1 to 4, further comprising
a retained gas recovery unit configured to be connected by branching from a connection pipe between the carbon dioxide separation unit and the carbon dioxide recovery unit or between the carbon dioxide separation unit and the humidity adjustment unit, and configured to recover retained gas retained in the carbon dioxide separation unit.

22. The gas recovery device according to any one of claims 1 to 4, wherein
the carbon dioxide separator is a carbon dioxide separation membrane configured to selectively permeate the carbon dioxide from the supply gas.

23. The gas recovery device according to any one of claims 1 to 4, further comprising
a carbon dioxide separation device or a carbon dioxide concentration device provided downstream of the carbon dioxide recovery unit.

24. The gas recovery device according to claim 2 or 3, further comprising
a carbon dioxide separation device or a carbon dioxide concentration device provided upstream of the humidity adjustment unit.

25. The gas recovery device according to claim 3, further comprising
a carbon dioxide separation device or a carbon dioxide concentration device provided downstream of the residual gas discharge unit.

26. The gas recovery device according to any one of claims 1 to 4, wherein the carbon dioxide recovery unit condenses and removes the steam using a refrigerant at 20°C or lower.

27. The gas recovery device according to any one of claims 1 to 4, wherein the carbon dioxide recovery unit condenses and removes the steam by using a temperature decrease accompanying gasification of a liquefied gas or pressure reduction of a high-pressure gas.

28. The gas recovery device according to claim 27, wherein the liquefied gas or the high-pressure gas is natural gas, city gas, propane gas, or water vapor.

29. A gas recovery method comprising:

a supply step of supplying a supply gas containing carbon dioxide to a carbon dioxide separator;
a separation step of supplying steam to the carbon dioxide separator to reduce a partial pressure of the carbon dioxide and separating the carbon dioxide from the supply gas; and
a recovery step of recovering the carbon dioxide separated by the carbon dioxide separator while removing the steam,
wherein at least one of the steam removed in the recovery step or water condensed from the steam, or the steam removed from residual gas from which the carbon dioxide is separated in the separation step or water condensed from the steam, is reused in at least one of the supply step and the separation step.

30. The gas recovery method according to claim 29, wherein

in the supply step, humidity of the supply gas is adjusted and the supply gas is supplied to the carbon dioxide separator, and
the steam removed in the supply step or water condensed from the steam is reused in the separation step.

31. Recovery method (absorbent or separation membrane)
A gas recovery method comprising:

a supply step of supplying a supply gas containing carbon dioxide to a carbon dioxide separator after adjusting humidity of the supply gas;
a separation step of supplying steam to the carbon dioxide separator to reduce a partial pressure of the carbon dioxide and separating the carbon dioxide from the supply gas; and
a recovery step of recovering the carbon dioxide separated by the carbon dioxide separator while removing the steam,
wherein in the supply step, the separated steam or water condensed from the steam is reused in the separation step.

Fig.1

Fig.2

Fig.3

EP 4 714 526 A1

43

Fig.4

Fig.5

EP 4 714 526 A1

Fig.6

EP 4 714 526 A1

Fig.7

201

EP 4 714 526 A1

47

Fig.8

SUPPLY WATER

P23

23

220

DRAINAGE        P64

62

RESIDUAL GAS

SUPPLY WATER

P43

42

210

DRAINAGE        P55

53

Fig.9

Fig.10

Fig.11

Fig.12

501

EP 4 714 526 A1

52

Fig.13

Fig.14A                                                                 <u>601a</u>

SUPPLY GAS → | <u>610</u> | — P21 — | <u>2</u> | — P25 — V1 — T1 — V2 — P42 — | <u>4</u> |

Fig.14B                                                                    601b

SUPPLY
GAS →
P21

| 2 | P25

T1

P42

| 4 |

V1   V2

| 3 |

V5

P59

RESIDUAL
GAS ←
P63

| 6 |

V4   V5

T3

| 5 |   | 610 |

T2

P56

| 7 |

8 ⟋ PROCESSING
DEVICE

Fig.14C                                                        <u>601c</u>

701a

Fig.15A

SUPPLY
GAS → 710 —P21— 2 P25 P42 40

30

RESIDUAL
GAS ← 6 P61 P51 50
P63

↕

8 ⌇ PROCESSING
DEVICE

Fig.15B                                    701b

SUPPLY
GAS
→                    2      P25        P42        40
        P21

                            30

RESIDUAL
GAS
←                    6      P61    P51        50    P56    710
        P63

8                    PROCESSING
                       DEVICE

Fig.15C

701c

SUPPLY
GAS

P21

2

P25

P42

40

30

RESIDUAL
GAS

710

P63

6

P61

P51

50

P56

8

PROCESSING
DEVICE

Fig.16

## INTERNATIONAL SEARCH REPORT

| International application No. |
| --- |
| **PCT/JP2024/017912** |

**A. CLASSIFICATION OF SUBJECT MATTER**

*B01D 53/04*(2006.01)i; *B01D 53/22*(2006.01)i
FI:    B01D53/04; B01D53/22

According to International Patent Classification (IPC) or to both national classification and IPC

**B. FIELDS SEARCHED**

Minimum documentation searched (classification system followed by classification symbols)

B01D53/02-53/12; B01D53/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2014-083495 A (HITACHI, LTD.) 12 May 2014 (2014-05-12)<br>fig. 1, description of explanations thereof | 1-31 |
| Y | JP 2013-147386 A (HITACHI, LTD.) 01 August 2013 (2013-08-01)<br>fig. 1-4, description of explanations thereof | 1-31 |
| Y | JP 63-294923 A (UNITED TECHNOLOGIES CORPORATION) 01 December 1988<br>(1988-12-01)<br>fig. 1, mention of the explanation point | 1-31 |
| Y | JP 2023-000697 A (RESEARCH INSTITUTE OF INNOVATIVE TECHNOLOGY FOR THE<br>EARTH) 04 January 2023 (2023-01-04)<br>paragraph [0013] | 1-31 |
| Y | JP 2020-069424 A (KAWASAKI JUKOGYO KABUSHIKI KAISHA) 07 May 2020<br>(2020-05-07)<br>paragraph [0036] | 1-31 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 July 2024** | **30 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/017912**

| Patent document cited in search report | | | Publication date (day/month/year) | Patent family member(s) | | | Publication date (day/month/year) |
|---|---|---|---|---|---|---|---|
| JP | 2014-083495 | A | 12 May 2014 | EP | 2724765 | A2 | |
| | | | | fig. 1, mention of the explanation point | | | |
| JP | 2013-147386 | A | 01 August 2013 | US | 2015/0013543 | A1 | |
| | | | | fig. 1-4, mention of the explanation point | | | |
| JP | 63-294923 | A | 01 December 1988 | US | 4822383 | A | |
| | | | | fig. 1, mention of the explanation point | | | |
| JP | 2023-000697 | A | 04 January 2023 | (Family: none) | | | |
| JP | 2020-069424 | A | 07 May 2020 | US | 2021/0187438 | A1 | |
| | | | | paragraph [0040] | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022147624 A

- JP 2021171744 A